(19) Europäisches Patentamt
European Patent Office
Office européen des brevets

(11) Veröffentlichungsnummer: 0 364 890 A2

# (12) EUROPÄISCHE PATENTANMELDUNG

(21) Anmeldenummer: 89119035.7

(51) Int. Cl.5: G03G 5/06

(22) Anmeldetag: 13.10.89

(30) Priorität: 19.10.88 DE 3835520

(43) Veröffentlichungstag der Anmeldung: 25.04.90 Patentblatt 90/17

(84) Benannte Vertragsstaaten: BE DE ES FR GB IT NL SE

(71) Anmelder: BASF Aktiengesellschaft
Carl-Bosch-Strasse 38
D-6700 Ludwigshafen(DE)

(72) Erfinder: Leyrer, Reinhold J., Dr.
Menzelstrasse 4
D-6700 Ludwigshafen(DE)
Erfinder: Neumann, Peter, Dr.
Poststrasse 28
D-6800 Mannheim 31(DE)
Erfinder: Dust, Matthias, Dr.
Teichgasse 7
D-6700 Ludwigshafen(DE)

## (54) Panchromatisches elektrophotographisches Aufzeichnungselement.

(57) Es wird ein neues panchromatisches elektrophotographisches Aufzeichnungselement beschrieben, welches einen elektrisch leitenden Träger und mindestens eine photoleitende Schicht aufweist. Hierbei enthält die photoleitende Schicht mindestens ein Bindemittel, mehrere Ladungsträger erzeugende Verbindungen oder Sensibilisatoren, mindestens eine Ladungsträger transportierende Verbindung (Photoleiter) sowie ggf. Zusatzstoffe. Die Sensibilisatoren selbst sind Viktoriablau FB (C.I. 44045), Kristallviolett FN (C.I. 42555), Rhodamin FB (C.I. 45170), Astrazonorange R (C.I. 48040) und/oder Astrazonorange G (C.I. 48035), welche gemeinsam mit Naphtholactamfarbstoffen und/oder mit Isoindoleninfarbstoffen verwendet werden. Hierbei weisen die Naphtholactamfarbstoffe im Molekül mindestens ein Chromophor der allgemeinen Grundstruktur auf,

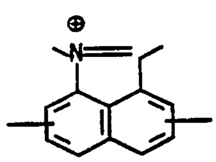

und die Isoindoleninfarbstoffe weisen im Molekül mindestens ein Chromophor der allgemeinen Grundstruktur

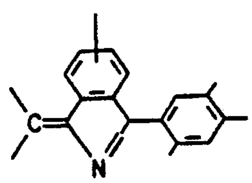

auf.

EP 0 364 890 A2

## Panchromatisches elektrophotographisches Aufzeichnungselement

Die Erfindung richtet sich auf ein neues panchromatisches elektrophotographisches Aufzeichnungselement mit einem elektrisch leitenden Träger und mit mindestes einer photoleitenden Schicht, welche mindestens ein Bindemittel, mehrere Ladungsträger erzeugende Verbindungen oder Sensibilisatoren, mindestens eine Ladungsträger transportierende Verbindung (Photoleiter) und ggf. Zusatzstoffe enthält.

Außerdem betrifft die Erfindung neue elektrophotographische Abbildungsverfahren, welche die visuelle Kontrolle des Belichtungsergebnisses in einfacher Weise ermöglichen.

Elektrophotographische Aufzeichnungselemente, welche einen elektrisch leitenden Träger (A) und mindestens eine photoleitende Schicht (B) aufweisen, sind beispielsweise aus der EP-A-0 131 215, der EP-B-0 031 481 der EP-A-0 150 419, der EP-A-0 162 216, der EP-A-0 156 308, der EP-A-0 131 292, der EP-A-0 152 889 oder der EP-A-0 198 488 bekannt. Diese Aufzeichnungselemente dienen der Herstellung von Offsetdruckplatten oder von gedruckten Schaltungen (Leiterplatten) oder sie werden für die Photokopiertechnik verwendet.

Hierzu wird die photoleitende Schicht (B) eines elektrophotographischen Aufzeichnungselements z.B. mittels einer Coronaentladung elektrisch positiv oder negativ aufgeladen. Hiernach wird die elektrisch aufgeladene photoleitende Schicht (B) mit aktinischem Licht bildmäßig belichtet, wobei je nach verwendetem Sensibilisator ($b_2$) ultraviolettes, sichtbares oder infrarotes Licht in Betracht kommt. Durch die Belichtung wird die photoleitende Schicht (B) in ihren belichteten Bereichen elektrisch leitend, so daß die zuvor erzeugte elektrostatische Aufladung in diesen Bereichen über den elektrisch leitenden Träger (A) abfließen kann. Hierdurch wird ein latentes elektrostatisches Bild auf dem Aufzeichnungselement erzeugt, welches mit Hilfe geeigneter flüssiger oder fester Toner zu einem sichtbaren Bild entwickelt werden kann. Diese Technik der bildmäßigen Informationsaufzeichnung wird allgemein als Xerographie bezeichnet, wobei der dem Aufzeichnungsverfahren zugrundeliegende physikalische Prozeß auch unter dem Namen "Carlson-Prozeß" bekannt ist.

Nach dem Tonen des elektrostatischen Bildes kann ein solches Aufzeichnungselement in unterschiedlicher Weise weiterverarbeitet werden. Beispielsweise kann das Tonerbild von dem Aufzeichnungselement auf einen anderen Träger, wie etwa Papier, übertragen und dort fixiert werden, wodurch man eine positive Photokopie der ursprünglichen Bildvorlage erhält. Dieser Vorgang kann je nach Lebensdauer des Aufzeichnungsmaterials mehr oder weniger oft durchgeführt werden. Für die Herstellung von Offsetdruckplatten wird dagegen das Tonerbild auf der photoleitenden Schicht (B) selbst durch Erhitzen fixiert. Hiernach werden die unbelichteten und daher tonerfreien Bereiche der photoleitenden Schicht (B) mit Hilfe geeigneter Entwicklerlösungsmittel weggewaschen oder entschichtet. Eine so hergestellte Offsetdruckplatte nimmt, ebenso wie eine in konventioneller Weise erzeugte, im allgemeinen an ihren hydrophoben Tonerbildbereichen ölige Druckfarben und an ihren durch die Entschichtung freigelegten hydrophilen Bereichen Wasser an, so daß sie für offset-typische Druckverfahren geeignet ist. Für die Herstellung von Photoresistmustern wendet man Verfahren an, die dem Herstellverfahren der Offsetdruckplatten entsprechen.

Wesentliche Parameter, welche bekanntermaßen die Wiedergabequalität elektrophotographischer Aufzeichnungselemente und ihrer photoleitenden Schichten (B) in der Hauptsache bestimmen, sind eine möglichst niedrige Dunkelleitfähigkeit, eine hohe elektrostatische Aufladbarkeit und eine hohe Empfindlichkeit gegenüber aktinischem Licht, verbunden mit guten elektrokinetischen Eigenschaften, worunter man im allgemeinen einen sehr raschen Spannungsabfall bei der Belichtung auf oder fast auf das ursprüngliche elektrostatische Potential vor Aufladung versteht. Dieser Spannungsabfall wird auch als photoinduzierter Spannungsabfall oder kurz als Photoabfall bezeichnet. All diese Parameter legen zusammen von vornherein fest, ob ein elektrophotographisches Aufzeichnungselement kontrastreiche, auch in den feinsten Bildelementen vorlagengetreue Tonerbilder in kürzest möglicher Zeit liefert.

Bei der gegenseitigen Abstimmung der wesentlichen Parameter aufeinander und auf die für die bildmäßige Belichtung der photoleitenden Schicht (B) verwendete Quelle des aktinischen Lichts spielen die Ladungsträger erzeugenden Verbindungen oder Sensibilisatoren ($b_2$) eine ganz entscheidende Rolle. Die von jeher schon große Bedeutung der Sensibilisatoren ($b_2$) ist wegen der Weiterentwicklung herkömmlicher Belichtungsquellen und der Neuentwicklung von Laserlichtquellen noch erhöht worden. Die Fortschritte auf diesem Gebiet haben inzwischen zu Belichtungsgeräten geführt, welche die rasche und exakte bildmäßige Belichtung elektrophotographischer Aufzeichnungselemente mit Hilfe computergesteuerter Laser ermöglicht. Hierfür werden aus Gründen der Wirtschaftlichkeit und der einfachen Herstellweise oftmals Halbleiterlaser wie etwa GaAlAs-Halbleiterlaser verwendet, welche Infrarotlicht emittieren, oder AlGaInP-Halbleiterlaser, welche sichtbares Licht aussenden. Damit die Vorteile dieser zukunftsträchtigen Belichtungsmethode in vollem Umfang ausgeschöpft werden können, ist allerdings bei den elektrophotographischen Aufzeichnungselementen ein Eigenschaftsprofil vorauszusetzen, das die herkömmlichen Aufzeichnungselemente gar nicht oder nicht in der notwendigen Ausprägung bieten. Insbesondere muß - wegen der kurzen Laserpulse und der vergleichsweise niedrigen Photonenenergie im Rot- und im Infrarotbereich - die Absorption der Lichtenergie durch die photoleitende Schicht (B) und der hierdurch hervorgerufene Photoabfall besonders rasch, d.h. im Nanosekundenbereich, erfolgen, wobei auch in diesem Zeitintervall das Gesetz

I • t = konstant

(I = Lichtintensität; t = Zeit)

Gültigkeit haben muß.

Diese strengen Anforderungen werden indes durch die bekannten elektrophotographischen Aufzeichnungselemente, welche als Sensibilisatoren einen oder mehrere Farbstoffe aus den Klassen der Triarylmethane, Xanthene, Cyanine, Azofarbstoffe, Phthalocyanine, Isoindoline oder der Perylentetracarbonsäurederivate enthalten, bislang nicht oder nicht in dem gewünschten Umfang erfüllt. Demzufolge müssen die bekannten elektrophotographischen Aufzeichnungselemente häufig in der herkömmlichen Art und Weise belichtet werden, um eine gute Wiedergabequalität zu erzielen, wobei man sich indes der besonderen Vorteile der Laserbelichtungsmethode, insbesondere derjenigen mit Halbleiterlasern begibt. Demnach eignen sich die bekannten elektrophotographischen Aufzeichnungselemente nicht oder nur in sehr eingeschränktem Umfang für die Herstellung wirtschaftlicher, langlebiger, schnell ansprechender und mit Laserbelichtung arbeitender Photokopiergeräte sowie für die Herstellung hochwertiger, vorlagengetreuer und auflagestabiler Offsetdruckplatten und hochwertiger, vorlagengetreuer und ätzmittelresistenter Photoresistmuster nach der Laserbelichtungsmethode. Diese Nachteile machen sich selbstverständlich auch an den Produkten bemerkbar, welche man letztlich mit Hilfe der Laserbelichtung aus den bekannten elektrophotographischen Aufzeichnungselementen erzeugen will: So sind die betreffenden Photokopien oder die Druckerzeugnisse nicht nur von minderer Qualität, sondern auch nur in vergleichsweise geringer Auflage erhältlich, und elektrische Schaltkreise, welche man unter Verwendung der bekannten elektrophotographischen Photoresists hergestellt hat, weisen oftmals soviele Wiedergabefehler auf, daß sie den Anforderungen der Praxis nicht mehr genügen.

Darüber hinaus ermöglichen die bislang bekannten elektrophotographischen Aufzeichnungselemente und die bislang bekannten elektrophotographischen Abbildungsverfahren nicht die visuelle Kontrolle des betonerten Ladungsbildes vor seiner Fixierung oder seiner Übertragung auf eine andere Oberfläche, was von Nachteil ist.

Aufgabe der vorliegenden Erfindung ist es, ein neues elektrophotographisches Aufzeichnungselement zu finden, welches die Nachteile der bekannten elektrophotographischen Aufzeichnungselemente nicht mehr länger aufweist. Vor allem soll das neue elektrophotographische Aufzeichnungselement nicht nur bei der bildmäßigen Belichtung mit ultraviolettem oder sichtbarem Licht ein vorzügliches reprographisches Eigenschaftsprofil aufweisen, sondern es soll auch der bildmäßigen Belichtung mit rotem oder infrarotem Licht, insbesondere mit rotem oder infrarotem Laserlicht, zugänglich sein und hervorragende Photokopien, Offsetdruckplatten und Photoresistmuster liefern.

Darüber hinaus soll das neue elektrophotographische Aufzeichnungselement panchromatisch sensibilisiert sein und die visuelle Kontrolle des betonerten Ladungsbildes vor seiner Fixierung oder seiner Übertragung auf eine andere Oberfläche ermöglichen.

Außerdem ist es die Aufgabe der vorliegenden Erfindung, neue elektrophotographische Abbildungsverfahren zu finden, bei denen das betonerte Ladungsbild vor seiner Fixierung oder seiner Übertragung auf eine andere Oberfläche in einfacher Weise visuell kontrolliert werden kann.

In überraschender Weise werden diese Aufgaben durch ein elektrophotographisches Aufzeichnungselement der eingangs definierten Art gelöst, welches neben einem oder mehreren speziell ausgewählten Sensibilisatoren aus der Gruppe der Triarylmethan-, Xanthen- und Cyaninfarbstoffe noch mindestens einen weiteren Sensibilisator aus der Gruppe der Naphtholactam- und Isoindoleninfarbstoffe enthält.

Der Gegenstand der Erfindung ist demnach ein panchromatisches elektrophotographisches Aufzeichnungselement mit

(A) einem elektrisch leitenden Träger und mit

(B) mindestens einer photoleitenden Schicht, welche

($b_1$) mindestens ein Bindemittel,

($b_2$) mehrere Ladungsträger erzeugende Verbindungen oder Sensibilisatoren aus der Gruppe der Triarylmethan-, Xanthen- und Cyaninfarbstoffe,

($b_3$) mindestens eine Ladungsträger transportierende Verbindung (Photoleiter) und ggf.

($b_4$) Zusatzstoffe enthält, welches dadurch gekennzeichnet ist, daß man hierin als Ladungsträger erzeugende Verbindungen oder Sensibilisatoren ($b_2$) Viktoriablau FB (C.I. 44045), Kristallviolett FN (C.I. 42555), Rhodamin FB (C.I. 45170), Astrazonorange R (C.I. 48040) und/oder Astrazonorange G (C.I. 48035)

gemeinsam mit Naphtholactamfarbstoffen, welche mindestens ein Chromophor der allgemeinen Grundstruktur

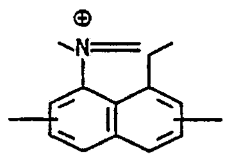

enthalten, und/oder mit Isoindoleninfarbstoffen, welche mindestens ein Chromophor der allgemeinen Grundstruktur

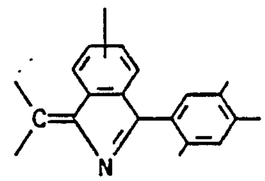

enthalten, verwendet.

Außerdem wurden neue und besonders vorteilhafte elektrophotographische Abbildungsverfahren gefunden, die es ermöglichen, betonerte Ladungsbilder vor der Fixierung oder der Übertragung auf eine andere Oberfläche visuell zu kontrollieren. Diese erfindungsgemaßen Abbildungsverfahren werden nachstehend im einzelnen beschrieben.

Wesentlicher Bestandteil des erfindungsgemäßen panchromatischen elektrophotographischen Aufzeichnungselements ist die neue photoleitende Schicht (B).

Die neue photoleitende Schicht (B) enthält als die wesentlichen Bestandteile ein oder mehrere Bindemittel ($b_1$), mehrere Ladungsträger erzeugende Verbindungen oder Sensibilisatoren ($b_2$) und eine oder mehrere Ladungsträger transportierende Verbindung(en) oder Photoleiter ($b_3$) oder sie besteht aus diesen wesentlichen Bestandteilen.

Hierbei kann die neue photoleitende Schicht (B) diese wesentliche Bestandteile gemeinsam nebeneinander enthalten.

Indessen können diese wesentlichen Bestandteile getrennt voneinander in separaten Einzelschichten vorliegen, d.h., die neue photoleitende Schicht (B) kann auch eine Doppel- oder Mehrfachschicht sein. Hierbei können beispielsweise die Sensibilisatoren ($b_2$) in mindestens einer separaten Sensibilisatorschicht ($b_2$) neben einer Schicht aus Bindemitteln ($b_1$) und Photoleitern ($b_3$) sowie ggf. vorhandenen Zusatzstoffen ($b_4$) vorliegen. Desweiteren können auch die Photoleiter ($b_3$) in einer separaten Photoleiterschicht ($b_3$) enthalten sein, wogegen die Sensibilisatoren ($b_2$) zusammen mit den Bindemitteln ($b_1$) und ggf. mit den Zusatzstoffen ($b_4$) eine weitere separate Einzelschicht bilden. Im folgenden werden diese Doppel- oder Mehrfachschichten ihrer Funktion gemäß kurz als "neue photoleitende Mehrfachschichten (B)" bezeichnet.

Welche neue photoleitende Schicht (B) man für den Aufbau der erfindungsgemäßen Aufzeichnungselemente auswählt, richtet sich in erster Linie nach dem Verwendungszweck der Aufzeichnungselemente.

Die erfindungswesentlichen Bestandteile der neuen photoleitenden Schicht (B) sind die Sensibilisatoren ($b_2$).

Hierbei handelt es sich zum einen um die speziell ausgewählten Farbstoffe Viktoriablau FB (C.I. 44045), Kristallviolett FN (C.I. 42555), Rhodamin FB (C.I. 45170), Astrazonorange R (C.I. 48040) und/oder Astrazonorange G (C.I. 48035), von denen jeweils einer oder auch zwei, drei, vier oder alle fünf gemeinsam als Sensibilisatoren ($b_2$) verwendet werden können.

Zum anderen handelt es sich um Naphtholactamfarbstoffe, welche mindestens ein Chromophor der allgemeinen Grundstruktur

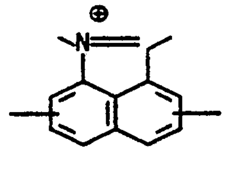

enthalten, und um Isoindoleninfarbstoffe, welche mindestens ein Chromophor der allgemeinen Grundstruktur

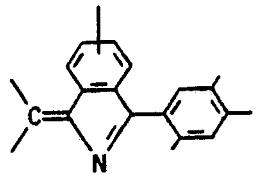

enthalten. Diese Farbstoffe werden jeweils einzeln oder als Gemisch zusammen mit den vorstehend genannten Sensibilisatoren ($b_2$) verwendet.

Vorteilhaft sind die Naphtholactamfarbstoffe der allgemeinen Formel I

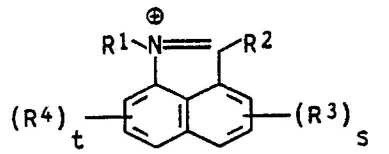 $(T)_n$ I

worin die Indices und die Variablen die folgende Bedeutung haben:

$R^1$ $C_1$-$C_{22}$-Alkyl, $C_5$-$C_7$-Cycloalkyl, ω-Aryl-$C_1$-$C_6$-Alkyl, Aryl und $C_3$-$C_{15}$-Alkylen;

$R^1$ mit Halogenatomen, mit Hydroxy-, Amino-, Thiolo-, Cyan- und/oder Oxogruppen, mit Alkyl-, Cycloalkyl-, Aryl- und/oder Arylalkyloxiresten, mit Alkyl-, Cycloalkyl-, Aryl- und/oder Arylalkylaminoresten, mit Alkan-, Cycloalkan-, Arylalkan- und/oder Aromatcarbonyloxiresten, mit Alkan-, Cycloalkan-, Arylalkan- und/oder Aromatcarbonylaminoresten, mit Alkyliden-, Cycloalkyliden- und/oder Arylalkylideniminoresten und/oder mit Carbon-, Phosphon- und/oder Sulfonsäuregruppen substituiertes $C_1$-$C_{22}$-Alkyl, $C_6$-$C_7$-Cycloalkyl, ω-Aryl-$C_1$-$C_6$-Alkyl, Aryl und $C_3$-$C_{15}$-Alkylen;

$R^1$ Rest der allgemeinen Formel II,

$R^5\{O\text{-}(CH_2)_m\}_p$ II

worin $R^5$ ein Wasserstoffatom, $C_1$-$C_6$-Alkyl und $C_6$-$C_{10}$-Aryl bezeichnet und m gleich einer ganzen Zahl von 2 bis 4 und unabhängig hiervon p gleich einer ganzen Zahl von 1 bis 10 ist;

$R^2$ Rest der allgemeinen Formel III,

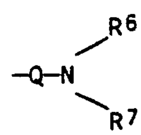 III

worin $R^6$ und $R^7$ voneinander verschieden oder gleich sind und Wasserstoffatome, Reste $R^1$ oder Alkan-1-yl-ω-carbonsäurealkylester bezeichnen und worin Q einen 1,4-Phenylen-, einen 2-Alkyl-1,4-phenylen- oder einen 1,4-Naphthylenrest bezeichnet;

$R^2$ Rest der allgemeinen Formel IV,

$-Q-R^8$ IV

worin $R^8$ einen über ein Stickstoffringatom mit Q verbundenen, substituierten oder unsubstituierten, monocyclischen oder anellierten Heterocyclus aus der Klasse der Azole, der Azoline, der Azolidine, der partiell oder vollständig hydrierten Azole und der partiell oder vollständig hydrierten Azepine bezeichnet und worin Q die bei der allgemeinen Formel III angegebene Bedeutung hat;

$R^2$ ein über ein Kohlenstoffringatom mit der Naphtholactam-Grundstruktur verbundener, substituierter oder unsubstituierter, monocyclischer oder anellierter Heterocyclus aus der Klasse der Azole, der Azoline, der partiell hydrierten Azine und der Azine; und

$R^2$ Rest der allgemeinen Formel V,

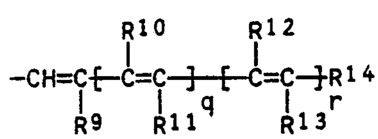 V

worin die Indices und die Variablen die folgende Bedeutung haben:
q 0 oder 1;
r unabhängig von q 0,1 oder 2;
$R^9$ und $R^{11}$ jeweils ein Wasserstoffatom oder für den Fall, daß q für 1 steht, zusammen eine unsubstituierte oder eine durch $C_1$-$C_4$-Alkyl substituierte $C_2$-$C_3$-Alkandiylkette oder eine oder zwei Carbonylgruppe(n);
$R^{10}$, $R^{12}$ und $R^{13}$ Wasserstoffatom, Halogenatom, Cyan, Nitro, Hydroxy, Rest $R^1$, $C_1$-$C_6$-Alkoxi, $C_5$-$C_7$-Cycloalkoxi, $C_6$-$C_{10}$-Aryloxi, ω-Phenyl-$C_1$-$C_6$-alkyloxi, $C_1$-$C_6$-Alkoxi-, $C_5$-$C_7$-Cycloalkoxi-, $C_6$-$C_{10}$-Aryloxi- und ω-phenyl-$C_1$-$C_6$-alkoxicarbonyl, $C_1$-$C_6$-Alkylamino-, $C_5$-$C_7$-Cycloalkylamino-, $C_6$-$C_{10}$-Arylamino- und ω-Phenyl-$C_1$-$C_6$-alkylaminocarbonyl und substituierter oder unsubstituierter monocyclischer oder anellierter Heterocyclus aus der Klasse der Azole, der Thiole, der Azoline, der Azine und der partiell oder vollständig hydrierten Azine, wobei $R^{10}$, $R^{12}$ und $R^{13}$ voneinander verschieden oder gleich sein können;
$R^{14}$ Rest $R^2$ der allgemeinen Formel III;
$R^{14}$ Rest $R^2$ der allgemeinen Formel IV;
$R^{14}$ ein über ein Kohlenstoffringatom mit dem Rest der allgemeinen Formel V verbundener, substituierter oder unsubstituierter, monocyclischer oder anellierter Heterocyclus aus der Klasse der Azole, der Thiole, der Azoline, der Azolidine, der Azine der partiell oder vollständig hydrierten Azine und der Thiine; und
$R^{14}$ Rest der allgemeinen Formel VI,

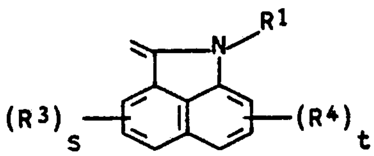

VI

worin $R^1$ die vorstehend angegebene Bedeutung hat und worin $R^3$, $R^4$, s und t die nachstehend angegebene Bedeutung haben;
$R^2$ Rest der allgemeinen Formel VII,

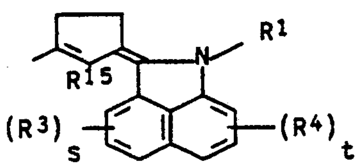

VII,

worin $R^1$ die vorstehend angegebene Bedeutung hat, $R^3$, $R^4$, s und t die nachstehend angegebene Bedeutung haben und worin $R^{15}$ den Rest einer CH-aciden Verbindung bezeichnet;
s 1, 2 oder 3;
t unabhängig von s 1, 2 oder 3;
$R^3$ und $R^4$ Rest $R^{10}$, $R^{12}$ und $R^{13}$, Rest $R^1$, Carbon-, Sulfon- und Phosphonsäuregruppe, $C_1$-$C_6$-Alkyl-, $C_5$-$C_{10}$-Cycloalkyl-, $C_6$-$C_{10}$-Aryl- und ω-Phenyl-$C_1$-$C_6$-alkylthio, -alkyloxisulfonyl, -alkylsulfonyl und -alkyloxicarbonylaminyl, N,N-Dialkyl-, N,N-Diaryl-, N-Alkyl-N-aryl-, N,N-Di-(ω-arylalkyl)-, N-Alkyl-N-(ω-arylalkyl)-, N-Aryl-N-(ω-arylalkyl)-, N,N-Dicycloalkyl-, N-Cycloalkyl-N-alkyl-, N-Cycloalkyl-N-aryl-und N-Cycloalkyl-N-(ω-arylalkyl)amino, -aminosulfonyl und -aminocarbonyl sowie für die Fälle, daß
s = 2 oder 3,
t = 2 oder 3 oder
s und t = 1, 2 oder 3
ein Kohlenstoff-, Stickstoff-, Sauerstoff- und Schwefelatom, welches Bestandteil des Gerüsts von einem oder von mehreren an die Naphth-1,8-ylen-Gruppe anellierten Ringen ist,
wobei $R^3$ und $R^4$ voneinander verschieden oder gleich sein können;
T Anion;
und
n 0 oder 1/3, 1/2, 2/3, 1, 2 oder 3.

Beispiele geeigneter Reste $R^1$ in der allgemeinen Formel I sind Methyl, Ethyl, Propyl, Butyl, Pentyl, iso-Propyl, iso-Butyl, sec.-Butyl, tert.-Butyl, Hexyl, Heptyl, Octyl, Nonadecyl, Eicosanyl, Heneicosanyl, Docosanyl, Cyclopentyl, Cyclohexyl, 2-, 3- und 4-Methylcyclohexyl, Cyclopentyl, 2,3-, 2,4-, 2,5- und 3,4-Dimethylcyclopentyl, Phenylmethyl, 2-Phenyl-eth-1-yl, 2-(1′-Naphthyl)-eth-1-yl, 3-Phenyl-prop-1-yl, 3-(4′-Methylphen-1′-yl)-prop-1-yl, 4-Phenyl-but-1-yl, 5-Phenyl-pent-1-yl, 6-Phenyl-hex-1-yl, Phenyl, 4-Methylphen-1-yl,

Naphthalin-1-yl, Anthracen-1-yl, Phenanthren-1-yl, Prop-2-en-1-yl, But-3-en-1-yl, Pent-4-en-1-yl, Hex-5-en-1-yl, Hept-6-en-1-yl, Oct-7-en-1-yl, Non-8-en-1-yl, Dec-9-en-1-yl, Undec-10-en-1-yl, Dodec-11-en-1-yl, Pentadec-14-en-1-yl, Trifluormethyl, 2,2,2-Trifluoreth-1-yl, Perfluorprop-1-yl, 2-Chloreth-1-yl, 3-Chlorbut-1-yl, 4-Chlorcyclohex-1-yl, 2- und 4-Chlorphen-1-yl, 4-Trifluormethylphen-1-yl, 2,4-Dichlorphen-1-yl, 4′-Chlorphenylmethyl, 2-(4′-Chlorphen-1′-yl)-eth-1-yl, 4-Chlor-hex-5-en-1-yl, 2-Hydroxyeth-1-yl, 2-Hydroxyprop-1-yl, 3-Hydroxyprop-1-yl, 2-Hydroxybut-1-yl, 2,3-Dihydroxy-prop-1-yl, 8-Hydroxyoct-1-yl, 9-Hydroxydec-1-yl, 2-Hydroxycyclopent-1-yl, 4-Hydroxycyclohex-1-yl, 4′-Hydroxyphenylmethyl, 2-(4′-Hydroxyphen-1′-yl)-eth-1-yl, 3-(4′-Hydroxyphen1′-yl)-eth-1-yl, 4-Hydroxyphen-1-yl, 2,4-Dihydroxyphen-1-yl, 4-Hydroxy-naphth-1-yl, 3-Hydroxypent-5-en-1-yl, 2-Aminoeth-1-yl, 3-Aminoprop-1-yl, 4-Aminobut-1-yl, 5-Aminopent-1-yl, 6-Aminohex-1-yl, 2-Aminocyclopent-1-yl, 4-Aminocyclohex-1-yl, 4-Aminophenylmethyl, 2-(4′-Aminophen-1′-yl)-eth-1-yl, 3-(4′-Aminophen-1′-yl)-prop-1-yl, 2-Aminophenyl, 4-Aminophenyl, 3-Aminohex-5-en-1-yl, 4-Thiolobut-1-yl, 4-Thiolocyclohex-1-yl, 2-(4′-Thiolophen-1′-yl)-eth-1-yl, 4-Thiolophen-1-yl, 5-Thiolodec-9-en-1-yl, Cyanmethyl, 2-Cyaneth-1-yl, 3-Cyanprop-1-yl, 4-Cyanbut-1-yl, 5-Cyanpent-1-yl, 6-Cyanhex-1-yl, 11-Cyanundec-1-yl, 12-Cyandodec-1-yl, 13-Cyantridec-1-yl, 17-Cyanheptadec-1-yl, 18-Cyanoctadec-1-yl, 4-Cyancyclohex-1-yl, 4-Cyanphenylmethyl, 2-(4′-Cyanphen-1′-yl)-eth-1-yl, 3-(4′-Cyanphen-1′-yl)-prop-1-yl, 4-Cyanphen-1-yl, 4-Chlor-2-cyan-phen-1-yl, 2,4-Dicyanphen-1-yl, 3,3-Dicyanprop-2-en-1-yl, 1-Oxo-eth-1-yl, 1-Oxoprop-1-yl, 2-Oxo-prop-1-yl, 2-Oxo-eth-1-yl, 3-Oxo-but-1-yl, 7-Oxo-dec-1-yl, 4,6-Dimethyl-3,5-dioxo-hex-1-yl, 2-Oxo-3-(4′-hydroxyphen-1′-yl)-prop-1-yl, 2-Oxo-3-(4′-trifluorphen1′-yl)-prop-1-yl, 2-Methoxieth-1-yl, Ethoximethyl, 2-Methoxiprop-1-yl, 4-Methoxibut-1-yl, 6-Methoxihex-1-yl, 7-Ethoxihept-1-yl, 2,4,7-Trimethoxidec-1-yl, 6-Ethyl-4-oxadec-1-yl, 20-Ethoxieicosan-1-yl, 2-Butoxieth-1-yl, 2-Benzyloxi-eth-1-yl, 3-Methoxicyclopentyl, 3,4-Dimethoxicyclopentyl, 4-Methoxicyclohexyl, Cyclohexyloximethyl, 2-Phenyloxi-eth-1-yl, 3-Phenyloxi-prop-1-yl, 10-Phenyloxi-dec-1-yl, (4′-Methoxi-phen-1′-yl)-methyl, 2-(4′-Methoxi-phen-1′-yl)-eth-1-yl, 3-(3′,4′,4′-Trimethoxiphen-1′-yl)-prop-1-yl, 2-[4′-(Phenyloxi)-phen-1′-yl]-eth-1-yl, 2- und 4-Methoxiphen-1-yl, 4-Ethoxiphen-1-yl, 2,4-Dimethoxi-phen-1-yl, 4-Nonyloxi-phen-1-yl, 4-Undecyloxi-phen-1-yl, 4-Dodecyloxi-phen-1-yl, 4-Hexadecyloxi-phen-1-yl, 4-Octadecyloxi-phen-1-yl, 3-Octadecyloxi-phen1-yl, 4-Eicosanyloxiphen-1-yl, 2,3,6,7-Tetramethoxinaphth-1-yl, 4-(4′-Methylphenyloxi)-phen-1-yl, 4[4′-(4″-Phenyloxi)-phen-1′-yl]-phen-1-yl, N,N-Dimethylaminomethyl, 3-Azapent-1-yl, 5-Amino-3-azapent-1-yl, 5-N,N-Dihexylamino-3-azapent-1-yl, 7-Azapentacosan-1-yl, 3,6-Diazaoct-1-yl, 4-N,N-Dioctylamino-but-1-yl, 6-N,N-Dioctadecylamino-hex-1-yl, 18-N,N-Dimethylamino-octadec-1-yl, 2-N-Phenylaminoeth-1-yl, 3-(4′-N,N-Dimethylaminophenylamino)-prop-1-yl, 4-N,N-Dimethylaminocyclohex-1-yl, 6-N-Benzylaminohex-1-yl, 4-N,N-Dimethylaminophen-1-yl, 4-N-Methyl-N-octadecylamino-phen-1-yl, 4-N-Phenylaminophen-1-yl, 4-N-Benzylaminophen-1-yl, 3-N,N-Dimethylaminohex-5-en-1-yl, Methancarbonyloximethyl, 2-(Methancarbonyloxi)-eth-1-yl, 2-(Ethancarbonyloxi)-eth-1-yl, 2-(Propancarbonyloxi)-eth-1-yl, 3-(Butancarbonbyloxi)-prop-1-yl, 6-(Cyclohexancarbonyloxi)-hex-1-yl, 4-(Methancarbonyloxi)-cyclohex-1-yl, 12-(Benzolcarbonyloxi)-dec-1-yl, 4-(Benzolcarbonyloxi)-benzyl, 2-[4′-(Methancarbonyloxi)-phen-1′-yl]-eth-1-yl, 3-[4′-(Propancarbonyloxi)-phen-1′-yl]-prop-1-yl, 4-(Methancarbonyloxi)-phen-1-yl, 4-(Ethancarbonyloxi)-naphth-1-yl, 4-(Heptadecancarbonyloxi)-phen-1-yl, 4-(Cyclohexancarbonyloxi)-phen-1-yl, 5-(Methancarbonyl-oxi)-oct-7-en-1-yl, Methancarbonylaminomethyl, 2-(Methancarbonylamino)-eth-1-yl, 3-(Butancarbonylamino)-prop-1-yl, 8-(Cyclohexancarbonylamino)-oct-1-yl, 2-(Benzolcarbonylamino)-eth-1-yl, 4-(Phenylmethancarbonylamino)-cyclohex-1-yl, 2-[4′-(Methancarbonylamino)-phen-1′-yl]-eth-1-yl, 4-(Methancarbonylamino)-phen-1-yl, 4-(Benzolcarbonylamino)-phen-1-yl, 4-(Heptadecancarbonylamino)-phen-1-yl, 4-Azahex-4-en-1-yl, 2-(Cyclohexylidenimino)-eth-1-yl, 2-(Benzyliden imino)-eth-1-yl, 4-(Cyclohexylidenimino)-cyclohex-1-yl, 4-(Benzylidenimino)-phen-1-yl, 2-[4′-(Benzylidenimino)-phen-1′-yl]-eth-1-yl, 2-Carboxy-eth-1-yl, 3-Carboxy-prop-1-yl, 4-Carboxy-hex-1-yl, 17-Carboxy-hepta-dec-1-yl, 5,6-Dicarboxy-hex-1-yl, 2-Carboxy-cyclopent-1-yl, 4-Carboxy-cyclohex-1-yl, 2-(4′-Carboxy-phen-1′-yl)-eth-1-yl, 3-(3′-Hydroxy-4′-carboxy-phen-1-yl)-prop-1-yl, 4-Carboxy-phen-1-yl, 3,4-Dicarboxy-phen-1-yl, 6,7-Dicarboxy-naphth-1-yl, 4-Carboxy-hex-5-en-1-yl, Eth-1-yl-2-sulfonsäure, Prop-1-yl-3-sulfonsäure, But-1-yl-4-sulfonsäure, Dodec-1-yl-12-sulfonsäure, Tetradec-1-yl-14-sulfonsäure, Hexadec-1-yl-16-sulfonsäure, Octadec-1-yl-13-sulfsonsäure, Cyclohex-1-yl-4-sulfonsäure, 8-(Phen-1′-yl-4′-sulfonsäure)-oct-1-yl, Phen-1-yl-4-sulfonsäure, Phen-1-yl-3,4-disulfonsäure, Naphth-1-yl-2-sulfonsäure, Naphth-1-y1-2,6-disulfonsäure, Naphth-1-yl-6,7-disulfonsäure, But-3-en-1-yl-2-sulfonsäure, Eth-1-yl-2-phosphonsäure, Cyclohex-1-yl-4-phosphonsäure, Phen-1-yl-4-phosphonsäure, 3-Oxa-5-hydroxypent-1-yl, 3,6-Dioxa-hept-1-yl, 3,6-Dioxa-oct-1-yl, 3,6-Dioxa-dec-1-yl, 3,6-Dioxa-dodec-1-yl, 3,6-Dioxa-6-phenyl-hex-1-yl, 3,6-Dioxa-7-phenyl-hept-1-yl, 3,6,9-Trioxa-dec-1-yl, 3,6,9-Trioxa-undec-1-yl, 3,6,9-Trioxa-tridec-1-yl, 3,6,9-Trioxa-10-phenyl-dec-1-yl, 8-Hydroxi-3,6-dioxa-oct-1-yl, 8-(Phenyloxi)-3,6-dioxa-oct-1-yl, 3,6,9,12,15-Pentaoxa-hexadec-1-yl, 4,8-Dioxa-undec-1-yl, 4-Oxa-8-hydroxy-oct-1-yl, 4,8,12-Trioxa-tridec-1-yl, 4,8,12-Trioxa-octadec-1-yl oder 4,8,12,16-Tetraoxa-heptadec-1-yl.

Beispiele für besonders vorteilhafte Reste $R^1$ in Naphtholactamfarbstoffen der allgemeinen Formel I sind Methyl, Ethyl, Hexyl, Dodecyl, Docosanyl, Phenylmethyl, 2-Butoxi-eth-1-yl (= 3-Oxahept-1-yl), 3,6-Dioxa-hept-1-yl, 3,6-Dioxa-oct-1-yl, 3,6-Dioxa-dec-1-yl, 3,6-Dioxa-dodec-1-yl, 3,6,9-Trioxa-dec-1-yl, 3,6,9-Trioxa-tridec-1-yl oder Undec-10-en-1-yl.

Beispiele geeigneter Reste $R^6$ und $R^7$ in Resten $R^2$ der allgemeinen Formel III sind die vorstehend genannten Reste $R^1$, von denen Methyl, Ethyl, Propyl, Butyl, Pentyl, Hexyl, iso-Popyl, iso-Butyl, sec.-Butyl, tert.-Butyl, 2-Chloreth-1-yl, 2-Hydroxyeth-1-yl, 2-Hydroxyprop-1-yl, 2-Hydroxybut-1-yl, 4-Chlorphen-1-yl, 2-Chlorphen-1-yl, 2-Methylphen-1-yl, 4-Methylphen-1-yl, 2-Cyaneth-1-yl, 2-Methoxiphen-1-yl, 4-Methoxiphen-1-yl, 2-(Methancarbonyloxi)-eth-1-yl, 2-(Ethancarbonyloxi)-eth-1-yl, 2-(Propancarbonyloxi)-eth-1-yl, 2-(Butancarbonyloxi)-eth-1-yl, Prop-2-en-1-yl, But-3-en-1-yl, Pent-1-en-4-yl, Hex-5-en-1-yl, Hept-6-en-1-yl, Oct-7-en-1-yl, Non-8-en-1-yl, Dec-9-en-1-yl oder Undec-10-en-1-yl bevorzugt sind; oder Wasserstoffatome oder Eth-1-yl-2-carbonsäuremethyl-, -ethyl-, -propyl- oder -butylester. Von all diesen sind wiederum Wasserstoffatome, Methyl, Ethyl, Butyl, Phenyl oder 4-Ethoxi-phen-1-yl ganz besonders bevorzugt.

Beispiele geeigneter Gruppen Q in Resten $R^2$ der allgemeinen Formel III und 1V sind 1,4-Phenylen, 2-Methyl-phen-1,4-ylen, 2-Ethyl-phen-1,4-ylen oder 1,4-Naphthylen, von denen 1,4-Phenylen ganz besonders bevorzugt wird.

Beispiele geeigneter Reste $R^8$ in Resten $R^2$ der allgemeinen Formel IV sind Pyrrol-1-yl, Imidazol-1-yl, Pyrazol-1-yl, Indol-1-yl, 1H-Indazol-1-yl, Purin-7-yl, Carbazol-9-yl, $\beta$-Carbolin-9-yl, $\Delta^2$- und $\Delta^3$-Pyrrolin-1-yl, $\Delta^2$-, $\Delta^3$- und $\Delta^4$-Pyrazolin-1-yl, $\Delta^2$-, $\Delta^3$- und $\Delta^4$-Imidazolin-1-yl, Indolin-1-yl, Isoindolin-1-yl, $\Delta^2$-3-Methylpyrazolin-1-yl, $\Delta^2$-3,5,5-Trimethylpyrazolin1-yl, $\Delta^2$-3-Methyl-5-phenylpyrazolin-1-yl, $\Delta^2$-3,5,5-Diphenylpyrazolin-1-yl, Pyrrolidin-1-yl, Imidazolidin-1-yl, Pyrazolidin-1-yl, 1,2-Oxazolidin-1-yl, 1,2-Thiazolidin-1-yl, 1-Piperidino, Morpholin-4-yl, Piperazin-1-yl, 4-Methylpiperazin-1-yl, Phenoxazin-10-yl, Phenothiazin-10-yl, Perimidin1-yl, Perhydrophenazin-5-yl, $\Delta^3$, $\Delta^5$-1,3-Diazepin-1-yl oder Perhydro-1,3-diazepin-1-yl. Von diesen sind wiederum Pyrrolidin-1-yl, 1-Piperidino, Morpholin-1-yl, 4-Methylpiperazin-1-yl, Pyrazolidin-1-yl, $\Delta^2$-3-Methylpyrazolin-1-yl, $\Delta^2$-3,5,5-Trimethylpyrazolin-1-yl, $\Delta^2$-3-Methyl-5-phenylpyrazolin-1-yl und $\Delta^2$-3,5-Diphenylpyrazolin-1-yl ganz besonders bevorzugt.

Beispiele für besonders vorteilhafte Reste $R^2$ der allgemeinen Formel III und IV sind demnach 4-N,N-Dimethylamino-, 4-N,N-Diethylamino-, 4-N,N-Dibutylamino-, 4-N-Ethyl-N-methylamino-, 4-N-Phenylamino-, 4-N,N-Diphenylamino- und 4-[N-(4′-Ethoxiphen-1′-yl)-N-methyl aminophen-1-yl; oder 4-(Pyrrolidin-1′-yl)-, 4-(1′-Piperidino)-, 4-(Morpholin-1′-yl)-, 4-(4′-Methylpiperazin-1′-yl)-, 4-(Pyrazolidin-1′-yl)-, 4-[$\Delta^{2'}$-3′-Methylpyrazolin-1′-yl)-, 4-($\Delta^{2'}$-3′,5′,5′-Trimethylpyrazolin-1-yl)-, 4-($\Delta^{2'}$-3′-Methyl-5′ -phenyl-pyrazolin-1-yl)- und 4-($\Delta^{2'}$-3′,5-Diphenylpyrazolin-1′-yl)-phen-1-yl.

Beispiele geeigneter Reste $R^2$ in der allgemeinen Formel I, welche einen über ein Kohlenstoffringatom mit der Naphthalolactam-Grundstruktur verbundener, substituierter oder unsubstituierter, monocyclischer oder anellierter Heterocyclus aus der Klasse der Azole, der Azoline, der partiell hydrierten Azine und der Azine darstellen, sind N-Methyl-pyrrol2-yl, N-Ethyl-3-phenyl-pyrrol-2-yl, N-Methyl-4-phenyl-imidazol-2-yl, N-Phenyl-3,5,5-trimethyl-pyrazol-1-yl, 5-Methyl-2-phenyl-1,3-oxazol-4-yl, 4-N,N-Dimethylamino-1,3-oxazol-2-yl, 5-N,N-Diethylamino-1,3,4-oxadiazol-2-yl, 5-N,N-Diphenylamino-1,3,4-oxadiazol-2-yl, 4-Phenyl-1,3-thiazol-5-yl, 4-Phenyl-2-N,N-dimethylamino-1,3-thiazol-5-yl, 4-Phenyl-2-N,N-diethylamino-1,3-thiazol-5-yl, 4-Phenyl-1,3-thiazol-2-yl, 2-Phenyl-1,3-thiazol-4-yl, 2,4-Diphenyl-1,3-thiazol-5-yl, 4-(Naphth-1′-yl)-1,3thiazol-5-yl; 4-(4′-Methylphen-1′yl)-2-N,N-dimethylamino-, -2-N,N-diethylamino-, -2-N-ethyl-N-phenyl-amino- und -2-N,N-diphenylamino-1,3-thiazol-5-yl; 4-(Naphth-1′-yl)-2-N,N-dicyclohexylamino-, -2-N,N-di (phenylmethyl)amino-, -2-N-phenyl-N-(phenylmethyl)amino-, -2-N-cyclohexyl-N-(phenylmethyl)amino- und -2-piperidino-1,3-thiazol-5-yl; 4-(4′-Nitrophen-1′-yl)-2-N,N-dimethylamino- und -2-N,N-diethylamino-1,3-thiazol-5-yl; 4-(4′-Chlorphen-1′-yl)-2-N,N-diethylamino, -2-N,N-dicyclopentylamino, -2-N-[2′-(4″-methylphen-1″-yl)eth-1′-yl]-N-methyl-amino- und -2-N,N-di-n-hexyl-amino-1,3-thiazol-5-yl 4-[4′-(But-1″-oxi)-phen-1′-yl]-2-N,N-di-n-hexyl-amino-1,3-thiazol-5-yl, 4-(2′ ,4′-Dimethylphen-1′-yl)-2-($\Delta^{2'}$-3′,5′,5′-trimethylpyrazolin-1′-yl)-1,3-thiazol-5-yl, 4-Phenyl-2-(4′-methyl-piperazin-1′-yl)-1,3-thiazol-5-yl, 4-(2′,4′,6′-Trichlorphen-1′-yl)-2-(pyrrolidin-1′-yl)-1,3-thiazol-5-yl, 4-(4′-Bromphen-1′-yl)-2-N,N-diphenylamino-1,3-thiazol-5-yl, 4-[Naphth-2′-yl)-2-N,N-diethylamino-1,3-thiazol-5-yl, 4-Phenyl-2-N-methyl-N-[4′-ethoxiphen-1′-yl) amino-1,3-thiazol-5-yl, 2-N,N-diethylamino-1,3-thiazol-5-yl, N-Ethylcarbazol-2-yl, N-Propyl-isoindolin-5-yl, N-Methylindol-3-yl, N-Methyl--2-phenyl-indol-3-yl, N-Hexylindol-3-yl, N-Methyl-5-chlor-indol-3-yl, N-Methyl-1H-indazol-5-yl, Pyridin-2-yl, Pyrimidin-2-yl, Pyridin-4-yl, Pyridin-3-yl, Pyrazin-2-yl, Pteridin-2-yl, Acridin-3-yl, 1,7-Phenanthrolin-3-yl, Pyridazin-3-yl, Phenazin-1-yl, N-Methylphenoxazin-2-yl, N-Phenylphenothiazin-3-yl, N-Ethylperimidin-4-yl, 1-Ethyl-, 1-(2′-Hydroxyethyl)-, 1,2,2,4-Tetramethyl-, 2,2,4-Trimethyl-1-ethyl-, 2,2,4-Trimethyl-1-(2′-methoxiethyl)- oder 2,2,4-Trimethyl-(2′-methancarbonyloxi)-benzopiperidin-6-yl; 4-(2′-Hydroxyethyl)- oder 4-[2′-(Prop-2″-en-1″-yl-oxi)-eth-1′-yl]-benzomorpholin-6-yl; 4H-Chinolizin-2-yl, Isochinolin-3-yl, Chinolin-2-, -3-, -6- oder -8-yl; Phthalazin-1-yl, 1,8-Naphthyridin-2-oder -5-yl, Chinoxalin-2-yl, Chinazolin-2-yl, Cinnolin-3-yl, Phenanthridin-6- oder -3-yl, 8-N-Butylamino-, 8-N-(2′-Hydroxyethyl)amino- oder 8-N-(2′-Methoxiethyl)amino-chinolin-6-yl; 2,6-Dihydroxy-pyridin-3-yl, 4-Methyl-pyridin-2-yl, 2-Hydroxy-3-cyan-pyridin-5-yl, 4-Chlorpyridin-2-yl, 2,6-Dihydroxy-3-cyan-4-methyl-pyridin-5-yl, 4-(4′-Chlorphen-1′-yl)-pyridin-2-yl, 4-Methyl-3-cyan-2-N-phenylamino-6-N′-2′-methoxieth-1′-yl)-amino-pyridin-5-yl, 4-Methyl-3-cyan-2,6-bis-[N-(3′-methoxiprop-1′-yl)-amino]-pyridin-1-yl oder 4-Methyl-3-cyan-2-N-butylamino-6-N′-(3′-methoxiprop-1′-yl)-amino-pyridin-6-yl. Von diesen sind 4-Phenyl-2-N,N-dimethylamino-1,3-thiazol-5-yl, 4-Phenyl-2-N,N-diethylamino-1,3-thiazol-5-yl, N-Ethyl-carbazol-2-yl, N-Methyl-2-phenylindol-3-yl und 2,6-Dihydroxy-3-cyan-4-methyl-pyridin-5-yl besonders vorteilhaft.

Desweiteren kommen als Reste $R^2$ in den erfindungsgemäß zu verwendenden Naphtholactamfarbstoffen der allgemeinen Formel I Reste der allgemeinen Formel V in Betracht.

In der allgemeinen Formel V steht q für 0 oder 1. Unabhängig hiervon steht r für 0, 1 oder 2.

Beispiele geeigneter Reste $R^9$ und $R^{11}$ in der allgemeinen Formel V sind Wasserstoffatome oder, sofern q für 1 steht, zusammen eine ggf. durch $C_1$-bis $C_4$-Alkyl substituierte $C_2$- bis $C_3$-Alkylenkette wie Ethylen, Propan-1,2-diyl, Propan-1,3-diyl, Butan-1,3-diyl, Butan-2,3-diyl, 2,2-Dimethylpropan-1,3-diyl oder Hexan-1,4-diyl oder zusammen eine oder zwei Carbonylgruppen.

Hierbei resultieren für die Bedingung:

"q = 1 und $R^9$ und $R^{11}$ zusammen eine ggf. substituierte $C_2$- bis $C_3$-Alkylenkette",

Reste $R^2$ der allgemeinen Formel V-a oder V-b,

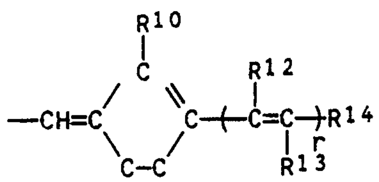

V-a

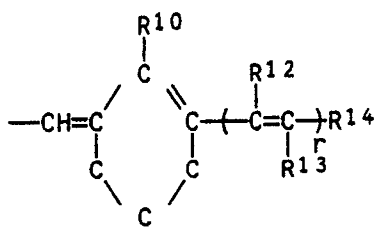

V-b

worin die weiteren Indices und Variablen die nachstehend näher erläuterte Bedeutung haben.

Des weiteren resultiert für die Bedingung:

" q = 1 und $R^9$ und $R^{11}$ zusammen eine Carbonylgruppe",

ein Rest $R^2$ der allgemeinen Formel V-c,

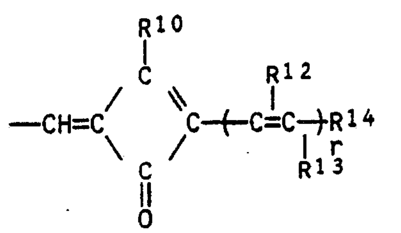

V-c

worin die weiteren Indices und Variablen die nachstehend näher erläuterte Bedeutung haben.

Außerdem resultiert für die Bedingung:

"q = 1 und $R^9$ und $R^{11}$ je eine Carbonylgruppe",

ein Rest $R^2$ der allgemeinen Formel V-d,

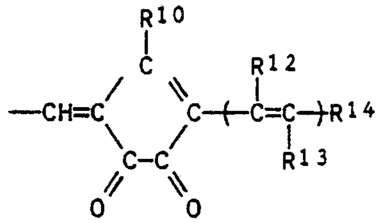

V-d

worin die weiteren Indices und Variablen die nachstehend näher erläuterte Bedeutung haben.

Beispiele geeigneter Reste $R^{10}$, $R^{12}$ und $R^{13}$ in den allgemeinen Formeln V bis V-d sind Wasserstoffatome, Halogenatome, Sauerstoffatome, insbesondere elektrisch einfach negativ geladene, Cyan, Nitro, Hydroxy, die vorstehend beschriebenen Reste $R^1$, Methoxi, Ethoxi, Propyloxi, Butyloxi, Pentyloxi, Hexyloxi, Cyclopentyloxi, Cyclohexyloxi, 4-Methylcyclohexyloxi, Phenyloxi, 2-Methylphen-1-yl-oxi, 4-Methylphen-1-yl-oxi, Naphth-1-yl-oxi, Benzyloxi (= Phenylmethyloxi), 2-Phenyl-eth-1-yl-oxi, 3-Phenyl-prop-1-yl-oxi, 4-Phenyl-but-1-yl-oxi, Methoxicarbonyl, Ethoxicarbonyl, Prop-1-yl-oxicarbonyl, Prop-2-yl-oxicarbonyl, But-1-yl-oxicarbonyl, But-2-yl-oxicarbonyl, Pent-1-yl-oxicarbonyl, Hex-1-yl-oxicarbonyl, Cyclopentyloxicarbonyl, Cyclohexyloxicarbonyl, Benzyloxicarbonyl, 2-Phenyl-eth-1-yl-oxicarbonyl, 3-Phenyl-prop-1-yl-oxicarbonyl, 4-(Naphth-2′-yl)-but-1-yl-oxicarbonyl, Phenyloxicarbonyl, Naphth-1-yl-oxicarbonyl, Naphth-2-yl-oxicarbonyl oder die entsprechenden homologen Aminocarbonyle, Oxisulfonyle, Sulfonyle oder Oxicarbonylaminyle oder die vorstehend beschriebenen Reste $R^2$, welche hier über ein Kohlenstoffringatom mit den olefinisch ungesättigten Grundgerüsten der allgemeinen Formeln V bis V-d verbundene, substituierte oder unsubstituierte, monocyclische oder anellierte Heterocyclen aus der Klasse der Azole, der Azoline, der Azine und der partiell hydrierten Azine darstellen.

Beispiele geeigneter Reste $R^{14}$ in den allgemeinen Formeln V bis V-d sind die vorstehend beschriebenen Reste $R^2$ der allgemeinen Formel III, die vorstehend beschriebenen Reste $R^2$ der allgemeinen Formel IV, die vorstehend beschriebenen Reste $R^2$, welche hier über ein Kohlenstoffringatom mit den olefinisch ungesättigten Grundgerüsten der allgemeinen Formeln V bis V-d verbundene, substituierte oder unsubstituierte, monocyclische oder anellierte Heterocyclen aus der Klasse der Azole, der Azoline, der Azine und der partiell hydrierten Azine darstellen, des weiteren Thiole wie Thiophen-2-yl (= Thien-2-yl), 4-Methyl-thien-2-yl, 4-Methyl-5-phenyl-thien-2-yl, 5-N,N-Dimethylamino- und 5-N,N-Diethylaminothien-2-yl, Benzo[b]thien-2-yl, 4-Methyl-benzo[b]-thien-7-yl oder Naphtho[2,3-b]thien-2-yl oder Thianthren-2-yl, 2,3,7,8-Tetramethylthianthren-1-yl oder 3-Chlor-thianthren-7-yl.

Beispiele für weitere geeignete Reste $R^{14}$ in den allgemeinen Formeln V bis V-d sind die Reste der allgemeinen Formel VI.

In der allgemeinen Formel VI hat $R^1$ die vorstehend angegebene Bedeutung für die Reste $R^1$ in der allgemeinen Formel I.

Der Index s in der allgemeinen Formel VI steht für 0, 1, 2 oder 3. Unabhängig hiervon steht der Index t in der allgemeinen Formel VI ebenfalls für 0, 1, 2 oder 3. Die Indices s und t haben in der allgemeinen Formel I die selbe Bedeutung wie in der allgemeinen Formel VI.

Beispiele geeigneter Reste $R^3$ und $R^4$ in der allgemeinen Formel VI sind die vorstehend beschriebenen Reste $R^{10}$, $R^{12}$ oder $R^{13}$ der allgemeinen Formeln V bis V-d, die vorstehend beschriebenen Reste $R^1$ der allgemeinen Formel I, Carbon-, Sulfon- oder Phosphonsäuregruppen, Methanthio, Ethanthio, Propan-1-thio, Propan-2-thio, Butan-1-thio, Butan-2-thio, tert.-Butylthio, Pentan-1-thio, Isopentan-1-thio, Hexan-1-thio, Hexan-2-thio, Cyclopentanthio, Cyclohexanthio, Benzenthio, 4-Methylbenzen-1-thio, 2-Methylbenzen-1-thio, 3-Chlorbenzen-1-thio, 4-Chlorbenzen-1-thio, 2-Ethylbenzen-1-thio, Naphthalen-1-thio, Naphthalen-2-thio, Phenylmethanthio, 2-Phenylethan-1-thio, 2-[4′-Cyanphen-1′-yl)-ethan--1-thio, 3-Phenylpropan-1-thio, 6-Phenylhexan-1-thio oder die entsprechenden Oxisulfonyle, Sulfonyle oder Oxicarbonylaminyle oder N,N-Dimethyl-, N,N-Diethyl-,N,N-Di-n-propyl-, N,N-Di-iso-propyl-, N,N-Di-n-butyl-, N-n-Butyl-N-tert.-butyl-, N,N-Di-pentyl-, N,N-Di-hexyl-, N,N-Diphenyl-, N-Methyl-N-phenyl-, N-Ethyl-N-phenyl-, N,N-Dibenzyl-, N,N-Di-(2-phenyleth-1-yl)-, N-Ethyl-N-benzyl-, N-Phenyl-N-benzyl-, N-[4′-Methylphenyl)-N-[2-(4′-cyanphen-1′-yl)-eth-1-yl]-, N,N-Dicyclopentyl-, N,N-Dicyclohexyl-, N-Cyclopentyl-N-cyclohexyl-, N-Methyl-N-cyclohexyl-, N-Ethyl-N-cyclohexyl-, N-Phenyl-N-cyclohexyl-, N-Benzyl-N-cyclohexyl- oder N-(2-Phenyl-eth-1-yl)-N-cyclohexylamino, -aminosulfonyl oder -aminocarbonyl. Hierbei können die Reste $R^3$ und $R^4$ verschieden voneinander oder gleich sein.

Weitere Beispiele für geeignete Reste $R^3$ und $R^4$ sind Kohlenstoff-, Stickstoff-, Sauerstoff- und/oder Schwefelatome, welche Bestandteile des Gerüsts von einem oder von mehreren an die Naphth-1,8-ylen-Gruppe der allgemeinen Formel VI anellierten Ringen darstellen, wobei hier insbesondere die Substitutionsmuster VI-1 bis VI-15 in Betracht kommen:

VI-1, t = 2,

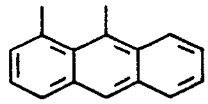

VI-2, t = 2,

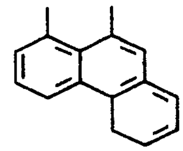

VI-3, s und t = 2,

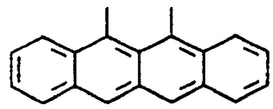

VI-4, s = 1, t = 2,

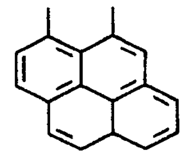

VI-5, s und t = 1,

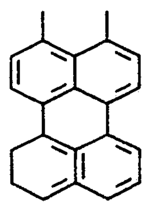

VI-6, s und t =1,

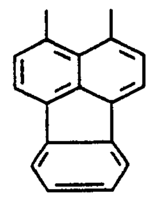

VI-7, t = 2,

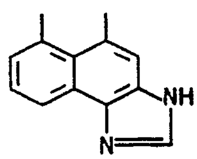

VI-8, t = 2,

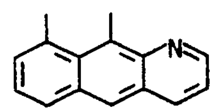

VI-9, t = 2,

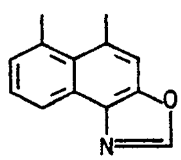

VI-10, t = 2,

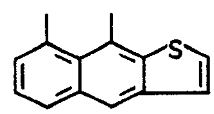

VI-11, s und t = 1,

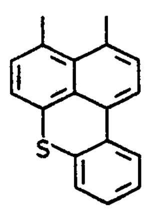

VI-12, t = 2,

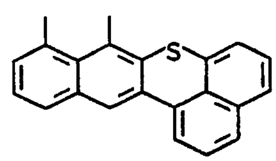

VI-13, s = 1, t = 2,

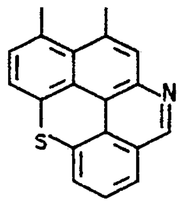

VI-14, s = 3, t = 2,

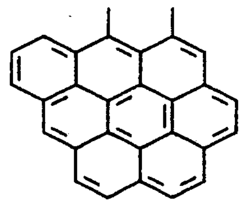

oder VI-15, t = 2,

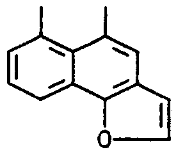

wobei das Substitutionsmuster VI-11 besonders bevorzugt wird.

In der allgemeinen Formel I haben die Variablen $R^3$ und $R^4$ sowie die Indices s und t die selbe Bedeutung wie in der Formel VI.

Außerdem kommen als Reste $R^2$ in den erfindungsgemäß zu verwendenden Naphtholactamfarbstoffen der allgemeinen Formel I Reste der allgemeinen Formel VII in Betracht, worin die Variablen $R^1$, $R^3$ und $R^4$ sowie die Indices s und t die selbe Bedeutung haben, wie sie bei der Formel VI angegeben ist, und worin $R^{15}$ den Rest einer CH-aciden Verbindung bezeichnet.

Bei "CH-aciden Verbindungen" handelt es sich um Verbindungen, welche locker gebundene Methylen- oder Methinprotonen in $\alpha$-Stellung zu einer oder zu zwei Aldehyd-, Keto-, Ester-, Nitril- oder Nitrogruppen aufweisen. Solche Verbindungen können bekanntermaßen die allgemein übliche Aldol-Kondensation, Aldol-Addition, die Perkin-Reaktion, die Knoevenagel-Kondensation oder die Mannich-Reaktion eingehen.

Beispiel geeigneter Reste $R^{15}$ sind Barbitursäurereste (= 1,3-Diazin-2,3,6-trion-5-yl) der allgemeinen Formel VIII,

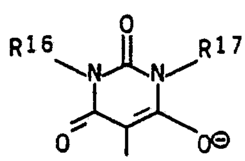

VIII

worin $R^{16}$ und $R^{17}$ voneinander verschieden oder gleich sind und $C_1$- bis C-22-Alkyl, $C_5$- bis $C_7$-Cycloalkyl, $C_6$- bis $C_{10}$-Aryl, $\omega$-Aryl-$C_1$- bis $\omega$-Aryl-$C_6$-Alkyl, Oxa-alkanyl, Aza-alkanyl oder Thia-alkanyl bezeichnen.

Beispiele geeigneter Reste $R^{16}$ und $R^{17}$ sind die vorstehend beschriebenen Alkyl-, Cycloalkyl-, Aryl- oder $\omega$-Aryl-Alkylreste $R^1$ in der allgemeinen Formel I, die mit Alkoxiresten substituierten Alkylreste $R^1$ in der allgemeinen Formel I, die mit Alkylthioresten $R^1$ substituierten Alkylreste $R^1$ in der allgemeinen Formel I oder die mit Alkylaminoresten substituierten Alkylreste $R^1$ in der allgemeinen Formel I, von denen Methyl, Ethyl, Butyl oder 6-Ethyl-4-oxadec-1-yl besonders bevorzugt wird.

Sofern man in den Naphtholactamfarbstoffe der allgemeinen Formel I Reste $R^2$ der allgemeinen Formeln V bis V-d, worin $R^{14}$ einen Rest der allgemeinen Formel VI darstellt, oder Reste $R^2$ der allgemeinen Formel VII verwendet, ist es von ganz besonderem Vorteil, wenn die Variablen $R^1$, $R^3$ und $R^4$ sowie die Indices s und t der allgemeinen Formeln VI und VII mit den betreffenden Variablen und Indices der allgemeinen Formel I identisch sind.

Beispiele geeigneter Anionen T in Naphtholactamfarbstoffen der allgemeinen Formel I sind Chlorid, Bromid, Iodid, Nitrat, Sulfat, Perchlorat, Bromat, Tetrafluorborat, Hexafluorphosphat, Hexafluorsilikat, Methansulfonat, Benzolsulfonat, Ethylsulfat, Phosphat, Salicylat, Oxalat, Acetat, Trifluormethansulfonat, Tetrachlorzinkat, Tetrachloraluminat, Hexachlorferrat, Hexafluorarsenat, Hexafluorantimonat, Hexachlorantimonat oder die aus der EP-A-0 224 261 bekannten Nickeldithiolat-Anionen.

Hierbei enthalten die erfindungsgemäß zu verwendenden Naphtholactamfarbstoffe der allgemeinen Formel I oder - kurz gesagt - die Naphtholactamfarbstoffe I kein Anion T, wenn die elektrisch einfach positive Ladung des Naphtholactamstickstoffs in der Formel I durch eine elektrisch einfach negative Ladung

im Naphtholactamfarbstoff I neutralisiert wird, was man ganz allgemein als eine "Betainstruktur" bezeichnet und was der Bedingung n = O entspricht.

Enthält der Naphthalolactamfarbstoff I darüber hinaus noch weitere einfach negative Ladungen, beispielsweise mehrere Sulfonsäuregruppen, so sind diese naturgemäß mit üblichen und bekannten Kationen verbunden. Auch hieraus ergibt sich die Bedingung n = 0.

Ansonsten steht n, je nach Anzahl der elektrisch positiven Ladungen im Naphtholactamfarbstoff I einerseits und der Anzahl der elektrisch negativen Ladungen in Anion T andererseits für 1/3, 1/2, 2/3, 1, 2 oder 3.

Beispiele für Naphtholactamfarbstoffe I, welche erfindungsgemäß mit ganz besonderem Vorteil verwendet werden, sind die Naphtholactamfarbstoffe I-1 bis I-120:

I-1

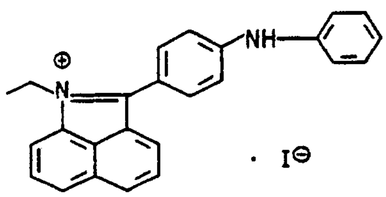

· $I^{\ominus}$

I-2

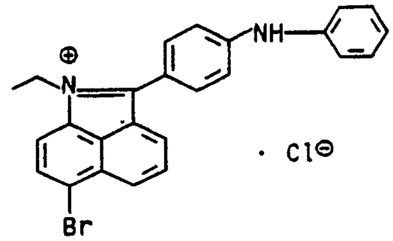

· $Cl^{\ominus}$

I-3

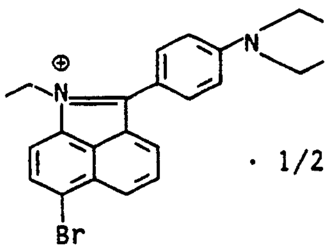

· 1/2 $ZnCl_4^{2\ominus}$

I-4

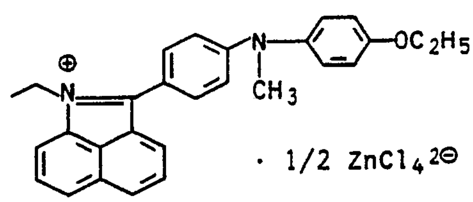

· 1/2 $ZnCl_4^{2\ominus}$

I-5

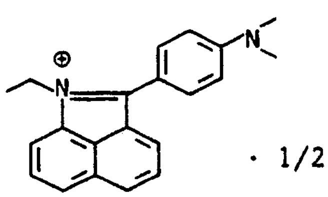

· 1/2 $CH_3SO_3^{\ominus}$

I-6

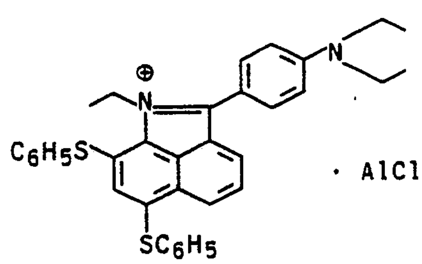

· $AlCl_4^{\ominus}$

I-7

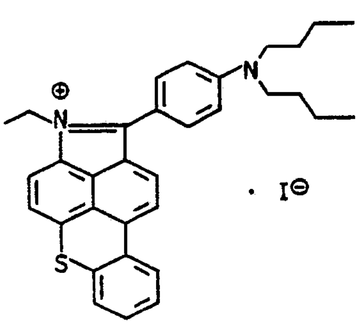

· $I^{\ominus}$

I-8

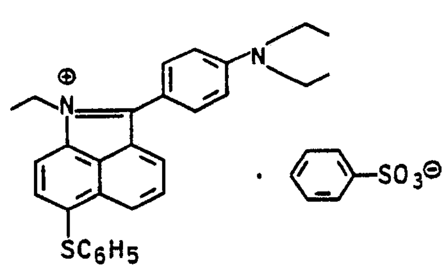

I-9

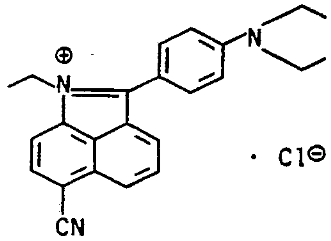

I-10

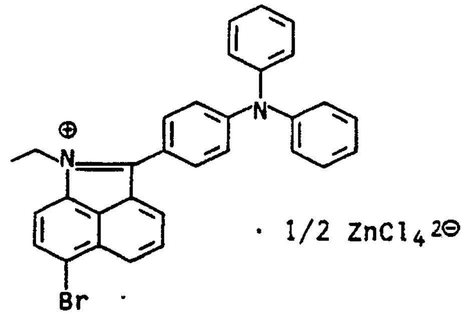

I-11

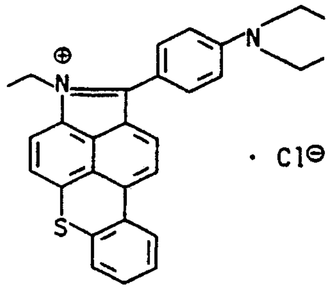

I-12

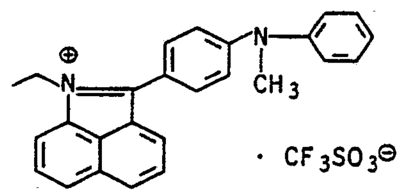

I-13

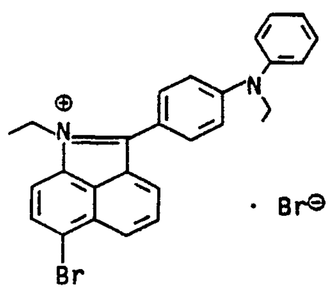

I-14

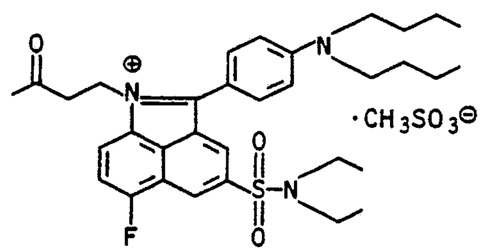

I-15

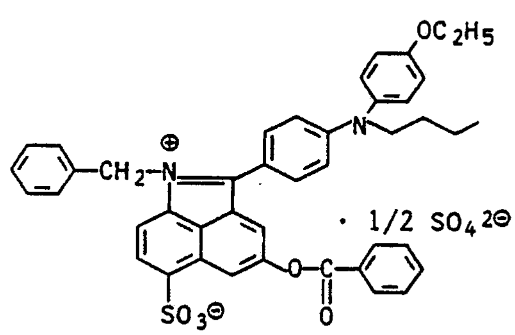

I-16

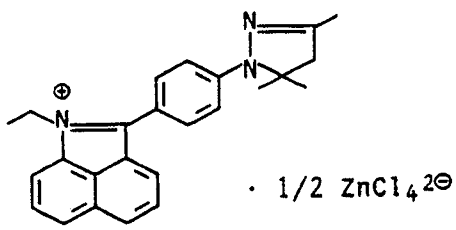

I-17

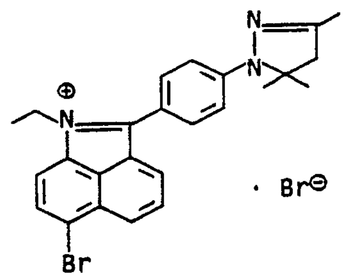

I-18

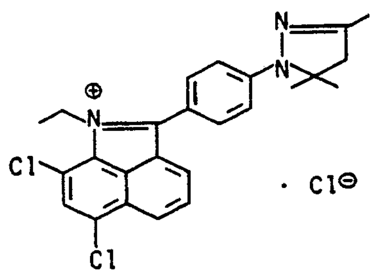

I-19

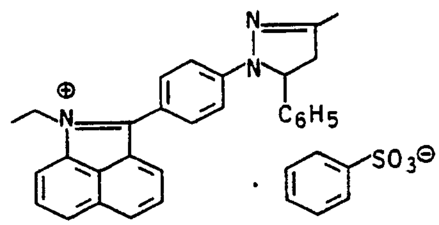

I-20

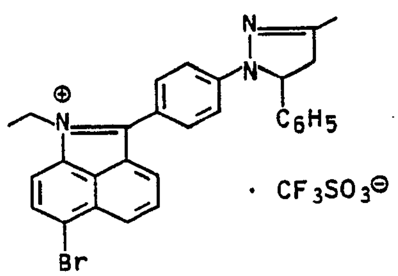

I-21

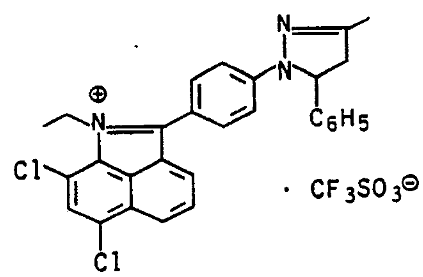

I-22

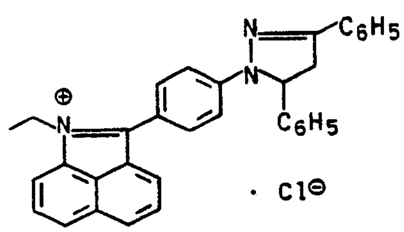

I-23

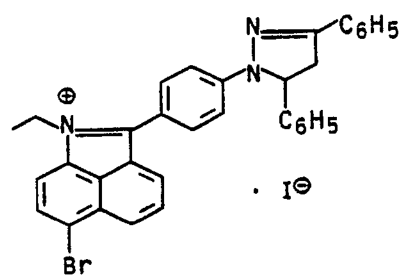

I-24

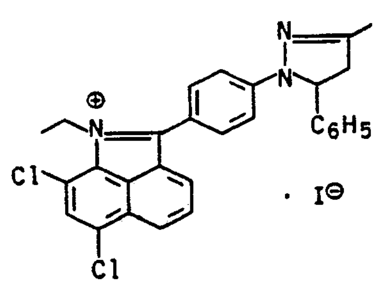

I-25

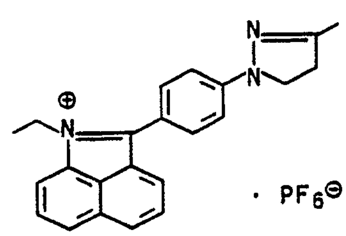

I-26

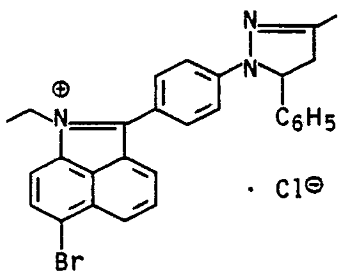

I-27

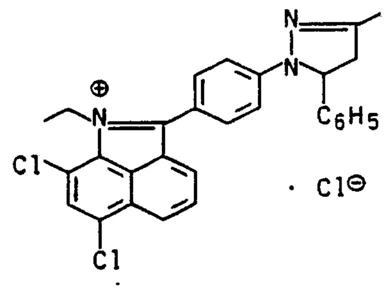

I-28

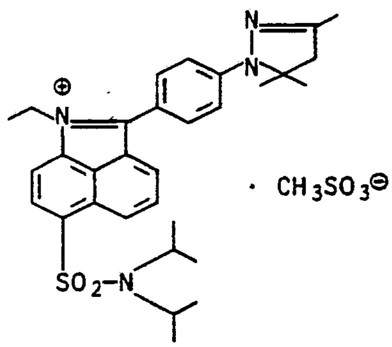

I-29

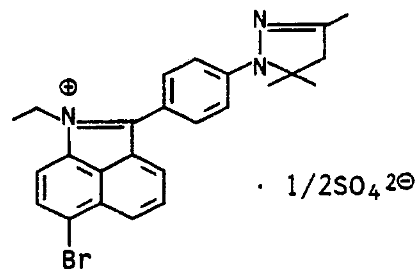

I-30

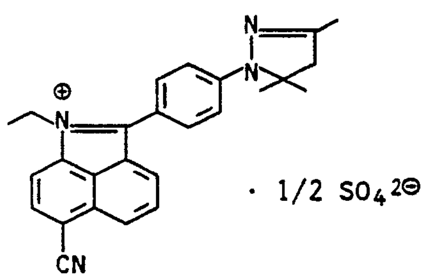

I-31

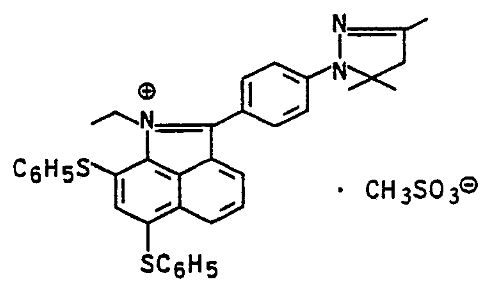

I-32

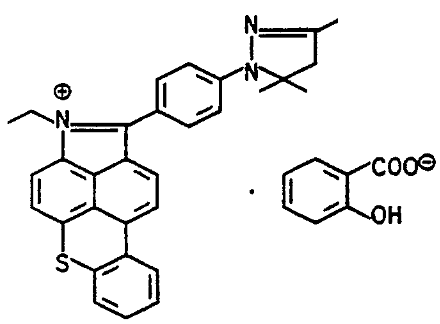

I-33

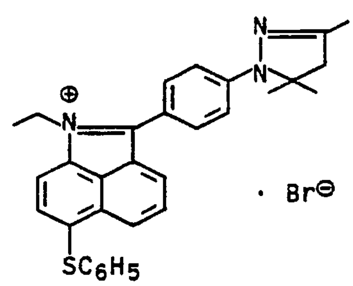

I-34

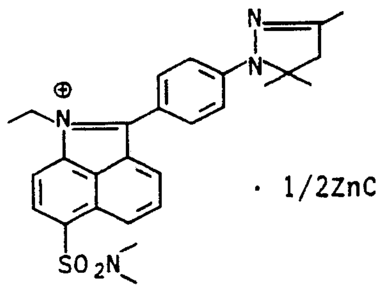

· $1/2ZnCl_4^{2\ominus}$

I-35

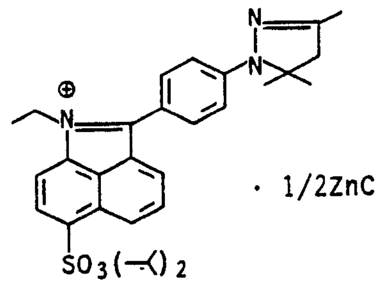

· $1/2ZnCl_4^{2\ominus}$

I-36

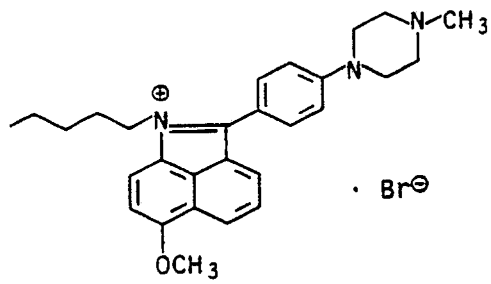

· $Br^{\ominus}$

I-37

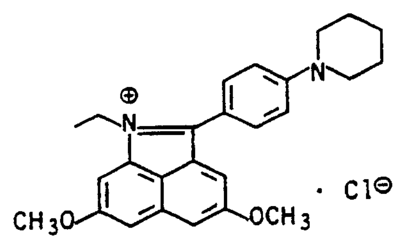

· $Cl^{\ominus}$

I-38

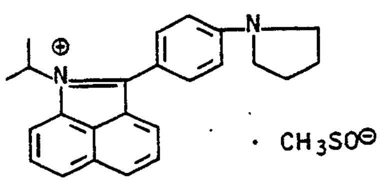

· $CH_3SO^{\ominus}$

I-39

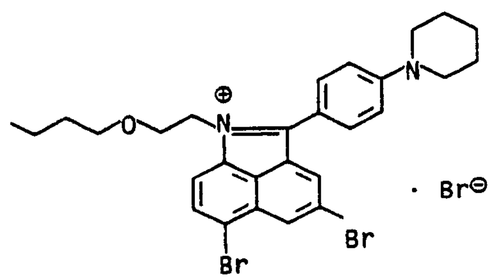

· $Br^{\ominus}$

I-40

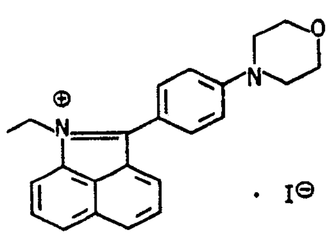

· $I^{\ominus}$

I-41

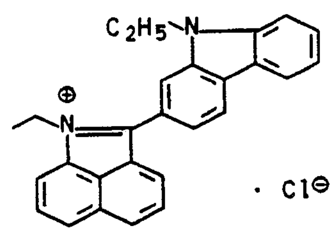

· $Cl^{\ominus}$

I-42

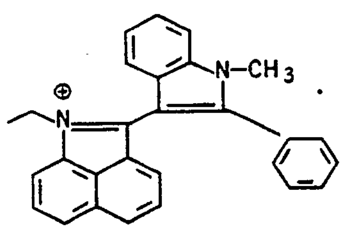

· $I^{\ominus}$

I-43

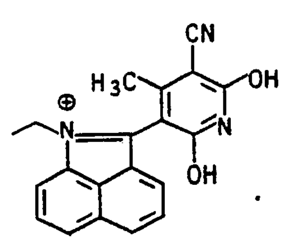

· $Br^{\ominus}$

I-44

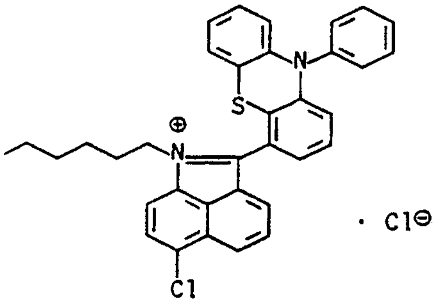

· Cl⊖

I-45

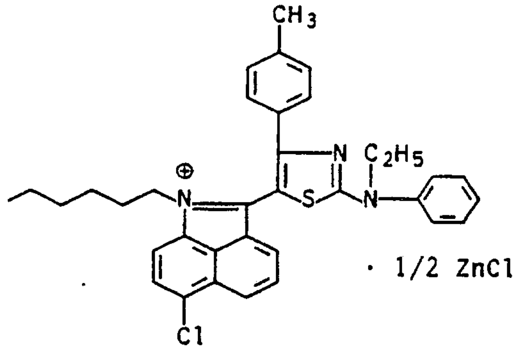

· 1/2 $ZnCl_4^{2\ominus}$

I-46

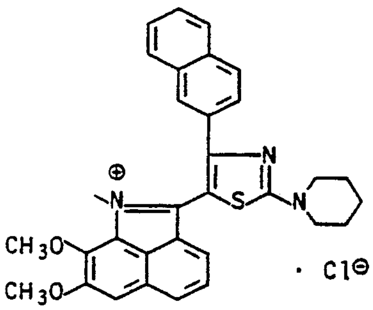

· Cl⊖

I-47

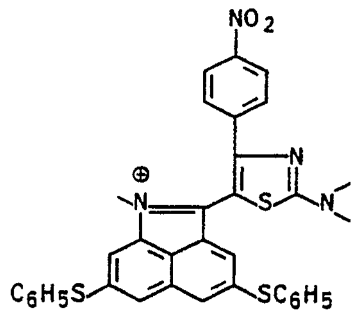

· 1/2 $ZnCl_4^{2\ominus}$

I-48

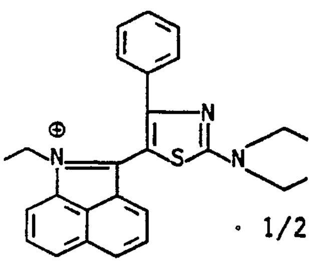

· 1/2 $ZnCl_4^{2\ominus}$

I-49

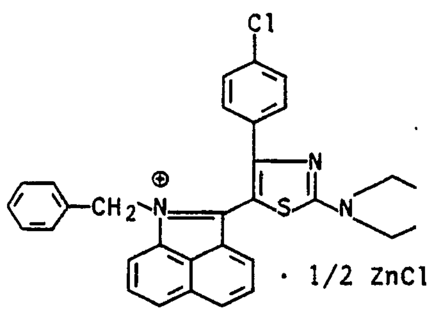

· 1/2 $ZnCl_2^{2\ominus}$

I-50

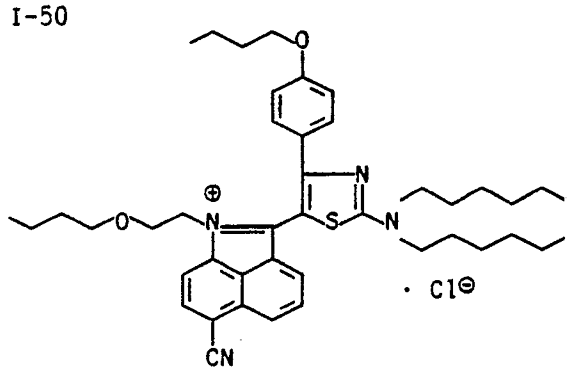

I-51

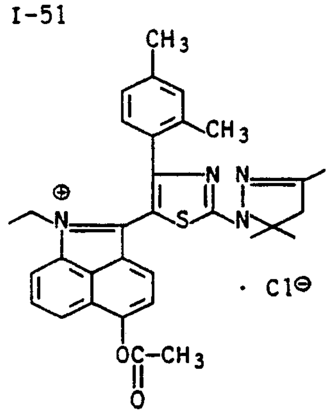

I-52

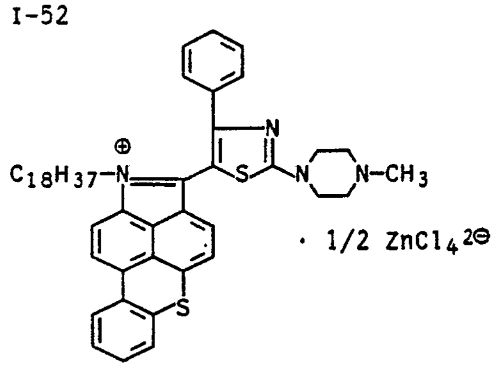

I-53

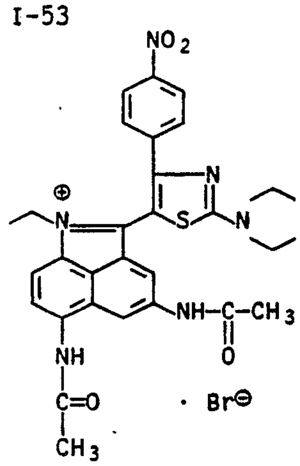

I-54

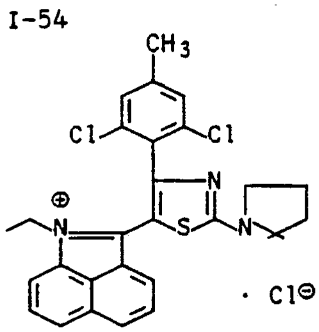

$\cdot\ Cl^{\ominus}$

I-55

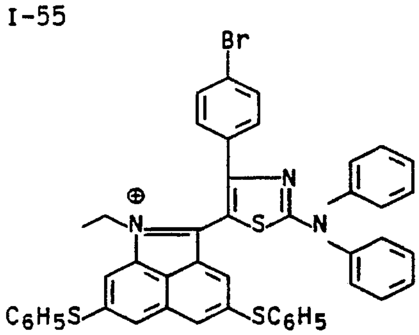

$\cdot$ 1/2 $ZnCl_4^{2\ominus}$

I-56

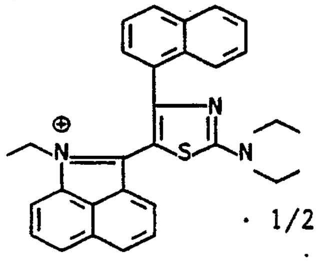

$\cdot$ 1/2 $ZnCl_4^{2\ominus}$

I-57

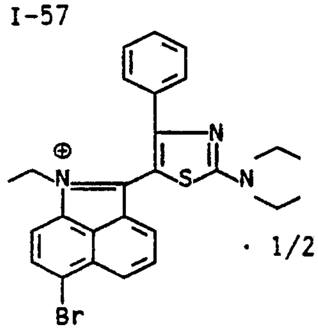

$\cdot$ 1/2 $ZnCl_4^{2\ominus}$

I-58

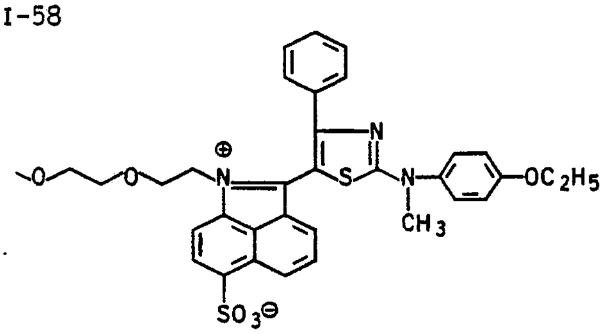

I-59

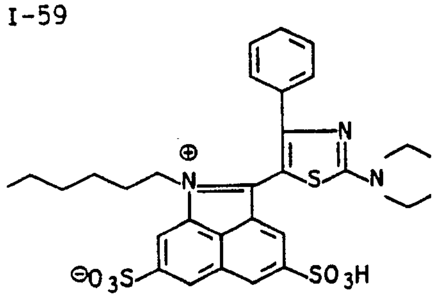

I-60

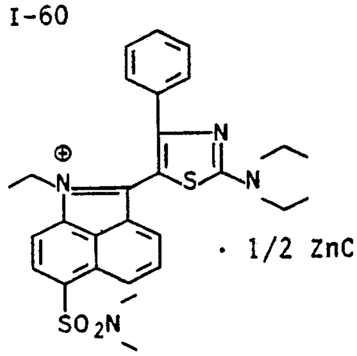

· 1/2 $ZnCl_4^{2\ominus}$

I-61

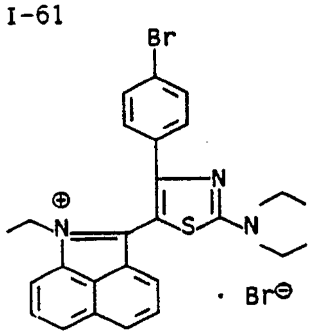

· $Br^{\ominus}$

I-62

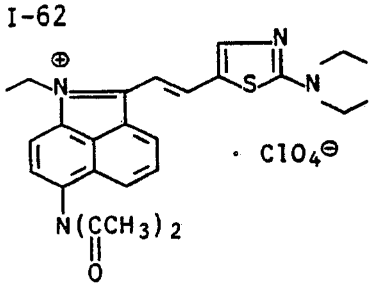

· $ClO_4^{\ominus}$

I-63

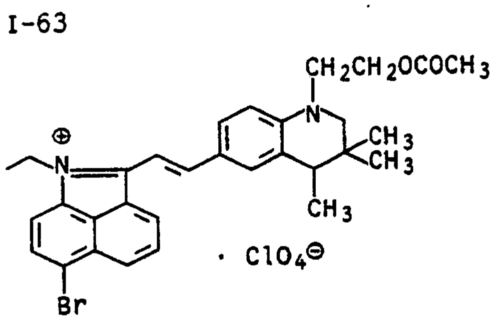

· $ClO_4^{\ominus}$

I-64

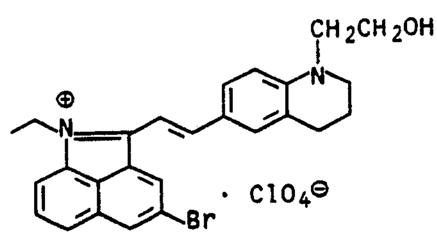

· $ClO_4^{\ominus}$

I-65

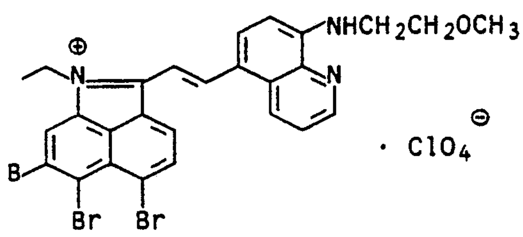

· $ClO_4^{\ominus}$

I-66

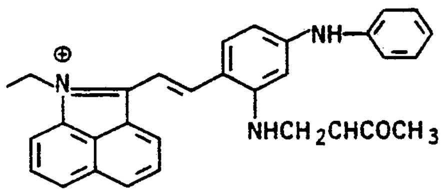

· $ClO_4^{\ominus}$

I-67

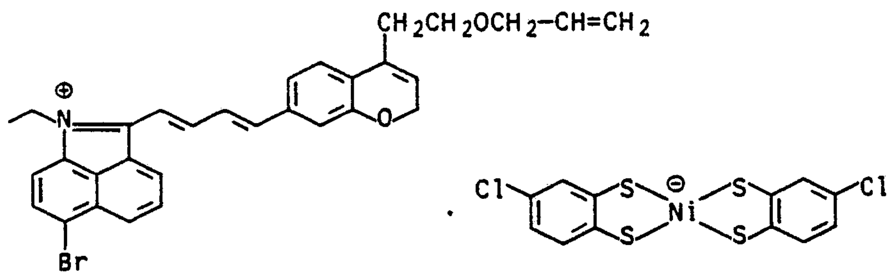

I-68

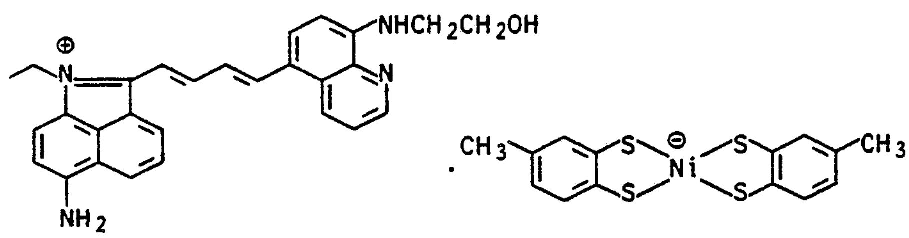

I-69

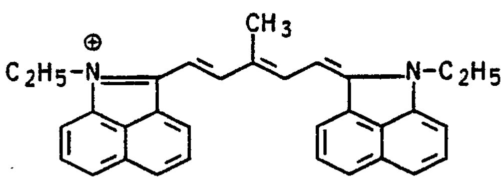

· $I^{\ominus}$

I-70

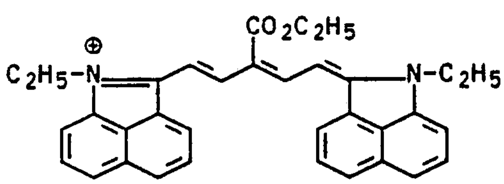

· $I^{\ominus}$

I-71

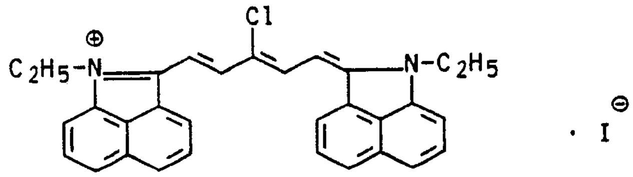

I-72

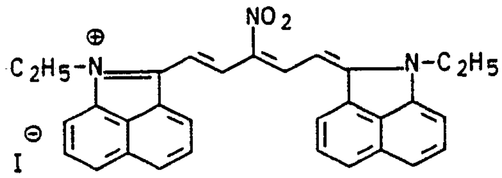

I-73

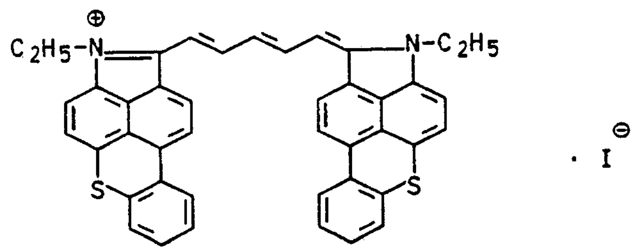

I-74

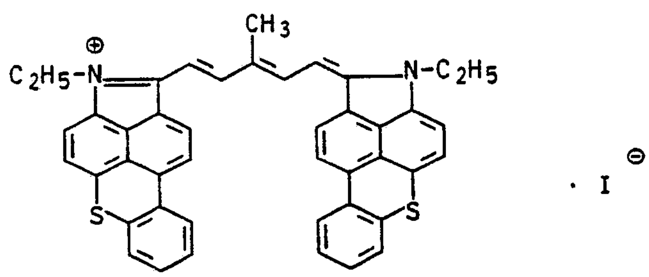

I-75

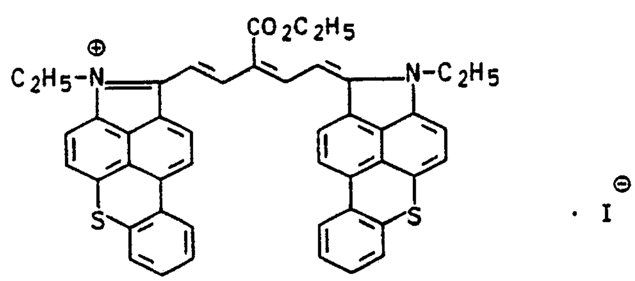

I-76

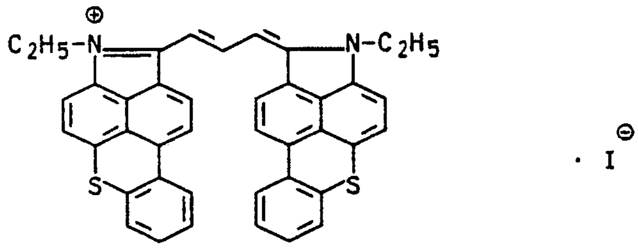

I-77

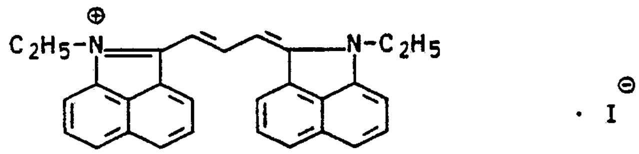

I-78

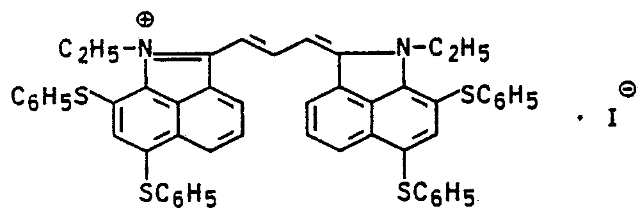

I-79

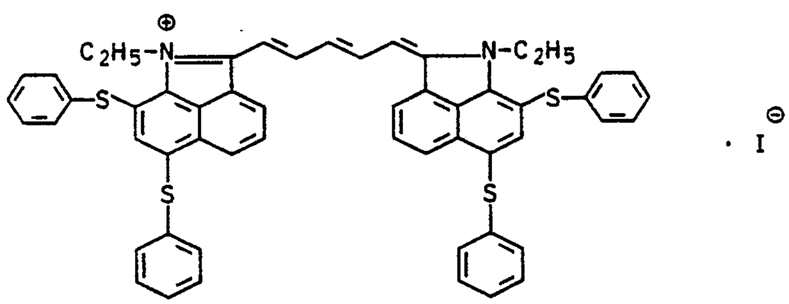

I-80

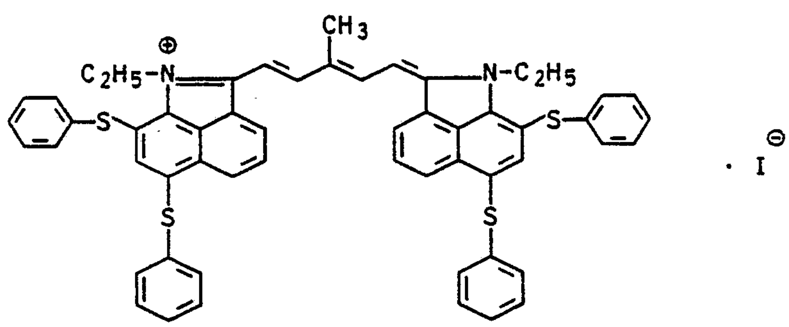

I-81

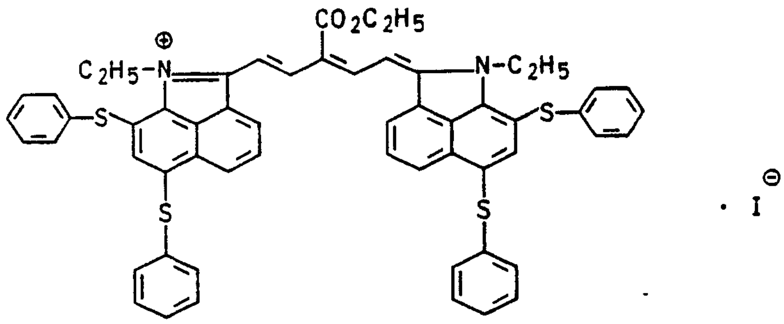

I-82

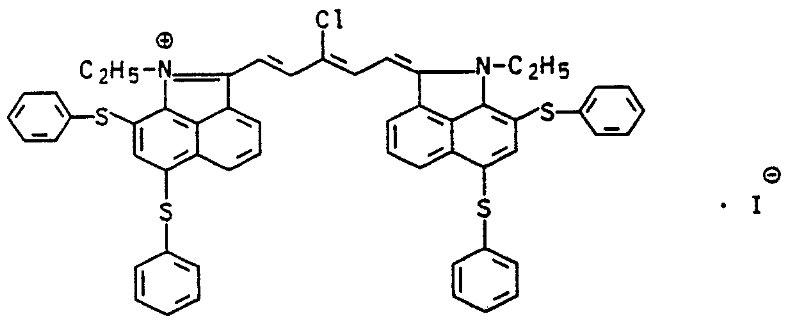

I-83

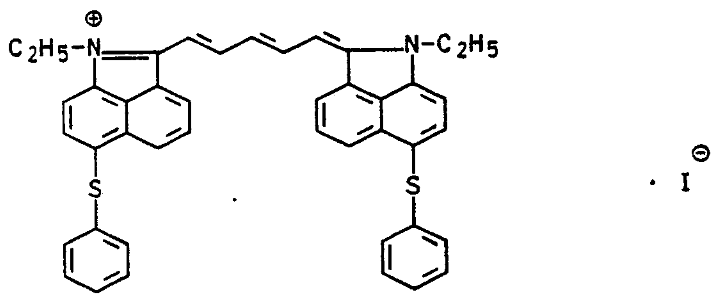

I-84

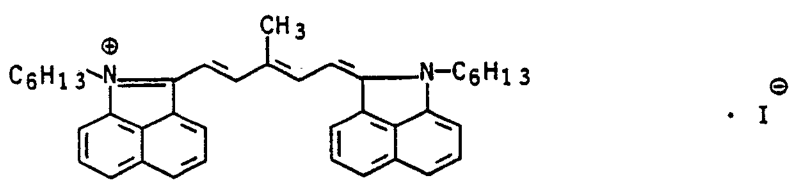

I-85

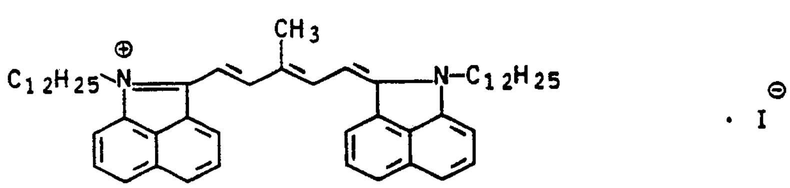

I-86

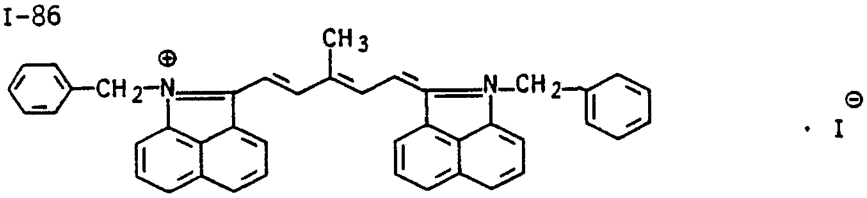

I-87

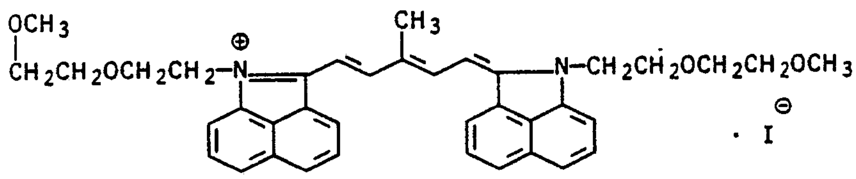

I-88

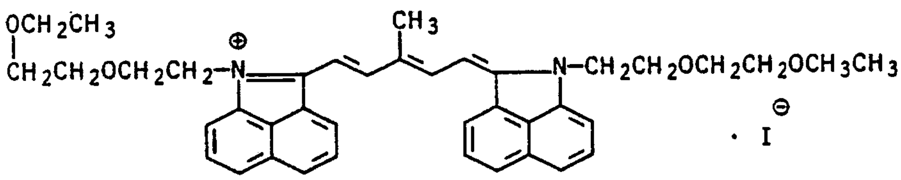

I-89

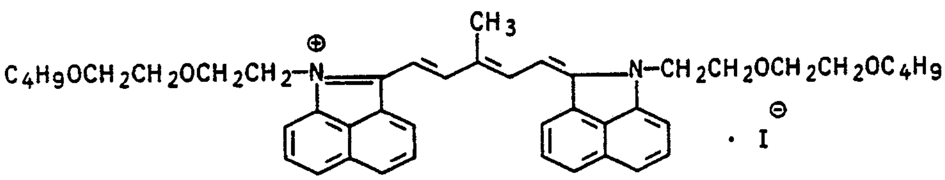

I-90

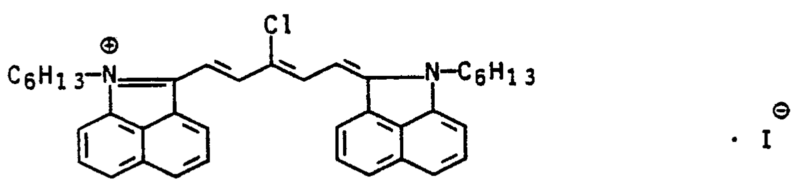

I-91

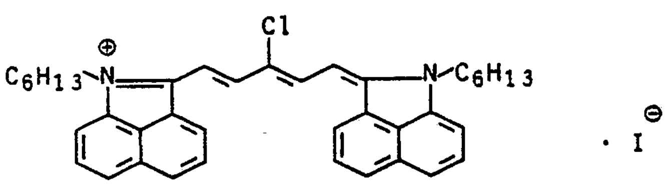

I-92

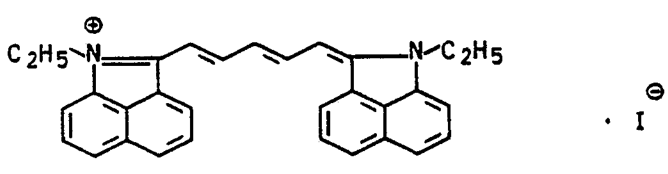

I-93

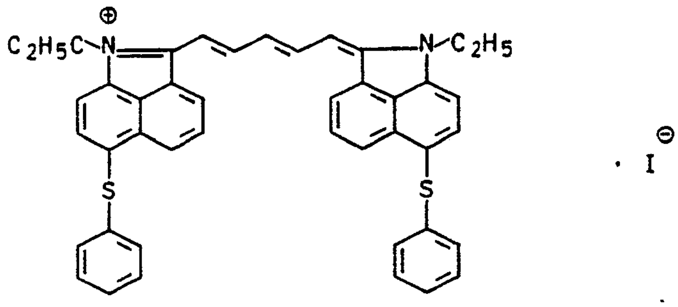

I-94

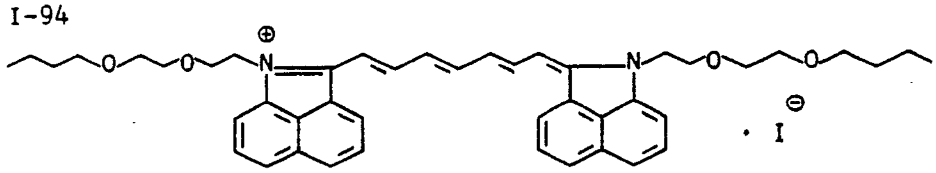

I-95

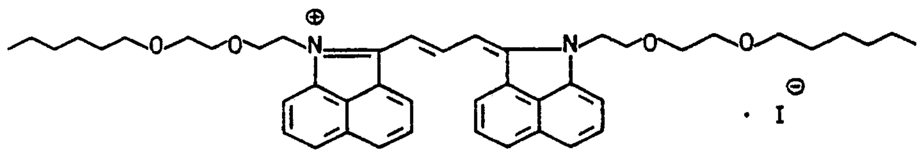

I-96

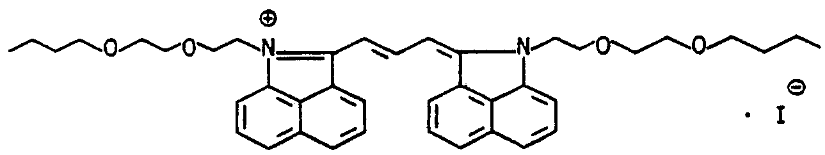

I-97

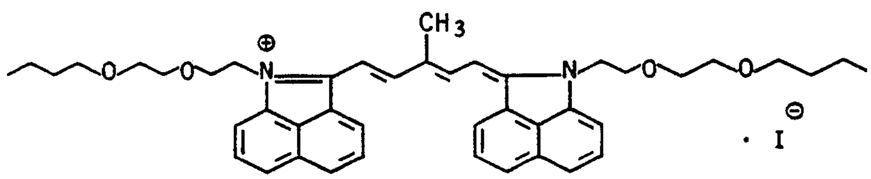

I-98

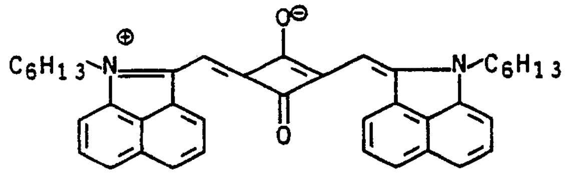

I-99

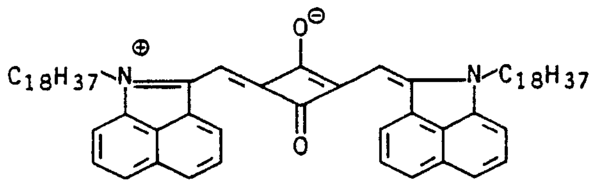

I-100

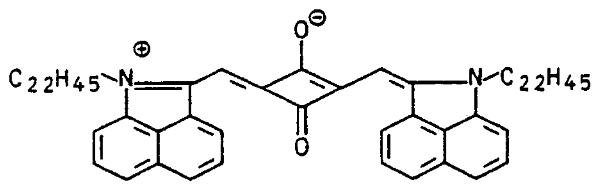

I-101

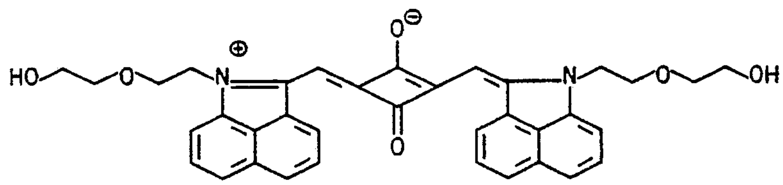

I-102

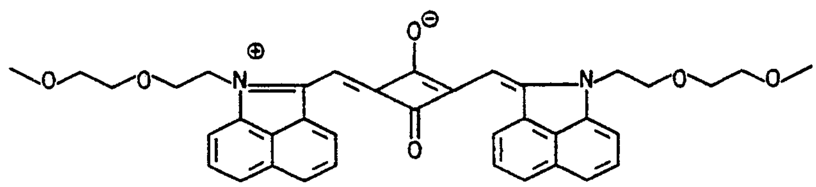

I-103

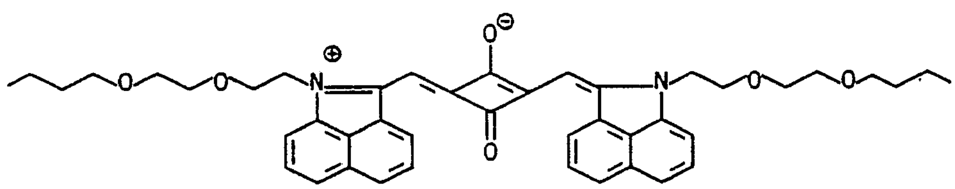

I-104

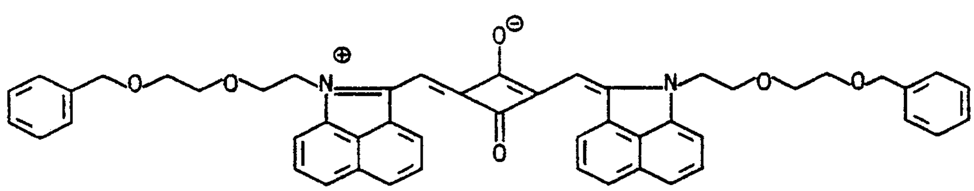

I-105

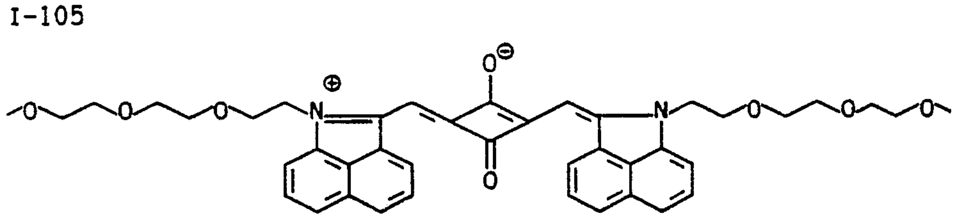

I-106

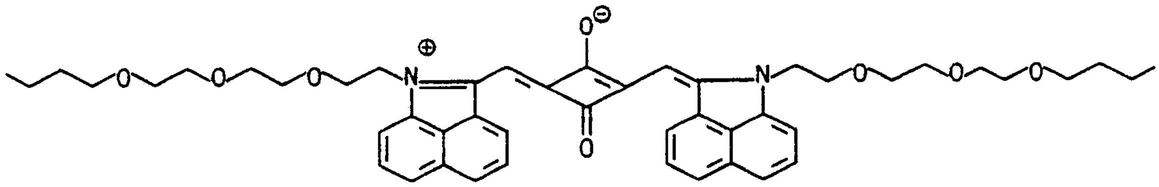

I-107

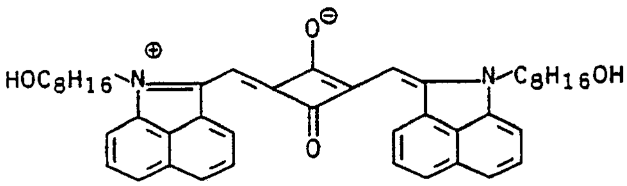

I-108

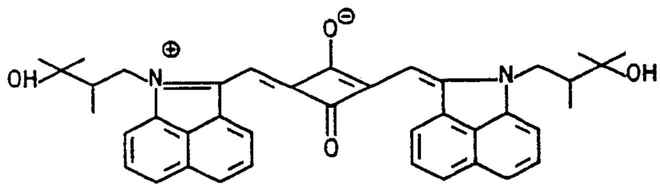

I-109

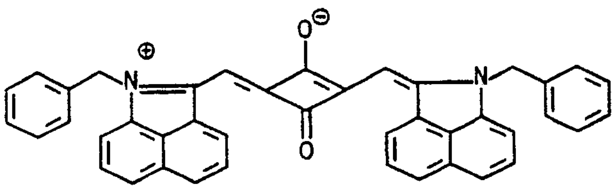

I-110

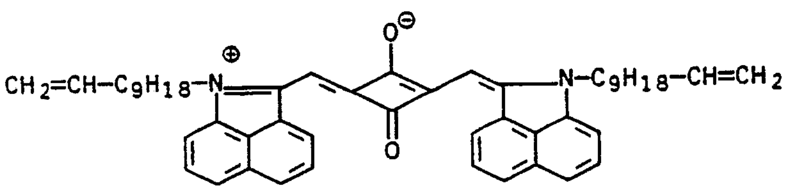

I-111

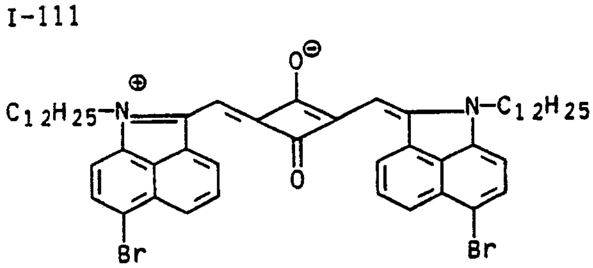

I-112

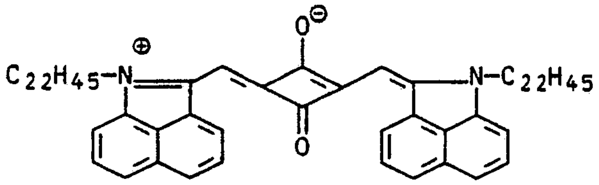

I-113

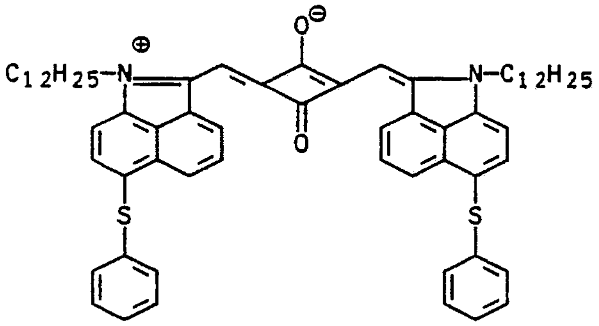

I-114

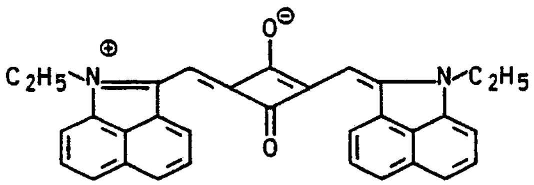

I-115

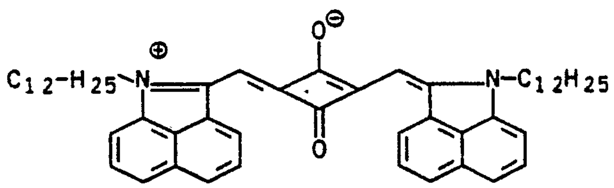

I-116

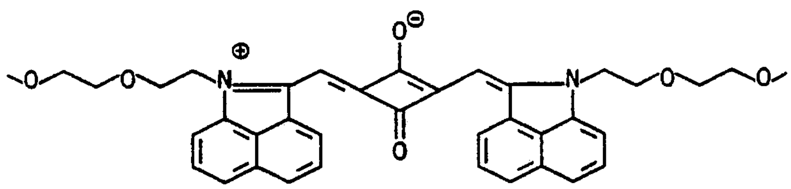

I-117

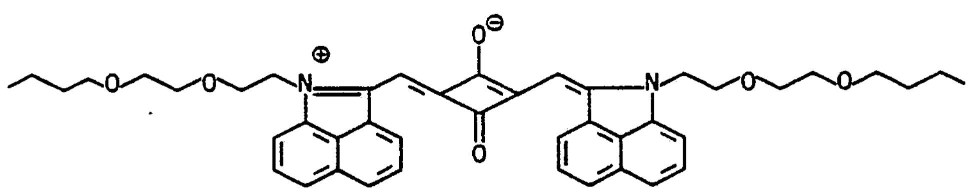

I-118

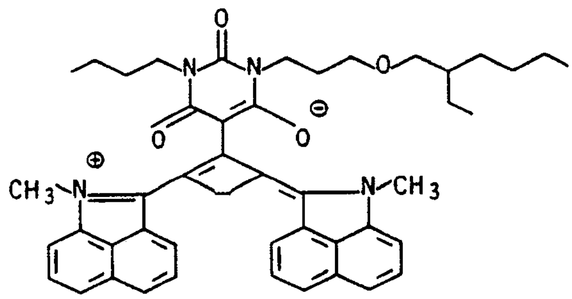

I-119

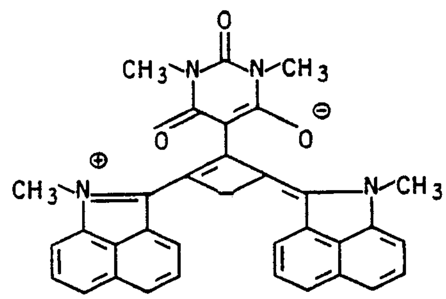

I-120

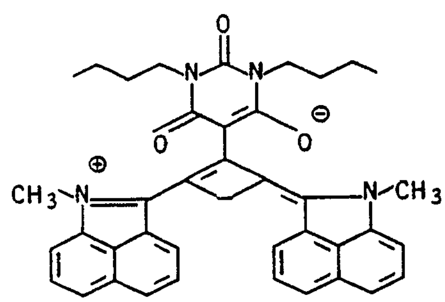

Beispiele für Naphtholactamfarbstoffe I, welche erfindungsgemäß mit ganz besonderem Vorteil verwendet werden und welche dann einen herausragenden technischen Effekt bewirken, sind die Naphtholactamfarbstoffe I-2, I-3, I-10, I-13, I-16, I-34, I-35, I-48, I-57, I-60, I-71, I-77, I-85, I-96, I-97, I-98, I-99, I-102, I-103, I-107 und I-115, von denen I-71, I-77, I-85, I-96 und I-97 hervorzuheben sind.

Beispiele für erfindungsgemäß zu verwendende Naphtholactamfarbstoffe I mit der anhand der Naphtholactamfarbstoffe I-1 bis I-15 beispielhaft verdeutlichten Struktur und ihre Herstellung sind aus der DE-A-20 10 579, der DE-A-11 65 790, der DE-A-15 69 660 und der DE-A-23 28 163 bekannt.

Beispiele für erfindungsgemäß zu verwendende Naphtholactamfarbstoffe I mit der anhand der Naphtholactamfarbstoffe I-16 bis I-40 beispielhaft verdeutlichten Struktur und ihre Herstellung sind aus der JP-B-72-24244 und der DE-A-23 28 163 bekannt.

Beispiele für erfindungsgemäß zu verwendende Naphtholactamfarbstoffe I mit der anhand der Naphtholactamfarbstoffe I-41 bis I-44 beispielhaft verdeutlichten Struktur und die Art ihrer Herstellung sind gleichfalls vom Stand der Technik her bekannt.

Erfindungemäß zu verwendende Naphtholactamfarbstoffe I mit der anhand der Naphtholactamfarbstoffe I-45 bis I-60 beispielhaft verdeutlichten Struktur werden durch die Kondensation eines Naphtholactams der allgemeinen Formel IX,

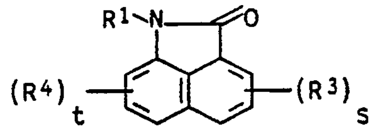

IX

worin die Indices und die Variablen die vorstehend erläuterte Bedeutung haben, mit geeigneten 1,3-Thiazolderivaten in der Gegenwart von $POCl_3$ und $ZnCl_2$ hergestellt. Hierbei kommen als 1,3-Thiazolderivate all die in Betracht, von denen sich die vorstehend genannten 1,3-Thiazolylreste ableiten, insbesondere aber die 4-Aryl-2-N,N-dialkylamino-, -2-N,N-dicycloalkylamino-, -2-N-alkyl-N-cycloalkylamino-, -2-N,N-diarylamino-, -2-N-alkyl-N-aryl-amino-, -2-N-cycloalkyl-N-aryl-amino-, -2-N, N-di(ω-arylalkyl)-amino-, -2-N-alkyl-N-(ω-arylalkyl)-amino-, -2-N-(ω-arylalkyl)-N-aryl-amino-, -2-N-(ω-arylalkyl)-N-cycloalkyl-amino-, -2-(azolidin-1-yl)-, -2-(azol-1′-yl)- und die 4-Aryl-2-(perhydroazin-1′-yl)-1,3-thiazole, von denen 4-Phenyl-2-N,N-diethylamino-1,3-thiazol ganz besonders bevorzugt wird.

Die Kondensation wird in Lösung durchgeführt. Hierzu verwendet man wasserfreie inerte organische Lösungsmittel wie etwa 1,2-Dichlorethan. Vorteilhafterweise stellt man hierbei zunächst eine flüssige Mischung aus $POCl_3$, wasserfreiem Zinkchlorid und einem Naphtholactam IX her und dosiert zu dieser Mischung bei 50 bis 100° C, inbesondere 60 bis 90° C, die Lösung eines geeigneten 1,3-Thiazols in 1,2-Dichlorethan hinzu. Hiernach wird das resultierende Reaktionsgemisch eine gewisse Zeit, vorteilhaft sind 1 bis 10 Stunden, unter Rühren auf Rückflußtemperatur erhitzt. Anschließend gießt man das heiße oder das kalte Reaktionsgemisch in heißes oder kaltes Wasser, destilliert hieraus das 1,2-Dichlorethan ab, und versetzt die resultierende wäßrige Phase mit der hochkonzentrierten Lösung eines Salzes, wodurch der betreffende Naphtholactamfarbstoff I als kristalliner Feststoff abgeschieden wird. Hiernach wird der betreffende erfindungsgemäß zu verwendende Naphtholactamfarbstoff I abgetrennt, ggf. gereinigt und anschließend getrocknet, wobei man die in der präparativen organischen Chemie üblichen und bekannten Trenn-, Reinigungs- und Trocknungsmethoden anwendet. Man kann indes die Kondensation auch ohne Lösungsmittel durchführen.

Beispiele für erfindungsgemäß zu verwendende Naphtholactamfarbstoffe I mit der anhand des Naphtholactamfarbstoffs I-62 beispielhaft verdeutlichten Struktur und ihre Herstellung sind aus der CA-A-1 023 188 bekannt. Hierin wird auch ihre Verwendung in silberhalogenidhaltigen Emulsionen beschrieben. Diese Emulsionen dienen der Herstellung direkt positiver photographischer Filme.

Beispiele für erfindungsgemäß zu verwendende Naphtholactamfarbstoffe I mit der anhand der Naphtholactamfarbstoffe I-63 bis I-68 beispielhaft verdeutlichten Struktur und ihre Herstellung sind aus der EP-A-0 224 261 bekannt. Dort wird auch ihre Verwendung für die Herstellung von Aufzeichnungsschichten laseroptischer Datenplatten beschrieben.

Beispiele für erfindungsgemäß zu verwendende Naphtholactamfarbstoffe I mit der anhand der Naphtholactamfarbstoffe I-69 bis I-97 beispielhaft verdeutlichten Struktur, ihre Herstellung und ihre Verwendung für die Herstellung von Aufzeichnungsschichten laseroptischer Datenplatten werden in der DE-A-36 08 214 beschrieben.

Beispiele für erfindungsgemäß zu verwendende Naphtholactamfarbstoffe I mit der anhand der Naphtholactamfarbstoffe I-98 bis I-117 beispielhaft verdeutlichten Struktur, ihre Herstellung und ihre Verwendung für die Herstellung von Aufzeichnungsschichten laseroptischer Datenplatten werden in der DE-A-36 31 843 beschrieben.

Beispiele für erfindungsgemäß zu verwendende Naphtholactamfarbstoffe I mit der anhand der Naphtholactamfarbstoffe I-118 bis I-120 beispielhaft verdeutlichten Struktur, ihre Herstellung und ihre Verwendung für die Herstellung von Aufzeichnungsschichten laseroptischer Datenplatten werden in der deutschen Patentanmeldung P 3738911.4 beschrieben.

Vorteilhaft sind die Isoindoleninfarbstoffe der allgemeinen Formel X

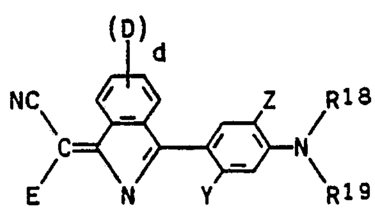

(X),

worin der Index und die Variablen die folgende Bedeutung haben:

E Cyan, Carbo-$C_1$-$C_4$-Alkoxi, Carbamoyl, N-$C_1$-$C_4$-Alkylcarbamoyl, worin der Alkylrest gegebenenfalls durch $C_1$-$C_4$-Alkoxi substituiert ist, N-Phenylcarbamoyl, worin der Phenylrest gegebenenfalls durch $C_1$-$C_4$-Alkyl oder $C_1$-$C_4$-Alkoxi substituiert ist, Acetyl, Benzoyl, 4-Nitrophenyl oder 4-Cyanphenyl;

D Wasserstoff, Chlor, $C_1$-$C_4$-Alkyl, $C_1$-$C_4$-Alkoxi, wobei bei d = 2 die Substituenten gleich oder verschieden sein können;

d 1 oder 2;

$R^{18}$ Wasserstoff, Methyl, Ethyl oder 2-Hydroxyethyl und

$R^{19}$ Phenyl, durch $C_1$-$C_4$-Alkyl oder $C_1$-$C_4$-Alkoxi substituiertes Phenyl oder Cyclohexyl; oder

$R^{18}$ Wasserstoff und

$R^{19}$ $C_1$-$C_4$-Alkyl; oder

$R^{18}$ und $R^{19}$ $C_1$-$C_6$-Alkyl; durch Chlor, Cyan, Hydroxy, $C_1$-$C_4$-Alkoxi, Phenoxi, $C_2$-$C_5$-Alkanoyloxi, das gegebenenfalls durch $C_1$-$C_4$-Alkoxi oder Phenoxi substituiert ist, oder durch Carbo-$C_1$-$C_4$-Alkoxi substituiertes $C_1$-$C_4$-Alkyl; Allyl oder Phenyl-$C_1$-$C_4$-Alkyl; oder die Gruppe

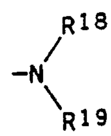

stellt einen gesättigten oder partiell ungesättigten heterocyclischen Fünf- oder Sechsring dar, der gegebenenfalls noch ein Sauerstoff- oder ein weiteres Stickstoffatom als Ringglied enthalten kann;

Y Wasserstoff, Hydroxy, Methyl, Ethyl;

Y die Gruppe $-O\underset{\underset{O}{\|}}{C}-R^{20}$

worin $R^{20}$ für lineares oder verzweigtes $C_1$-$C_{12}$-Alkyl, Phenyl oder durch $C_1$-$C_4$-Alkyl oder $C_1$-$C_4$-Alkoxi substituiertes Phenyl steht;

Y die Gruppe

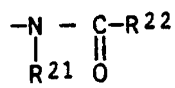

worin $R^{21}$ für Wasserstoff oder $C_1$-$C_4$-Alkyl steht und $R^{22}$ die folgende Bedeutung hat: Wasserstoff, lineares oder verzweigtes $C_1$-$C_{12}$-Alkyl, Trifluormethyl, Chlormethyl, $C_1$-$C_4$-Alkoximethyl, Phenoximethyl, wobei im Phenoxi gegebenenfalls 1 oder 2 Wasserstoffatome durch Chlor, Methoxi, Nitro oder $C_1$-$C_4$-Alkyl substituiert sind und bei zwei Substituenten diese gleich oder verschieden sein können; Phenylthiomethyl, worin das Phenyl gegebenenfalls durch $C_1$-$C_4$-Alkyl substituiert ist; Benzyl; Phenylethyl; $C_3$-$C_7$-Cycloalkyl; Phenyl, durch $C_1$-$C_{12}$-Alkyl, $C_1$-$C_{12}$-Alkoxi oder Nitro substituiertes Phenyl; $H_5C_6$-$CH=CH$-; oder $-CH_2-PO(OR^{23})_2$, worin $R^{23}$ für $C_1$-$C_4$-Alkyl steht; oder

Y die Gruppe

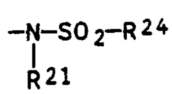

worin $R^{21}$ die vorstehend genannte Bedeutung hat und $R^{24}$ für $C_1$-$C_{12}$-Alkyl, Phenyl oder $C_1$-$C_{12}$-Alkylphenyl steht; oder

Y N-$C_1$-$C_4$-Alkylamino, wenn $R^{18}$ und $R^{19}$ $C_1$-$C_4$-Alkyl sind; oder

Y N,N-Di-$C_1$-$C_4$-Alkylamino, N-Pyrrolidinyl, N-Piperidinyl oder N-Morpholinyl, wenn die Gruppe

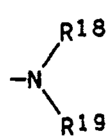

die gleiche Bedeutung hat; und

Z Wasserstoff oder für den Fall, daß $R^{18}$ und $R^{19}$ $C_1$-$C_4$-Alkyl oder Allyl sind und Y die Gruppe

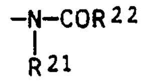

ist, auch Methoxi oder Ethoxi.

Hierbei kommen in den erfindungsgemäß zu verwendenden Isoindoleninfarbstoffen X neben Acetyl, Benzoyl, 4-Nitrophenyl, 4-Cyanphenyl, Carbamoyl und Cyan als Reste E noch die folgenden Reste in Betracht:

E1) Carbo-$C_1$-$C_4$-Alkoxi wie Carbomethoxi, Carboethoxi, Carbo-n-propoxi, Carbo-isopropoxi, Carbo-n-butoxi und Carbo-isobutoxi;

E2) gegebenenfalls im Alkyl substituiertes N-Alkylcarbamoyl wie Methyl-, N-Ethyl-, N-Propyl-, N-Butyl-, N-(3-Methoxipropyl)-, N-(3-Ethoxipropyl)-, N-(3-Propoxipropyl)- und N-(3-Butoxipropyl)-carbamoyl;

E3) gegebenenfalls im Phenyl substituiertes N-Phenylcarbamoyl wie N-Phenyl-, N-(4-Methylphenyl)-, N-(2-Methylphenyl)-, N-(4-Ethoxiphenyl)-, N-(4-Isopropylphenyl)-, N-(4-Isobutylphenyl)-, N-(4-tert.-Butylphenyl)-, N-(4-Methoxiphenyl)-, N-(4-Ethoxiphenyl)- und N-(4-Butoxiphenyl)-carbamoyl. Hiervon ist Cyan als Rest E bevorzugt.

Beispiele geeigneter Reste D sind Chlor, Methyl, Ethyl, Methoxi, Ethoxi, Butoxi, wobei d = 1 oder 2 ist. Vorzugsweise ist D Wasserstoff.

Beispiele geeigneter Reste $R^{18}$ sind neben Wasserstoff Methyl, Ethyl und 2-Hydroxyethyl, wenn der Rest $R^{19}$ Cyclohexyl, Phenyl oder substituiertes Phenyl wie 4-Methylphenyl, 4-Ethylphenyl, 4-Methoxiphenyl, 4-Ethoxiphenyl, 4-Butoxiphenyl oder 4-Isopropylphenyl ist. Wenn der Rest $R^{18}$ Wasserstoff ist, ist der Rest $R^{19}$ auch $C_1$-$C_4$-Alkyl, wie Methyl, Ethyl, Propyl, i-Propyl, Butyl, i-Butyl oder tert.-Butyl. Weitere Beispiele geeigneter Reste $R^{18}$ und $R^{19}$ sind im einzelnen:

i) gegebenenfalls substituiertes $C_1$-$C_6$-Alkyl wie Methyl, Ethyl, n-Propyl, n-Butyl, Pentyl, Hexyl, 2-Chlorethyl, 2-Cyanethyl, 2-Hydroxyethyl, 2-Ethoxiethyl, 2-Propoxiethyl, 2-Butoxiethyl, 2-Phenoxiethyl, 2-(Ethanoyloxi)-ethyl, 2-(Propanoyloxi)-ethyl, 2-(Butanoyloxi)-ethyl, 2-(Pentanoyloxi)-ethyl; 2-(Methoxiethanoyloxi)-ethyl, 2-(Ethoxiethanoyloxi)-ethyl, 2-(Phenoxiethanoyloxi)-ethyl, 2-(Carbomethoxi)-ethyl, 2-(Carboethoxi)-ethyl und 2-(Carbobutoxi)-ethyl und 2-(Carbopropoxi)-ethyl;

ii) Allyl und Phenyl-$C_1$-$C_4$-Alkyl wie Benzyl, 2-Phenyl-ethyl, 2-Phenylpropyl, 1-Phenylpropyl und 2-Phenylbutyl; oder

iii) die Gruppe

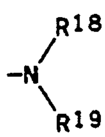

stellt einen gesättigten oder partiell ungesättigten 5- oder 6-gliedrigen heterocyclischen Rest dar, wie N-Pyrrolidinyl, N-Piperidinyl, N-Morpholinyl, N-Piperazinyl, N′-$C_1$-$C_4$-Alkylpiperazinyl mit Methyl, Ethyl, Propyl oder Butyl als Alkylrest am N′-Atom, Pyrazolidin-1-yl, $\Delta^2$-3-methylpyrazolin-1-yl, $\Delta^2$-3,5,5-Trimethylpyrazolin-1-yl, $\Delta^2$-3-Methyl-5-phenylpyrazolin-1-yl, $\Delta^3$-3,5-Diphenylpyrazolin-1-yl und N-Imidazolyl.

Beispiele geeigneter Substituenten Y sind neben Wasserstoff, Hydroxy, Methyl und Ethyl

iv) die Gruppe

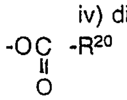

worin der Rest $R^{20}$ Methyl, Ethyl, Propyl, Butyl, Hexyl, 1-Ethylphenyl, Heptyl, Nonyl, Undecyl, Dodecyl, Phenyl, 4-Methoxiphenyl, 4-Ethylphenyl, 4-Methoxiphenyl und 4-Ethoxiphenyl bedeutet;

v) die Gruppe

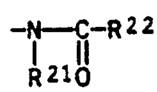

worin der Rest $R^{21}$ $C_1$-$C_4$-Alkyl wie Methyl, Ethyl, Propyl oder vorzugsweise Wasserstoff bedeutet und der

Rest R22 für Wasserstoff, Trifluormethyl, Chlormethyl, Benzyl, 2-Phenylethyl, $C_6$-$H_5$-CH=CH- oder die folgenden Reste steht:

α) $C_1$-$C_{12}$-Alkyl wie Methyl, Ethyl, n-Propyl, Isopropyl, Butyl, Isobutyl, 2-Methylpropyl, tert.-Butyl, n-Pentyl, 2,2-Dimethylpropyl, 1-Methylbutyl, 1-Ethylpropyl, 1,1-Dimethylpropyl, n-Hexyl, 1,1-Dimethylbutyl, 1,3-Dimethylbutyl, Heptyl, 1-Ethyl-pentyl, 1-Propylbutyl, 2,4-Dimethylpentyl, Octyl, Nonyl, Decyl, Undecyl, 1,1-Dimethylnonyl und Dodecyl;

ß) Alkoxi-, Phenoxi- und Phenylthiomethyl wie Methoximethyl, Ethoximethyl, Propoximethyl, Butoximethyl, Phenoximethyl, 2-, 3- und 4-Isobutylphenoximethyl, 4-tert.-Butyl-2-methylphenoximethyl, 2,3-Dimethylphenoximethyl, 2,4-Dimethylphenoximethyl, 2,5-Dimethylphenoximethyl, 3,5-Dimethylphenoximethyl, 3,4-Dimethylphenoximethyl, 2-, 3- und 4-Chlorphenoximethyl, 4-Nitrophenoximethyl, Phenylthiomethyl, 4-Methylphenylthiomethyl und 4-tert.-Butylphenylthiomethyl;

γ) $C_3$-$C_7$-Cycloalkyl wie Cyclopropyl, Cyclobutyl, Cyclopentyl, Cyclohexyl und Cycloheptyl;

δ) Phenyl, durch Alkyl, Alkoxi oder Nitro substituiertes Phenyl wie 2-, 3- und 4-Methylphenyl, 2-, 3- und 4-Ethylphenyl, 2-, 3- und 4-n- oder -iso-Propylphenyl, 2-, 3- und 4-n- oder -iso-Butylphenyl, 4-Dodecylphenyl, 4-Methoxiphenyl, 4-Ethoxiphenyl, 4-n- oder -i-Propoxiphenyl und 4-n- oder -iso-Butoxiphenyl;

ε) einen Rest der Formel $-CH_2-PO(OR^{23})_2$, worin der Rest $R^{23}$ Methyl, Ethyl, n- oder iso-Propyl und n- oder iso-Butyl bedeutet; und

vi) die Gruppe

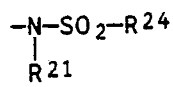

worin der Rest $R^{21}$ $C_1$-$C_4$-Alkyl wie Methyl, Ethyl und Propyl oder vorzugsweise Wasserstoff bedeutet und der Rest $R^{24}$ für die folgenden Reste steht:

α) $C_1$-$C_{12}$-Alkyl wie Methyl, Ethyl, Propyl, Butyl, Pentyl, Hexyl, Octyl, Nonyl, Decyl und Dodecyl; oder

ß) Phenyl, durch $C_1$-$C_{12}$-Alkyl substituiertes Phenyl wie 2-, 3- und 4-Methylphenyl, 2-, 3- und 4-Ethylphenyl, 2-, 3- und 4-Isopropylphenyl, 2-, 3- und 4-Isobutylphenyl, 4-Pentylphenyl, 4-Hexylphenyl, 4-Octylphenyl, 4-Nonylphenyl, 4-Decylphenyl und 4-Dodecylphenyl.

Für den Rest Y kommt außerdem $C_1$-$C_4$-Alkylamino wie N-Methylamino, N-Ethylamino, N-Propylamino und N-Butylamino in Betracht, wenn die Reste $R^{18}$ und $R^{19}$ $C_1$-$C_4$-Alkyl sind.

Außerdem kann der Rest Y N,N-Di-$C_1$-$C_4$-Alkylamino wie N,N-Dimethylamino, N,N-Diethylamino, N,N-Dipropylamino und N,N-Dibutylamino oder N-Pyrrolidinyl, N-Piperidinyl, N-Morpholinyl oder N′-$C_1C_4$-Alkylpiperazinyl sein, wenn die Gruppe

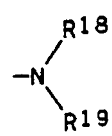

die gleiche Bedeutung hat.

Der Rest Z steht vorzugsweise für Wasserstoff.

Der Rest Z kann auch für Methoxi oder Ethoxi stehen, wenn die Reste $R^{18}$ und $R^{19}$ $C_1$-$C_4$-Alkyl oder Allyl sind und der Rest Y die Gruppe

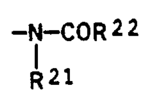

ist.

Von den Insoindoleninfarbstoffen x sind solche der allgemeinen Formel Xa

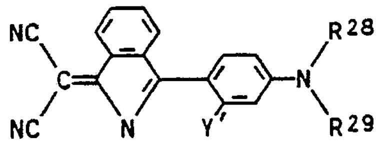

(Xa)

bevorzugt.

In der Formel Xa steht der Rest

Y′ für Wasserstoff, Hydroxy, Methyl oder die Gruppen -O-$COR^{25}$, -NH-$COR^{26}$ oder -NH-$SO_2R^{27}$, worin der Rest R lineares oder verzweigtes $C_1$-$C_{12}$-Alkyl, Methoximethyl, gegebenenfalls im Phenoxi durch Methoxi oder $C_1$-$C_4$-Alkyl substituiertes Phenoximethyl, gegebenenfalls im Phenyl durch $C_1$-$C_4$-Alkyl substituiertes Phenylthiomethyl, Benzyl, Phenylethyl, Phenyl, $C_1$-$C_{12}$-Alkylphenyl, $C_6H_5$-CH = CH-, $C_3$-$C_7$-Cycloalkyl, $C_1$-$C_4$-Alkoxiphenyl, -$CH_2$-PO$(OCH_3)_2$, -$CH_2$-PO$(OC_2H_5)_2$, -$CH_2$-PO$(OC_3H_7)_2$ oder -$CH_2$-PO$(OC_4H_9)_2$; der Rest $R^{27}$ $C_1$-$C_{12}$-Alkyl, Phenyl oder durch $C_1$-$C_{12}$-Alkyl substituiertes Phenyl und der Rest $R^{25}$ $C_1$-$C_6$-Alkyl oder Phenyl bedeuten; und die Reste

$R^{28}$ und $R^{29}$ stehen für $C_1$-$C_4$-Alkyl, 2-Hydroxyethyl, $C_1$-$C_4$-Alkoxiethyl, 2-Phenoxiethyl, 2-Chlorethyl, 2-Cyanethyl, 2-(Carbomethoxi)ethyl, 2-(Carboethoxi)-ethyl, 2-(Propanoyloxi)-ethyl, 2-(Ethanoyloxi)-ethyl, Allyl oder Benzyl, wobei die Reste $R^{28}$ und $R^{29}$ gleich oder verschieden sein können; oder der Rest

$R^{28}$ steht für Wasserstoff oder Methyl und der Rest

$R^{29}$ steht für Phenyl, durch Methyl, Ethyl, Methoxi oder Ethoxi substituiertes Phenyl oder Cyclohexyl; oder die Gruppe

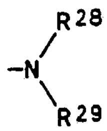

ist N-Pyrrolidinyl, N-Piperidinyl, N-Morpholinyl, Pyrazolidin-1-yl, $\Delta^2$-3-Methyl-pyrazolin-1-yl, $\Delta^2$-3,5,5-Trimethylpyrazolin-1-yl, $\Delta^2$-3-Methyl-5-phenyl-pyrazolin-1-yl, $\Delta^3$-3,5-Diphenyl pyrazolin-1-yl oder N-Imidazolyl.

Außerdem kommen die Isoindoleninfarbstoffe Xa in Betracht, in der die Gruppe

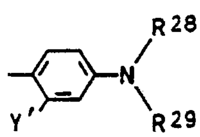

für

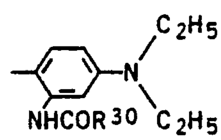

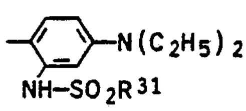

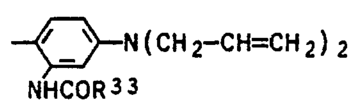

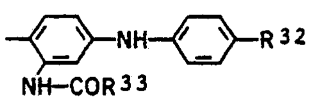

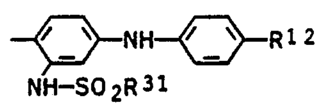

steht, worin der Rest

$R^{30}$ lineares oder verzweigtes $C_1$-$C_{12}$-Alkyl, Methoximethyl, Phenoximethyl, das im Phenoxi gegebenenfalls durch Methoxi oder $C_1$-$C_4$-Alkyl substituiert ist, $C_3$-$C_7$-Cycloalkyl, Phenyl, durch $C_1$-$C_4$-Alkoxi oder $C_1$-$C_4$-Alkyl substituiertes Phenyl; Benzyl, Phenylethyl oder $C_6H_5$-CH = CH-; der Rest

$R^{31}$ $C_1$-$C_{12}$-Alkyl, Phenyl oder $C_1$-$C_{12}$-Alkylphenyl; der Rest

$R^{32}$ Wasserstoff, Methyl, Ethyl, Methoxi oder Ethoxi und der Rest

$R^{33}$ $C_1$-$C_6$-Alkyl bedeuten.

Beispiele ganz besonders vorteilhafter, erfindungsgemäß zu verwendender Isoindoleninfarbstoffe Xa sind die Isoindoleninfarbstoffe Xa-1 bis Xa-9.

Xa-1
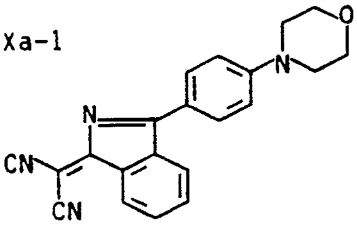

Xa-2
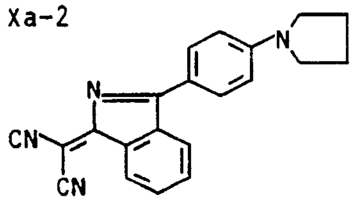

Xa-3
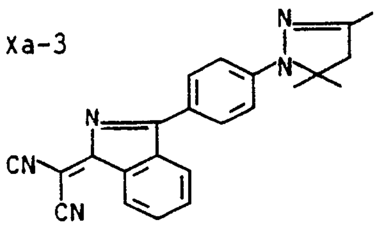

Xa-4
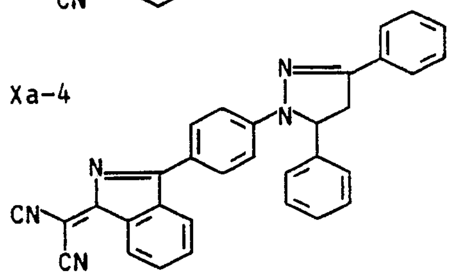

Xa-5
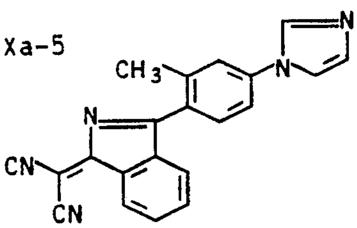

Xa-6
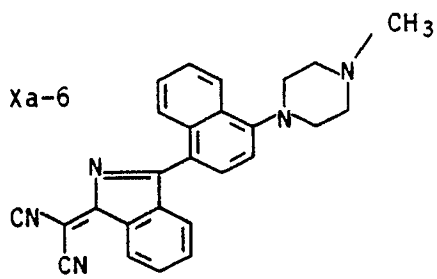

Xa-7
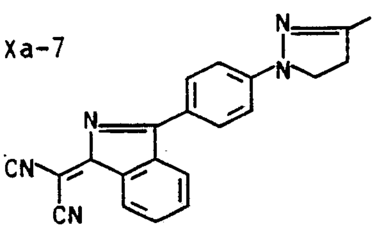

Xa-8
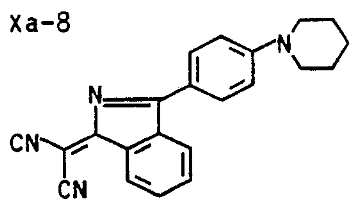

Xa-9
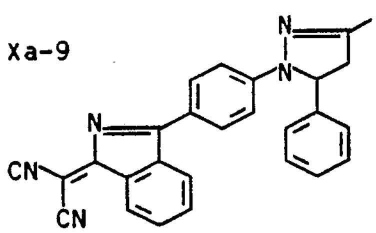

Von diesen wiederum ist der Isoindoleninfarbstoff Xa-3 besonders hervorzuheben.

Beispiele erfindungsgemäß zu verwendender Isoindoleninfarbstoffe X und Xa sowie ihre Herstellweise sind aus der EP-A-0 017 132 bekannt. Die anderen Isoindoleninfarbstoffe Xa lassen sich gleichfalls nach der bekannten Herstellweise gewinnen. Ihre Verwendung als Sensibilisatoren ($b_2$) in elektrophotographischen Aufzeichnungselementen geht aus der EP-A-0 017 132 nicht hervor.

Die erfindungsgemäß zu verwendenden Sensibilisatoren ($b_2$) sind in der neuen photoleitenden Schicht (B) neben den Bestandteilen ($b_1$), ($b_3$) und ggf. ($b_4$) in einer Menge von 0,05 bis 20, vorzugsweise 0,1 bis 18, vorteilhafterweise 0,5 bis 15 und insbesondere 1,0 bis 10 Gew.-Teilen pro 100 Gew.-Teilen Bindemittel ($b_1$) enthalten.

Werden weniger als 0,05 Gew.-Teile dieser Sensibilisatoren ($b_2$) pro 100 Gew.-Teilen ($b_1$) zur neuen photoleitenden Schicht (B) hinzugegeben, so läßt deren Lichtempfindlichkeit zu wünschen übrig. Werden dagegen mehr als 20 Gew.-Teile ($b_2$) pro 100 Gew.-Teilen ($b_1$) angewendet, so kann unter Umständen die Dunkelleitfähigkeit unerwünschterweise stark ansteigen und die mechanische Festigkeit der neuen photoleitenden Schicht (B) deutlich absinken, was trotz der vorzüglichen sonstigen Eigeschaften der neuen photoleitenden Schicht (B) im allgemeinen nicht in Kauf genommen werden kann. Der Bereich von 0,05 bis 20 Gew.-Teilen ($b_2$) pro 100 Gew.-Teilen ($b_1$) stellt somit ein Optimum dar, innerhalb dessen Grenzen die Menge an ($b_2$) frei gewählt und dem jeweiligen technischen Problem, dem jeweiligen Anwendungszweck und/oder der jeweiligen stofflichen Zusammensetzung der erfindungsgemäßen panchromatischen elektrophotographischen Aufzeichnungselemente weiter angepaßt wird. Hierbei richtet sich die gewählte Menge an Sensibilisatoren ($b_2$), insbesondere nach der Menge an Ladungsträger transportierenden Verbindungen oder Photoleitern ($b_3$) und danach, ob weitere übliche und bekannte als Zusatzstoffe ($b_4$) verwendete sonstige Sensibilisatoren in der photoleitenden Schicht (B) enthalten sind.

Die erfindungsgemäß zu verwendenden Sensibilisatoren ($b_2$) werden auch als separat vorliegende Sensibilisatorschicht(en) ($b_2$) verwendet, wodurch neue photoleitende Mehfachschichten (B) resultieren von denen die neuen photoleitenden Doppelschichten (B) von Vorteil sind. Bei diesen neuen photoleitenden Doppelschichten (B) liegt die Einzelschicht aus einem oder mehreren Sensibilisatoren ($b_2$) sowie ggf. einem oder mehreren Bindemitteln ($b_1$) dem elektrisch leitenden Träger (A) direkt auf und ist mit einer Einzelschicht bedeckt, welche Bindemittel ($b_1$), Photoleiter ($b_2$) und ggf. Zusatzstoffe ($b_4$) enthält: Die Dicke der neuen Sensibilisatorschicht ($b_2$) liegt bei 0,005 bis 5, vorzugsweise 0,05 bis 3, vorteilhafterweise 0,08 bis 2 und insbesondere 0, 1 bis 0,9 µm. Sofern die neue Sensibilisatorschicht ($b_2$) dünner als 0,005 µm ist, kann sie unter Umständen die Oberfläche des Trägers (A) nicht mehr vollständig und gleichmäßig bedecken und ihre Sensibilisatorwirkung, d.h. ihre Ladungsträger erzeugende Wirkung, kann für eine gegebenes technisches Problem nicht mehr ausreichend sein. Ist die neue Sensibilisatorschicht ($b_2$) dicker als 5 µm, so kann dies den Abfluß elektrischer Ladungen bei der bildmäßigen Belichtung mit aktinischem Licht erschweren. Hinsichtlich der Sensibilisierung, d.h. der Erzeugung einer ausreichenden Anzahl an Ladungsträgern, der Gleichmäßigkeit der Dicke, der Haftfestigkeit auf dem Träger (A) und der Vermeidung einer gewissen Sperrwirkung stellt somit der Dickenbereich von 0,005 bis 5 µm ein Optimum dar. Innerhalb dieses Bereichs wird die Dicke der neuen Sensibilisatorschicht ($b_2$) frei gewählt und dem jeweiligen technischen Problem, dem jeweiligen Anwendungszweck und/oder der jeweiligen stofflichen Zusammensetzung der erfindungsgemäßen panchromatischen elektrophotographischen Aufzeichnungselemente weiter angepaßt.

Welche neue photoleitende Schicht (B), sei es die neue photoleitende Einzelschicht (B) oder die neue photoleitende Doppelschicht (B), man für den Aufbau der erfindungsgemäßen panchromatischen elektrophotographischen Aufzeichnungselemente im einzelnen auswählt, richtet sich in erster Linie nach dem Verwendungszweck der erfindungsgemäßen panchromatischen elektrophotographischen Aufzeichnungselemente.

Unabhängig davon, welche neue photoleitende Schicht (B) man im einzelnen verwendet, enthält diese obligatorisch

(i) einen der Farbstoffe Viktoriablau FB (C.I. 44045), Kristallviolett FN (C.I. 42555), Rhodamin FB (C.I. 45170), Astrazonorange R (C.I. 48040) oder Astrazonorange G (C.I. 48035) oder zwei, drei oder vier dieser Farbstoffe oder alle fünf gemeinsam

neben

(ii) einem oder mehreren der Naphtholactamfarbstoffe I und/oder einem oder mehreren der Isoindoleninfarbstoffe X oder Xa.

als Sensibilisatoren ($b_2$).

Beispiele für Sensibilisatoren ($b_2$) bzw. Sensibilisatorkombinationen ($b_2$), welche erfindungsgemäß ganz besonders bevorzugt werden und welche einen herausragenden technischen Effekt bewirken, sind

- Viktoriablau FB + Rhodamin FB mit dem Haphtholactamfarbstoff I-71, I-77, I-85, I-96 oder I-97;
- Viktoriablau FB + Rhodamin FB + Astrazonorange G mit dem Naphtholactamfarbstoff I-71, I-77, I-96 oder I-97;
- Kristallviolett FN + Astrazonorange G mit dem Naphtholactamfarbstoff I-17, I-77, I-85, I-96 oder I-97;
- Rhodamin FB + Astrazonorange G mit dem Naphtholactamfarbstoff I-97 und dem Isoindoleninfarbstoff Xa-3;
- Rhodamin FB mit dem Naphtholactamfarbstoff I-96 und dem Isoindoleninfarbstoff Xa-3;
- Kristallviolett FN + Astrazonorange G mit dem Naphtholactamfarbstoff I-97 und dem Isoindoleninfarbstoff Xa-3 oder mit dem Naphtholactamfarbstoff I-85 und dem Isoindoleninfarbstoff Xa-3 oder mit Xa-3 alleine;
- Viktoriablau FB + Rhodamin FB mit dem Isoindoleninfarbstoff Xa-3;

oder

- Rhodamin FB mit dem Isoindoleninfarbstoff Xa-3.

Das Mengenverhältnis der Sensibilisatoren ($b_2$) untereinander kann breit variieren und richtet sich in erster Linie nach dem Anwendungszweck oder erfindungsgemäßen panchromatischen elektrophotographischen Aufzeichnungselemente. Erfindungsgemäß von Vorteil ist ein Verhältnis von

- Viktorialblau FB, Kristallviolett FN, Rhodamin FB, Astrazonorange R und/oder Astrazonorange G

zu

- den Naphtholactamfarbstoffen I und/oder den Isoindoleninfarbstoffen X oder Xa

von 10 zu 1 bis 1 zu 1, vorzugsweise 8 zu 1 bis 2 zu 1, vorteilhafterweise 7 zu 1 bis 2,5 zu 1 und insbesondere 6,5 zu 1 bis 3 zu 1. In speziellen Fällen können indes auch andere Mengenverhältnisse, wie etwa ein Verhältnis von 1 zu 6 bis 1 zu 1,5 insbesondere 1 zu 5,5 bis 1 zu 2, angewandt werden, sofern es für die betreffende Sensibilisatorkombination ($b_2$) und/oder den betreffenden Anwendungszweck von besonderem Vorteil ist.

Der zweite wesentliche Bestandteil der neuen photoleitenden Schichten (B) des erfindungsgemäßen panchromatischen elektrophotographischen Aufzeichnungselements ist das Bindemittel ($b_1$).

Die Art der geeigneten Bindemittel ($b_1$) für die neuen photoleitenden Schichten (B) richtet sich nach dem beabsichtigten Verwendungszweck der erfindungsgemäßen panchromatischen elektrophotographischen Aufzeichnungselemente. Für den Kopiersektor eignen sich z.B. Celluloseether, Polyesterharze, Polyvinylchloride, Polycarbonate, Copolymerisate, wie Styrol-Maleinsäureanhydrid-Copolymerisate oder Vinylchlorid-Maleinsäureanhydrid-Copolymerisate, oder Mischungen solcher Bindemitteln ($b_1$). Bei ihrer Auswahl spielen ihre filmbildenden und elektrischen Eigenschaften, ihre Haftfestigkeit auf dem Trägermaterial und ihre Löslichkeitseigenschaften eine besondere Rolle. Insbesondere bei erfindungsgemäßen panchromatischen elektrophotographischen Aufzeichnungselementen für die Herstellung von Druckplatten, insbesondere von Offsetdruckdruckplatten, sind solche Bindemittel ($b_1$) besonders geeignet, die in alkalischen, wäßrigen oder alkoholischen Lösungsmitteln löslich sind. Dies sind vor allem Bindemittel ($b_1$) mit alkalilöslich machenden Gruppen wie Anhydrid-, Carboxyl-, Sulfonsäure-, Phenol- oder Sulfonimid-Gruppen. Bevorzugt sind Bindemittel ($b_1$), insbesondere solche mit hohen Säurezahlen, die in basischen wäßrig-alkoholischen Entwicklerlösungsmitteln leicht löslich sind und ein mittleres Molekulargewicht (Gewichtsmittel), von 800 bis 150 000 und insbesondere 1 200 und 80 000 aufweisen. Geeignet sind z.B. Copolymerisate aus Methacrylsäure und Methacrylsäureestern, besonders Copolymerisate aus Styrol und Maleinsäureanhydrid und aus Styrol, Methacrylsäure und Methacrylsäureestern, soweit sie die vorstehende Löslichkeitsbedingung aufweisen. Obwohl bekanntermaßen Bindemittel ($b_1$) mit freien Carboxylgruppen die Dunkelleitfähigkeit von photoleitenden Schichten allgemein in unerwünschter Weise erhöhen und dadurch zu schlechten Betonerungsergebnissen führen können, lassen sich solche Bindemittel leicht an die verwendeten Ladungstransportverbindungen oder Photoleiter ($b_3$) anpassen. So hat sich gezeigt, daß Copolymerisate aus Styrol, Maleinsäureanhydrid und Acryl- oder Methacrylsäure, die einen Anteil von einpolymerisiertem Maleinsäureanhydrid von 5 bis 50 Gew.% und einen Anteil von einpoly merierter Acryl- oder Methacrylsäure von 5 bis 35 und insbesondere 10 bis 30 Gew.% aufweisen, neue photoleitende Schichten (B) mit niedriger Dunkelleitfähigkeit ergeben. Sie weisen eine hervorragende Löslichkeit in Entwicklerlösungsmitteln aus z.B. 75 Gew.% Wasser, 23 Gew.% Isobutanol und 2 Gew.% Soda auf.

Der dritte wesentliche Bestandteil der neuen photoleitenden Schicht (B) des erfindungsgemäßen panchromatischen elektrophotographischen Aufzeichnungselements ist die Ladungsträger transportierende Verbindung oder der Photoleiter ($b_3$). Hierbei handelt es sich um die auf dem in Rede stehenden technischen Gebiet üblichen und bekannten niedermolekularen Oxazolderivate (DE-B-11 20 875), Oxdiazolderivate (DE-B-10 58 836), Triazolderivate (DE-B-10 60 260), Azomethine (US-A-3 041 165), Pyrazolinderivate (DE-B-10 60 714), Imidazolderivate (DE-B-11 06 599), Arylamine (DE-B-27 12 557), 1,3-Dithiolderivate (DE-B-33 38 204), Benzotriazolderivate (EP-A-0 131 292), Triazolylpyridinderivate (EP-A-0 150 419), Pyrazolotriazolderivate (EP-A-0 156 308), Triphenyltriazolderivate (EP-A-0 162 216) oder Hydrazonderivate (EP-A-0 001 599, DE-A-29 19 791 ≙ US-A-4 367 273 und US-A-4 278 747, GB-A-2 088 074 oder DE-A-31 40 571) oder um die gleichfalls üblichen und bekannten oligomeren oder polymeren Photoleiter Poly(N-vinylcarbazol) oder Arylaminpolymere (EP-A-0 052 961).

Die neuen photoleitenden Schichten (B) enthalten einen oder mehrere dieser Photoleiter ($b_3$) in einer Menge von 40 bis 150, vorzugsweise 40 bis 130, vorteilhafterweise 50 bis 120 und insbesondere 60 bis 100 Gew.-Teilen pro 100 Gew.-Teile Bindemittel ($b_1$).

Darüber hinaus kann die neue photoleitende Schicht (B), bezogen auf ihre Gesamtmenge, bis zu 30 Gew.% vorzugsweise 25 Gew.% vorteilhafterweise 20 Gew.% und insbesondere 15 Gew.% an Zusatzstoffen enthalten.

Als Zusatzstoffe kommen im wesentlichen nur solche in Betracht, welche die optische Transparenz der neuen photoleitenden Schicht (B) nicht beeinträchtigen. Dabei können die Zusatzstoffe die unterschiedlichsten Funktionen haben. Beispielsweise können Verlaufmittel wie Silikonöle, Netzmittel, insbesondere nichtionogene Substanzen, Weichmacher auf der Basis chlorierter Kohlenwasserstoffe oder auf der Basis von Phthalsäureestern, Haftvermittler, nicht molekulardispers einmischbare organische und anorganische Füllstoffe und Verstärkungsfüllstoffe und/oder die aus der EP-A-0 131 215 bekannten Metallacetylacetonate zur neuen photoleitenden Schicht (B) zusätzlich hinzugegeben werden. Darüber hinaus kann die neue photoleitende Schicht (B), sofern sie als photoleitende Mehrfachschicht (B) ausgebildet ist, in der oder den separaten Sensibilisator schicht(en) ($b_2$) Ladungsträger erzeugende Pigmente aus den Klassen der Azo-, der Phthalocyanin-, der Isoindolin- und/oder der Perylenfarbstoffe enthalten. Diese Pigmente können indes auch als weitere zusätzliche separate Sensibilisatorschicht vorliegen.

Demnach besteht die neue photoleitende Schicht (B), bezogen auf ihre Gesamtmenge, aus

- 70 bis 100, vorzugsweise 75 bis 100, vorteilhafterweise 80 bis 100 und insbesondere 85 bis 100 Gew.% eines panchromatischen photoleitenden Gemischs (B) aus den Bestandteilen ($b_1$), ($b_2$) und ($b_3$)

und aus

- 0 bis 30, vorzugsweise 0 bis 25, vorteilhafterweise 0 bis 20 und insbesondere 0 bis 15 Gew.% an Zusatzstoffen ($b_4$).

Hierbei besteht das panchromatische photoleitende Gemisch (B) aus

- 100 Gew.-Teilen eines Bindemittels ($b_1$) oder mehrerer Bindemittel ($b_1$),
- 0,05 bis 20, vorzugsweise 0, 1 bis 18, vorteilhafterweise 0,5 bis 15 und insbesondere 1,0 bis 10 Gew.-Teilen einer erfindungsgemäß zu verwendenden Sensibilisatorkombination ($b_2$) und 40 bis 150, vorzugsweise 40 bis 130, vorteilhafterweise 50 bis 120 und insbesondere 60 bis 100 Gew.-Teilen eines Photoleiters ($b_3$) oder mehrer Photoleiter ($b_3$).

Sofern die neue photoleitende Schicht (B) nicht als Mehrfachschicht sondern als Einzelschicht ausgebildet ist, liegt ihre Dicke bei 0,5 bis 40, vorzugsweise 0,8 bis 25, vorteilhafterweise 1 bis 20 und insbesondere 1,5 bis 15 µm.

Sofern die neue photoleitende Schicht (B) als Mehrfach- insbesondere aber als Doppelschicht ausgelegt ist, liegt die Dicke der die Sensibilisatoren ($b_2$) enthaltenden Sensibilisatorschicht ($b_2$), wie vorstehend aufgeführt, bei 0,005 bis 5, vorzugsweise 0,05 bis 3, vorteilhafterweise 0,08 bis 2 und insbesondere 0,1 bis 0,9 µm, und die Gesamtdicke der neuen photoleitenden Doppelschicht (B) liegt bei 2 bis 30, vorzugsweise 3 bis 25, vorteilhafterweise 3,5 bis 20 und insbesondere 5 bis 15 µm.

Neben der neuen photoleitenden Schicht (B) ist der elektrisch leitende Träger (A) der weitere wesentliche Bestandteil des erfindungsgemäßen panchromatischen elektrophotographischen Aufzeichnungselements. Hierfür sind grundsätzlich alle elektrisch leitfähigen Trägermaterialien verwendbar, sofern sie zu dimensionsstabilen dünnen Platten oder Folien verarbeitet werden können. Je nach Verwendungszweck der erfindungsgemäßen panchromatischen elektrophotographischen Aufzeichnungselemente werden Aluminium-, Zink-, Magnesium-, Kupfer-, Stahl- oder Mehrmetallplatten, Polymerfolien mit metallisierter Oberfläche wie aluminiumbedampfte Polyethylenterephthalatfolien oder elektrisch leitende Spezialpapiere verwendet. Hierbei sind insbesondere die rohen oder vorbehandelten Aluminiumbleche oder -folien bevorzugt, wie sie für Offsetdruckplatten typisch sind. Dabei umfaßt die Vorbehandlung der Aluminiumbleche oder - folien eine chemische, mechanische oder elektrochemische Aufrauhung der Oberfläche und/oder eine anodische Oxidation unter Bildung einer porösen Aluminiumoxidschicht, ggf. gefolgt von einer Versiegelung der betreffenden Oxidschicht. Im allgemeinen sind die Träger (A) - je nach Verwendungszweck der Aufzeichnungselemente - 50 µm bis 1,5 mm, insbesondere 80 µm bis 0,6 mm dick.

Darüber hinaus können die erfindungsgemäßen panchromatischen elektrophotographischen Aufzeichnungselemente mindestens eine weitere Schicht enthalten, welche der Funktion der Aufzeichnungselemente dienlich ist. Bei dieser oder diesen weiteren Schicht(en) kann es sich um eine der vorstehend beschriebenen, bekannten, zusätzlichen Sensibilisatorschichten handeln, welche zwischen dem Träger (A) und der neuen photoleitenden Schicht (B) angeordnet sind. Desweiteren können die aus der DE-B-25 04 545 bekannten Schichten aus z.B. teilchenförmigen Titandioxid, Zinkoxid, α-Eisen(III)oxid, Bariumtitanat, Aliminiumoxid oder Ceroxid verwendet werden. Außerdem kommen Schichten aus anorganischen Photoleitern wie Selen oder Cadiumsulfid als zusätzliche Bestandteile der Aufzeichnungselemente in Betracht. Darüber hinaus können die aus der EP-A-0 046 960 bekannten Deckschichten aus Siliziummonoxid, Magnesiumfluorid oder Calciumfluorid mitverwendet werden.

Die Herstellung des erfindungsgemäßen panchromatischen elektrophotographischen Aufzeichnungselements weist keine methodischen Besonderheiten auf, sondern die Herstellung der neuen photoleitenden Schicht (B) erfolgt nach den üblichen und bekannten Methoden der Herstellung dünner organischer Schichten, und die Herstellung der elektrisch leitenden Träger (A) erfolgt nach den üblichen und bekannten Methoden der Herstellung dünner Metallbleche oder -folien und metallbedampfter Polymerfolien.

Bei der Herstellung der neuen photoleitenden Schichten (B) werden in einer vorteilhaften Verfahrensweise die Bestandteile der neuen photoleitenden Schichten (B) in geeigneten Lösungsmitteln aufgelöst, und die resultierenden Lösungen werden auf die Träger (A) so ausgegossen, daß nach dem Trocknen der Naßschichten die neuen photoleitenden Schichten (B) in der gewünschten gleichmäßigen Dicke resultieren. Sofern die neuen photoleitenden Schichten (B) als Doppel- oder Mehrfachschichten ($b_2$) ausgelegt werden sollen, werden zunächst die Sensibilisatorschichten ($b_2$) in der gewünschten Dicke und Anzahl durch Gießen aus Lösung und Trocknen der Naßschichten auf der Oberfläche der Träger (A) erzeugt. Hiernach werden diese Sensibilisatorschichten ($b_2$) mit Schichten aus den Bestandteilen ($b_1$), ($b_3$) und ggf. ($b_4$) durch Gießen aus Lösung und Trocknen der Naßschichten bedeckt, wobei darauf geachtet wird, daß die hierbei verwendeten Lösungsmittel die vorhandenen Sensibilisatorschichten ($b_2$) nicht beschädigen. Die Herstellung der betreffenden Gießlösungen erfolgt mit Hilfe der üblichen und bekannten Misch- und Lösungstechniken.

Sofern das erfindungsgemäße panchromatische elektrophotographische Aufzeichnungselement außer der neuen photoleitenden Schicht (B) weitere Schichten enthalten soll, werden diese mit Hilfe von Methoden erzeugt, welche für die Herstellung der jeweiligen Schichten üblich, bekannt und charakteristisch sind. Selbstverständlich richtet sich hierbei die Reihenfolge der Durchführung der einzelnen Verfahrensschritte nach dem gewünschten Aufbau des Aufzeichnungselements, bzw. ergibt sich die Reihenfolge hieraus zwingend.

Das erfindungsgemäße panchromatische elektrophotographische Aufzeichnungselement weist zahlreiche hervorragende Eigenschaften auf, welche nach Art und Anzahl mittels bekannter Aufzeichnungselemente bislang zugleich nicht realisiert werden konnten. Diese bisher nicht erzielbare Kombination hervorragender Eigenschaften bewirkt einen besonderen unerwarteten technischen Effekt, welcher sich nicht nur bei den erfindungsgemäßen Aufzeichnungselementen selbst, sondern gerade auch bei den hieraus hergestellten Folgeprodukten - den Trommeln in Photokopiergeräten, den Offsetdruckplatten und den Photoresistmustern - und nicht zuletzt bei den hiermit hergestellten Photokopien, Druckerzeugnissen und Leiterplatten vorteilhaft bemerkbar macht.

So weist das erfindungsgemäße panchromatische elektrophotographische Aufzeichnungselement eine sehr niedrige Dunkelleitfähigkeit, verbunden mit einer hohen elektrostatischen Aufladbarkeit, einer besonders hohen Empfindlichkeit gegenüber aktinischem Licht und vorzüglichen elektrokinetischen Eigenschaften, auf. Dieses Eigenschaftsprofil bewirkt eine hervorragende, äußerst detailgetreue, kontrastreiche Wiedergabe von Bildvorlagen in kürzerer Zeit als es bisher möglich war, was insbesondere für die betriebliche Praxis eines reprographischen Unternehmens ein besonders bedeutsamer Vorteil ist.

Überdies neigt das bildmäßig belichtete, erfindungsgemäße panchromatische elektrophotographische Aufzeichnungselement überhaupt nicht zum Tonen in den Nichtbildbereichen, was die kontrastreiche Wiedergabe kritischer feiner Bildelemente in Bildvorlagen, wie etwa die Wiedergabe feiner Rasterpunkte in lichten Tonwertbereichen, erheblich verbessert oder gar erst ermöglicht. Trotz seiner hohen Empfindlichkeit gegenüber aktinischem Licht ist das erfindungsgemäße panchromatische elektrophotographische Aufzeichnungselement einfach handhabbar, so daß hierfür keine besondere Vorsichtsmaßnahmen zu ergreifen sind. Wegen dieser hohen Empfindlichkeit gegenüber aktinischem Licht und dem hierdurch induzierten, besonders raschen Photoabfall und weil hierbei auch im Nanosekundenbereich das Gesetz

$I \cdot t = \text{konstant}$

($I$ = Lichtintensität; $t$ = Zeit)

Gültigkeit hat, kann das erfindungsgemäße panchromatische elektrophotographische Aufzeichnungselement in vollem Umfang die Vorteile der modernen Belichtungsmethoden ausschöpfen. Es eignet sich daher nicht nur für die übliche bildmäßige Belichtung mittels Glühlampen und Leuchtröhren, welche Licht im ultravioletten und/oder sichtbaren Wellenlängenbereich ausstrahlen, sondern auch für die bildmäßige Belichtung mittels impulsmodulierter oder analog modulierter Laserstrahlen, welche über das erfindungsgemäße Aufzeichnungselement hinweggeführt werden. Somit können für die bildmäßige Belichtung die modernen, computergesteuerten Laserbelichtungsgeräte verwendet werden, wobei diese aufgrund der vorteilhaften Eigenschaften des erfindungsgemäßen Aufzeichnungselements ganz besonders hervorragende Abbildungsergebnisse liefern. Hierbei können nicht nur Belichtungsgeräte, welche mit Laserlicht im sichtbaren Wellenlängenbereich arbeiten, verwendet werden, sondern auch solche, die Laserlicht im infraroten Wellenbereich verwenden. Hierdurch ergibt sich wegen der besonderen Eigenschaften des erfindungsgemäßen Aufzeichnungselements unmittelbar der weitere Vorteil, daß nämlich für die Belichtung mit rotem oder infrarotem Laserlicht die bekanntermaßen kleinen, preiswerten und leicht herzustellenden Halbleiterlaser aus beispielsweise GaAlAs oder GaAlInP verwendet werden können, was das Belichtungsverfahren als solches insgesamt erheblich rationeller, variabler und wirtschaftlicher gestaltet.

Darüber hinaus erscheint das erfindungsgemäße panchromatische elektrophotographische Aufzeichnungselement dem menschlichen Auge als dunkelfarbig oder schwarz, wobei unter dunkelfarbig Farbtöne wie dunkelblau, dunkelrot, dunkelgrün, dunkelviolett oder dunkelbraun zu verstehen sind. Ein auf dem

erfindungsgemäßen Aufzeichnungselement erzeugtes latentes Ladungsbild kann daher nicht nur mit den üblichen und bekannten flüssigen oder festen schwarzen Tonern, sondern mit ganz besonderem Vorteil mit flüssigen oder festen hellen Tonern betonert werden. Hierbei ist unter "hellen Tonern" Toner mit z.B. hellgelber, hellbrauner, hellroter, hellgrüner, hellblauer oder hellvioletter Farbtönung zu verstehen. Die Verwendung dieser hellen Toner eröffnet die Möglichkeit, das kontrastreiche betonerte Ladungsbild mit dem bloßen Auge, d.h. visuell, zu kontrollieren, was ein bedeutungsvoller Fortschritt auf dem Gebiet der elektrophotographischen Aufzeichnungselemente ist. Dieser bedeutungsvolle Fortschritt ist unmittelbar auf die besonderen vorteilhaften Eigenschaften des erfindungsgemäflen panchromatischen elektrophotographischen Aufzeichnungselements zurückzuführen. Zusätzliche Vorteile resultieren hierbei aus der Verwendung heller flüssiger Toner.

Beispiele für erfindungsgemäß geeignete Toner sind die üblichen und bekannten Toner wie sie z.B. in der US-A-4 661 431 beschrieben werden. Beispiele für erfindungsgemäß geeignete helle Toner sind die üblichen und bekannten Toner, denen man geeignete aufhellende Pigmente wie etwa Titandioxid oder Siliciumdioxid zugemischt hat.

Das erfindungsgemäße panchromatische elektrophotographische Aufzeichnungselement weist deutliche Vorteile bei der Verwendung im Photokopiersektor auf. So läßt es sich in einfacher Weise auf die in Photokopiergeräten üblicherweise vorhandenen Trommeln auftragen und ermöglicht in dieser Form die Herstellung exzellenter Photokopien auch von vergilbten Vorlagen in hoher Auflage und in sehr kurzer Taktzeit. Außerdem lassen sich diese Trommeln nach ihrer vorteilhaft langen Lebensdauer in einfacher Weise umweltschonend entsorgen. Die hiermit hergestellten Photokopien sind besonders kontrastreich, auch in den problematischen Bildelementen detailgetreu und in den Nichtbildbereichen unbetonert. Darüber hinaus kann bei der Verwendung heller flüssiger oder fester Toner das betonerte Ladungsbild auf der Trommel visuell kontrolliert werden, falls dies notwendig ist. Nicht zuletzt aber kann das helle Tonerbild auf eine farbige oder dunkle Oberfläche übertragen werden, beispielsweise auf braunes, gelbes, blaues, grünes, rotes oder violettes Papier, wodurch sich neue Anwendungsmöglichkeiten auf dem Photokopiersektor ergeben. Hierbei ist es besonders vorteilhaft, wenn der Farbton des jeweils verwendeten Toners mit dem Farbton der betreffenden Oberfläche stark kontrastiert.

Das erfindungsgemäße panchromatische elektrophotographische Aufzeichnungselement weist auch bei der Verwendung als Photoresist deutliche Vorteile auf. Zu diesem Anwendungszweck wird es auf Träger (A) aufgetragen, welche üblicherweise für die Herstellung von Leiterplatten verwendet werden. Hiernach wird es mit aktinischem Licht bildmäßig belichtet, wobei auch hier die vorstehend genannten Vorteile moderner Belichtungsmethoden voll zum Tragen kommen. Hiernach wird auf dem belichteten Aufzeichnungselement in üblicher und bekannter Weise unter Verwendung ätzmittelresistenter Toner ein Tonerbild erzeugt und durch Erhitzen fixiert, wonach man die unbetonerten Nichtbildbereiche mit geeigneten Entwicklungslösungsmitteln entfernt. In dieser Weise erhält man ein hervorragendes detailgetreues Photoresistmuster, welches frei von Lochfraß, Unterwaschungen der Reliefflanken und Kantenausbrüchen ist, hervorragend auf dem Träger (A) haftet und welches gegenüber den üblicherweise verwendeten Ätzchemikalien und Galvanikbädern sehr gut beständig ist. Mit Hilfe dieses Verfahrens werden - weitgehend ohne Ausschuß - fehlerfreie Leiterplatten erhalten, deren Lebensdauer vorteilhaft lang ist. Verwendet man hierbei ätzmittelresistente, flüssige oder feste helle Toner, insbesondere aber flüssige, so kann das latente Ladungsbild vor dem Fixieren visuell kontrolliert werden. Dies bedeutet für die industrielle Produktion eine zusätzliche Möglichkeit der Qualitätskontrolle, wodurch der ohnedies schon vorzügliche Verfahrenserfolg noch weiter gesteigert wird, so daß er den bislang als möglich erachteten weit übertrifft.

Besonders deutliche Vorteile weist das erfindungsgemäße panchromatische elektrophotographische Aufzeichnungselement bei seiner Verwendung für die Herstellung von Offsetdruckplatten auf, welche in an sich üblicher und bekannter Weise durch

1. elektrisch negatives oder elektrisch positives Aufladen des erfindungsgemäßen panchromatischen elektrophotographischen Aufzeichnungselements mittels einer Hochspannungscorona,

2. bildmäßiges Belichten des erfindungsgemäßen panchromatischen elektrophotographischen Aufzeichnungselements mit aktinischem Licht, wodurch ein latentes elektrostatisches Ladungsbild erzeugt wird,

3. Entwickeln des latenten elektrostatischen Ladungsbildes mittels eines Trocken- oder Flüssigtoners, wodurch ein Tonerbild resultiert,

4. Fixieren des Tonerbildes durch Erhitzen und durch

5. Wegwaschen (Entschichten) der unbetonerten Nichtbildbereiche der neuen photoleitenden Schicht (B) mittels einer geeigneten Entwicklerflüssigkeit, wodurch die hydrophile Oberfläche des Träger (A) freigelegt wird, erfolgt.

Hierbei kann das erfindungsgemäße panchromatische elektrophotographische Aufzeichnungselement mit einer besonders hohen Spannung beaufschlagt und binnen kurzer Zeit bildmäßig belichtet werden,

wobei die Vorteile der modernen Belichtungsmethoden, insbesondere die Belichtung mit rotem oder infrarotem Laserlicht, in vollem Umfang ausgeschöpft werden können. Hierdurch resultieren rasch und zuverlässig völlig detailgetreue, kontrastreiche latente Ladungsbilder, welche Tonerbilder liefern, die in den Nichtbildbereichen völlig unbetonert sind. Diese reprographische Genauigkeit ermöglicht überdies die Verwendung von Tonern, welche man ansonsten nicht in Betracht gezogen hätte, wodurch das gesamte Herstellverfahren breiter variiert und besser an spezielle technische Probleme angepaßt werden kann. Nach dem Fixieren des Tonerbildes erfolgt das Entfernen der Nichtbildbereiche problemlos und ohne nachträgliche Beschädigung des Tonerbildes. Hierbei können eine Vielzahl unterschiedlicher Entwicklerlösungsmittel verwendet werden. Die Auswahl der Entwicklerlösungsmittel richtet sich dabei in erster Linie nach der stofflichen Zusammensetzung der ursprünglichen neuen photoleitenden Schicht (B), wobei die Löslichkeit oder Quellbarkeit des darin enthaltenen Bindemittels ($b_1$) der wesentliche Parameter ist. Bedingt durch die nun mögliche verbesserte gegenseitige Anpassung der Tonermaterialien und der Bestandteile der ursprünglichen neuen photoleitenden Schicht (B) können Entwicklerlösungsmittel mit erheblich stärkerem Lösevermögen und/oder Auswaschverfahren, welche mit höherem Lösungsmittel- oder Bürstendruck arbeiten, angewendet werden. Hierdurch resultiert eine kürzere Entwicklungszeit, ohne daß dabei die Bildbereiche beschädigt werden.

Darüber hinaus können bei diesen Verfahren mit ganz besonderem Vorteil flüssige oder feste, insbesondere aber flüssige helle Toner angewandt werden. Dadurch kann das kontrastreiche betonerte Ladungsbild vor dem Fixieren visuell kontrolliert werden, so daß in den seltenen Fällen, in denen es zu einer fehlerhaften Abbildung gekommen ist, bereits bei diesem Verfahrensschritt korrigierend eingegriffen werden kann und nicht erst abgewartet werden muß, bis das Verfahren ganz durchlaufen ist: Werden nämlich durch die visuelle Kontrolle vor dem Fixieren Abbildungsfehler festgestellt, so kann das Verfahren abgebrochen und das erfindungsgemäße Aufzeichnungselement wieder aufbereitet und dem Verfahren erneut zugeführt werden.

Die hiernach erhaltene Offsetdruckplatte gibt auch diejenigen Bildelemente, welche sich ansonsten nur schwer zuverlässig reproduzieren lassen, in bester Qualität wieder. Sie kann in bekannter Weise für den Offsetdruck, z.B. mittels einer Hydrophilierung und Gummierung, weiter vorbereitet werden, um die ohnedies vorzügliche Qualität der Offsetdruckplatte noch weiter zu steigern.

Beim Drucken auf einem Offsetdruckwerk mit Offsetdruckfarben vom Typ "Öl in Wasser" nehmen die druckenden Bereiche der Offsetdruckplatte die öligen Farben hervorragend an, wogegen ihre entschichteten Bereiche hervorragend wasserführend sind. Hierdurch resultiert ein ausgezeichneter Kontrast und ein äußerst präziser Druck, was insgesamt zu exzellenten Druckerzeugnissen führt. Da die Offsetdruckplatte unter den Druckbedingungen eine vorteilhaft lange Lebensdauer hat, wird überdies eine hohe Auflage erzielt.

Beispiele

Bei den folgenden Beispielen 1 bis 22 wurden die anwendungstechnischen Eigenschaften der erfindungsgemäßen Aufzeichnungselemente nach dem xerographischen Verfahren (Carlson-Prozess) bestimmt. Hierzu wurden die erfindungsgemäßen Aufzeichnungsmaterialien (Beispiele 1 bis 22) nach ihrer Herstellung in üblicher und bekannter Weise mittels einer Gleichspannungscorona von + 8,5 kV oder -8,5kV aus einem Abstand von 1 cm binnen 20 Sekunden gleichmäßig auf ein Oberflächenpotential von bis zu +1000 oder -1000 V aufgeladen und hiernach vollflächig oder bildmäßig belichtet. Selbstverständlich wurden hierbei die einzelnen Verfahrensschritte unter jeweils exakt vergleichbaren Bedingungen durchgeführt, so daß der gemessene Spannungsabfall, welcher durch die jeweils eine Sekunde währende vollfächige Belichtung induziert wurde (= Photoabfall PHA in %, usprünglicher Wert = 100 %), sowie die Werte für $E_{max}$ - (Potentialakzeptanz in kV) und $E_{min}$ (Restpotential nach der vollflächigen Belichtung in kV), die Dunkelleitfähigkeit (Potentialabfall im Dunkeln in % des ursprünglichen Werts) und $\tau_{1/2}$ (Halbwertszeit des PHA in ms) eindeutig die Vorteilhaftigkeit der erfindungsgemäßen Aufzeichnungsmaterialien belegte. Außerdem wurde die optische Dichte OD der neuen photoleitenden Schicht (B) in üblicher und bekannter Weise densitometrisch ermittelt.

Beispiele 1 bis 22

Herstellung und anwendungstechnische Eigenschaften erfindungsgemäßer panchromatischer elektrophotographischer Aufzeichnungselemente

Allgemeine Versuchsvorschrift:

Jeweils 1,088 g eines Copolymerisats, welches 52 Gew.% Styrol, 28 Gew.% Methacrylsäure und 20 Gew.% Maleinsäureanhydrid einpolymerisiert enthielt (Bindemittel $b_1$), wurden in jeweils 16 g Dimethoxiethan/Diethylenglykoldimethylether (1:1) innerhalb 30 Minuten aufgelöst. Zu den resultierenden Copolymerisatlösungen gab man jeweils 0,36 g 2,5-Bis-(4′-diethylaminophen-1′-yl)-1,3,4-oxdiazol und 0,540 g 2-[4′-N-Ethyl-N-phenylaminophen-1′-yl]-5-methoxi-benzotriazol (Photoleiter $b_3$) und rührte weitere 15 Minuten nach. Hiernach wurden die Sensibilisatoren ($b_2$) in den aus der Tabelle 1 hervorgehenden Mengen zugesetzt. Die resultierenden Lösungen wurden auf 0,30 mm dicke, elektrochemisch aufgerauhte und anodisch oxidierte Aluminiumbleche (Träger A) ausgegossen und getrocknet, so daß 5 µm dicke neue photoleitende Schichten (B) (Beispiele 1 bis 22) resultierten.

Diese Schichten (B) wurden negativ aufgeladen und hiernach mittels einer Xenonhochdrucklampe belichtet. Der hieraus resultiertende Photoabfall und die anderen charakteristischen, anwendungstechnisch relevanten Werte wurden in bekannter Weise induktiv gemessen. Die Versuchsergebnisse finden sich in der Tabelle 2.

Tabelle 1: Die erfindungsgemäßen Aufzeichnungselemente 1 bis 22; Art und Menge der jeweils verwendeten Sensibilisatoren ($b_2$)

| Bsp. Nr. | ausgewählte Sensibilisatoren ($b_2$) aus der Gruppe der Triarylmethan-, Xanthen- und Cyaninfarbstoffe (g) | Naphtholactam-farbstoffe I (g) | Isoindoleninfarb-stoffe X oder Xa (g) |
|---|---|---|---|
| 1 | Viktoriablau FB, C.I. 44045, (0,025)<br>Rhodamin FB, C.I. 45170, (0,010) | I-71 (0,006) | - |
| 2 | wie Beispiel 1 | I-77 (0,006) | - |
| 3 | wie Beispiel 1 | I-85 (0,006) | - |
| 4 | wie Beispiel 1 | I-97 (0,006) | - |
| 5 | wie Beispiel 1 | I-96 (0,006) | - |
| 6 | Viktoriablau FB, C.I. 44045, (0,025)<br>Rhodamin FB, C.I. 45170, (0,010)<br>Astrazonorange R, C.I. 48040, (0,006) | I-71 (0,006) | - |
| 7 | wie Beispiel 6 | I-77 (0,006) | - |
| 8 | wie Beispiel 6 | I-85 (0,006) | - |
| 9 | wie Beispiel 6 | I-97 (0,006) | - |
| 10 | wie Beispiel 6 | I-96 (0,006) | - |
| 11 | Astrazonorange G, C.I. 48035, (0,010) | I-71 (0,006) | - |

Tabelle 1 (Fortsetzung)

| Bsp. Nr. | ausgewählte Sensibilisatoren ($b_2$) aus der Gruppe der Triarylmethan-, Xanthen- und Cyaninfarbstoffe (g) | Naphtholactamfarbstoffe I (g) | Isoindoleninfarbstoffe X oder Xa (g) |
|---|---|---|---|
| | Kristallviolett FN, C.I. 42555, (0,025) | | |
| 12 | wie Beispiel 11 | I-77 (0,006) | - |
| 13 | wie Beispiel 11 | I-85 (0,006) | - |
| 14 | wie Beispiel 11 | I-97 (0,006) | - |
| 15 | wie Beispiel 11 | I-96 (0,006) | - |
| 16 | Rhodamin FB, C.I. 45170, (0,010) | I-97 (0,006) | Xa-3 (0,025) |
| | Astrazonorange G, C.I. 48035, (0,006) | | |
| 17 | Rhodamin FB, C.I. 45150, (0,010) | I-96 (0,006) | Xa-3 (0,025) |
| 18 | Kristallviolett FN, C.I. 42555, (0,025) | I-97 (0,006) | Xa-3 (0,006) |
| | Astrazonorange R, C.I. 48040, (0,010) | | |
| 19 | wie Beispiel 18 | I-85 (0,006) | Xa-3 (0,006) |
| 20 | wie Beispiel 18 | - | Xa-3 (0,006) |
| 21 | wie Beispiel 1 | - | Xa-3 (0,006) |
| 22 | Rhodamin FB, C.I. 45170, (0,010) | - | Xa-3 (0,025) |

Tabelle 2

| Versuchsergebnisse | | | | | | | |
|---|---|---|---|---|---|---|---|
| Beispiel Nr. | neue photoleitende Schicht (B) | | neue photoleitende Schicht (B) | | | Prüfung nach dem Carlson-Prozeß | |
| | Farbe | Optische Dichte OD (weißes Licht) | Potentialakzeptanz $E_{max}$ kV | Restpotential $E_{min}$ kV | Dunkelheitfähigkeit DLF % | Photoabfall PHA | Photohalbwertzeit $\tau_{1/2}$ ms |
| 1 | dunkelblau | 1,17 | 92 | 19,2 | 16,6 | 74,8 | 318 |
| 2 | dunkelblau | 1,14 | 60 | 16,5 | 17,6 | 66,8 | 402 |
| 3 | dunkelblau | 1,21 | 100 | 18,4 | 15,6 | 78,3 | 328 |
| 4 | dunkelblau | 1,25 | 109 | 20,4 | 16,0 | 77,7 | 329 |
| 5 | dunkelblau | 1,25 | 114 | 20,6 | 15,1 | 78,6 | 308 |
| 6 | dunkelblau | 1,29 | 91 | 15,2 | 16,5 | 80,0 | 326 |
| 7 | dunkelblau | 1,31 | 59 | 16,1 | 18,6 | 66,7 | 417 |
| 8 | dunkelblau | 1,30 | 97 | 17,0 | 16,9 | 78,9 | 324 |
| 9 | dunkelblau | 1,34 | 101 | 17,3 | 17,8 | 79,3 | 331 |
| 10 | dunkelblau | 1,30 | 103 | 17,8 | 19,0 | 78,7 | 319 |
| 11 | violett | 1,40 | 99 | 14,8 | 17,7 | 81,9 | 304 |
| 12 | violett | 1,40 | 83 | 13,2 | 16,1 | 81,1 | 357 |
| 13 | violett | 1,38 | 111 | 14,5 | 16,8 | 84,3 | 297 |
| 14 | violett | 1,34 | 111 | 14,7 | 16,2 | 84,2 | 297 |
| 15 | violett | 1,33 | 107 | 15,3 | 18,1 | 82,6 | 311 |
| 16 | dunkelrot | 0,55 | 88 | 19,6 | 28,1 | 69,2 | 387 |
| 17 | dunkelrot | 1,40 | 95 | 22,2 | 28,7 | 67,1 | 389 |
| 18 | violett | 1,40 | 96 | 16,3 | 20,8 | 78,6 | 331 |
| 19 | violett | 1,40 | 101 | 15,1 | 21,0 | 81,1 | 316 |
| 20 | violett | 1,44 | 116 | 13,7 | 23,3 | 84,6 | 316 |
| 21 | blau | 1,21 | 117 | 17,7 | 17,6 | 82,1 | 308 |
| 22 | dunkelrot | 0,46 | 106 | 23,4 | 29,7 | 68,8 | 409 |

Beispiel 23 und 24

Die Herstellung von Offsetdruckplatten aus erfindungsgemäßen panchromatischen elektrophotographischen Aufzeichnungselementen

Beispiel 1 wurde zweimal wiederholt, mit dem Unterschied, daß die beiden erfindungsgemäßen Aufzeichnungselemente nach dem Aufladen in einem Laser-Recorder der Firma Hope mit Hilfe eines Helium-Neon-Lasers (Wellenlänge λ der Hauptemission = 633 nm) bildmäßig belichtet wurden. Hierbei lag die Schreibgeschwindigkeit bei einer Bildpunktfolgefrequenz von 3,8 MHz bei 193 $m \cdot s^{-1}$, was bei einem Plattenvortrieb in 27 µm Schritten 42 $cm^2 \cdot s^{-1}$ an belichteter Fläche entsprach.

Nach der bildmäßigen Belichtung wurde das eine erfindungsgemäße Aufzeichnungsmaterial betonert, wobei man als Toner in einem Thermoplasten dispergierten Ruß verwendete (Beispiel 23).

Das andere erfindungsgemäße Aufzeichnungsmaterial wurde dagegen mit einem flüssigen hellen Toner betonert (Beispiel 24). Dieser flüssige helle Toner wurde gemäß dem Beispiel 1 der US-A-4 661 431 hergestellt, nur daß der Anteil der farbgebenden Pigmente Phthalocyanin Grün (Phthalocyanine Green) und Alkali Blau G (Alkali Blue G) verringert und zum Ausgleich dafür aufhellendes Titandioxidpigment eingearbeitet wurde. Die einfache und dennoch exakte visuelle Kontrolle der Abbildungsqualität vor dem Fixieren ergab bei Beispiel 24 eine hervorragende Abbildungsqualität, wobei die Nichtbildbereiche des erfindungsgemäßen Aufzeichnungselements 24 völlig tonerfrei waren.

Bedingt durch den geringen optischen Kontrast zwischen dem Tonerbild und der neuen photoleitenden Schicht (B) war die visuelle Kontrolle des Tonerbildes vor dem Fixieren bei Beispiel 23 mit einer gewissen Unsicherheit behaftet, so daß nach dem Betonern noch kein eindeutiges Urteil über die Abbildungsqualität gefällt werden konnte.

Nach der visuellen Kontrolle wurden die beiden resultierenden Tonerbilder durch Erhitzen auf 100 °C fixiert. Erst hiernach konnte festgestellt werden, daß auch das erfindungsgemäße Aufzeichnungselement 23 in den Nichtbildbereichen völlig tonerfrei war.

Hiernach wurden die beiden erfindungsgemäßen Aufzeichnungselemente 23 und 24 durch Überwischen mit einer Entwicklerflüssigkeit aus 0,5 Gew.% Natriumcarbonat, 0,3 Gew.% Wasserglas, 25 Gew.% n-Propanol und 74,2 Gew.% Wasser entwickelt, wodurch in den Nichtbildbereichen die Oberfläche der Träger (A) freigelegt wurde. In dieser Weise wurde die für Offsetdruckplatten typische Differenzierung in hydrophile und oleophile Bereiche erzielt, wobei die freigelegten Oberflächenpartien der Träger (A) die hydrophilen Bereiche bildeten.

Hiernach wurden die beiden Offsetdruckplatten 23 und 24 mit Waser nachgespült, und es wurde die Hydrophilie der freigelegten Trägeroberfläche durch Überwischen mit verdünnter Phosphorsäure weiter erhöht.

Nach dem Einfärben mit einer Offsetdruckfarbe vom Typ "Öl in Wasser" wurde mit den beiden Offsetdruckplatten 23 und 24 in einem Offsetdruckwerk gedruckt.

Hierbei lieferten die beiden Offsetdruckplatten 23 und 24 in hoher Auflage exzellente, völlig vorlagengetreue Druckerzeugnisse, die höchsten Qualitätsansprüchen genügten.

Beispiel 25

Die Herstellung des erfindungsgemäß zu verwendenden Isoindoleninfarbstoffs Xa-3; Versuchsvorschrift: 5 g des Isoindoleninderivates

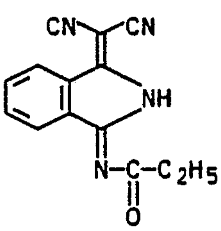

und 4,13 g des Pyrazolinderivates

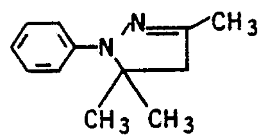

wurden zusammen mit 2 Tropfen konzentrierter Schwefelsäure in 20 ml Toluol während 2 Stunden unter Rühren am Rückfluß erhitzt. Hiernach wurde die resultierende Reaktionsmischung abgekühlt, wobei sich das Roh produkt Xa-3 als Feststoff abschied. Das Rohprodukt wurde abgetrennt und zunächst mit Methanol und anschließend mit heißem Wasser gewaschen. Hierdurch resultierte der reine Isoindoleninfarbstoff Xa-3

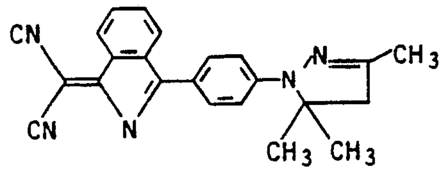

Xa-3

in einer Ausbeute von 40 %, bezogen auf das Isoindoleninderivat. Die elementare Zusammensetzung von Xa-3 entsprach den theoretisch berechneten Werten. Das Absorptionsspektrum von Xa-3 wies im Spektralbereich von $\lambda$ = 270 bis $\lambda$ = 750 nm drei Maxima bei 297, 316 und und 610,5 nm auf.

## Ansprüche

1. Panchromatisches elektrophotographisches Aufzeichnungselement mit
(A) einem elektrisch leitenden Träger und mit
(B) mindestens einer photoleitenden Schicht, welche
($b_1$) mindestens ein Bindemittel,
($b_2$) mehrere Ladungsträger erzeugende Verbindungen oder Sensibilisatoren aus der Gruppe der Triarylmethan-, Xanthen- und Cyaninfarbstoffe,
($b_3$) mindestens eine Ladungsträger transportierende Verbindung (Photoleiter) und gegebenenfalls
($b_4$) Zusatzstoffe enthält,
dadurch gekennzeichnet, daß man hierin als Ladungsträger erzeugende Verbindungen oder Sensibilisatoren ($b_2$) Viktoriablau FB (C.I. 44045), Kristallviolett FN (C.I. 42555), Rhodamin FB (C.I. 45170), Astrazonorange R (C.I. 48040) und/oder Astrazonorange G (C.I. 48035) gemeinsam mit Naphtholactamfarbstoffen, welche mindestens ein Chromophor der allgemeinen Grundstruktur

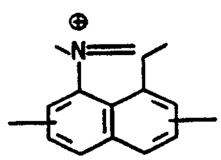

enthalten, und/oder mit Isoindoleninfarbstoffen, welche mindestens ein Chromophor der allgemeinen Grundstruktur

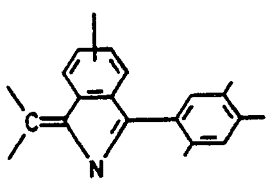

enthalten, verwendet.

2. Das panchromatische elektrophotographische Aufzeichnungselement nach Anspruch 1, dadurch

gekennzeichnet, daß die photoleitende Schicht (B) eine Mehrfachschicht ist, welche mindestens eine Sensibilisatorschicht ($b_2$) und eine Schicht aus Bindemitteln ($b_1$), Photoleitern ($b_3$) und ggf. Zusatzstoffen ($b_4$) enthält.

3. Das panchromatische elektrophotographische Aufzeichnungselement nach Anspruch 2, dadurch gekennzeichnet, daß die photoleitende Schicht ($B_8$) eine Mehrfachschicht ist, welche eine Sensibilisatorschicht ($b_2$) aus Naphtholactamfarbstoffen und/oder Isoindoleninfarbstoffen und eine Sensibilisatorschicht ($b_2$) aus Viktoriablau FB (C.I. 44045), Kristallviolett FN (C.I. 42555), Rhodamin FB (C.I. 45170), Astrazonorange R (C.I. 48040) und/oder Astrazonorange G (C.I. 48035) enthält.

4. Das panchromatische elektrophotographische Aufzeichnungselement nach einem der Ansprüche 1 bis 3, dadurch gekennzeichnet, daß sich hierin zwischen dem elektrisch leitenden Träger (A) und der photoleitenden Schicht (B) eine weitere Sensibilisatorschicht aus einem an sich bekannten Pigment befindet.

5. Das panchromatische elektrophotographische Aufzeichnungselement nach einem der Ansprüche 1 bis 4, dadurch gekennzeichnet, daß sich hierin auf dem Träger (A) eine weitere photoleitende Schicht aus einem an sich bekannten Photoleiter ($b_3$) befindet.

6. Das panchromatische elektrophotographische Aufzeichnungselement gemäß einem der Ansprüche 1 bis 5 zur Herstellung von Druckplatten, dadurch gekennzeichnet, daß es einen für Druckplatten geeigneten elektrisch leitenden Träger (A) einer Dicke von 80 $\mu$m bis 0,6 mm und mindestens eine photoleitende Schicht (B) enthält.

7. Das panchromatische elektrophotographische Aufzeichnungselement nach Anspruch 6, dadurch gekennzeichnet, daß die Bindemittel ($b_1$) der photoleitenden Schicht(en) (B) in wäßrig-alkalischen oder wäßrig-alkoholischen Entwicklerlösungsmitteln löslich oder quellbar sind.

8. Das panchromatische elektrophotographische Aufzeichnungselement nach Anspruch 6 oder 7, dadurch gekennzeichnet, daß das Bindemittel ($b_1$) ein Copolymerisat aus Styrol, Maleinsäureanhydrid und Acrylsäure und/oder Methacrylsäure ist, welches bezogen auf seine Gesamtmenge,
5 bis 50 Gew.% Maleinsäureanhydrid und
5 bis 35 Gew.% Acrylsäure und/oder Methacrylsäure
einpolymerisiert enthält.

9. Verfahren zur Herstellung einer Offsetdruckplatte durch
(i) bildmäßiges Belichten eines elektrisch negativ oder elektrisch positiv aufgeladenen elektrophotographischen Aufzeichnungselements, welches einen elektrisch leitenden Täger (A) und mindestens eine photoleitende Schicht (B) aufweist, mit aktinischem Licht, wodurch ein latentes elektrostatisches Ladungsbild erzeugt wird,
(ii) Entwickeln des latenten elektrostatischen Ladungsbildes mittels eines Toners, wodurch ein betonertes Bild resultiert,
(iii) Fixieren des betonerten Bildes durch Erhitzen und
(iv) Wegwaschen (Entschichten) der unbetonerten Nichtbildbereiche des elektrophotographischen Aufzeichnungselements mit einem Entwicklerlösungsmittel, wodurch die hydrophile Oberfläche des elektrisch leitenden Trägers (A) freigelegt wird,
dadurch gekennzeichnet, daß man hierzu das panchromatische elektrophotographische Aufzeichnungselement gemäß einem der Ansprüche 6 bis 8 verwendet und daß man hierbei das Entwickeln (ii) mit einem Toner durchführt, welcher optisch mit der Oberfläche des elektrophotographischen Aufzeichnungselements kontrastriert.

10. Das Verfahren zur Herstellung einer Offsetdruckplatte nach Anspruch 9, dadurch gekennzeichnet, daß man hierbei einen hellen flüssigen Toner verwendet.

11. Verfahren zur Herstellung eines Photoresistmusters durch
(i) bildmäßiges Belichten eines elektrisch negativ oder elektrisch positiv aufgeladenen elektrophotographischen Aufzeichnungselements, welches einen elektrisch leitenden Täger (A) und mindestens eine photoleitende Schicht (B) aufweist, mit aktinischem Licht, wodurch ein latentes elektrostatisches Ladungsbild erzeugt wird,
(ii) Entwickeln des latenten elektrostatischen Ladungsbildes mittels eines Toners, wodurch ein betonertes Bild resultiert,
(iii) Fixieren des betonerten Bildes durch Erhitzen und
(iv) Wegwaschen (Entschichten) der unbetonerten Nichtbildbereiche des elektrophotographischen Aufzeichnungselements mit einem Entwicklerlösungsmittel, wodurch die zu ätzende Oberfläche des elektrisch leitenden Trägers (A) freigelegt wird,
dadurch gekennzeichnet, daß man hierzu das panchromatische elektrophotographische Aufzeichnungselement gemäß einem der Ansprüche 1 bis 8 verwendet und daß man hierbei das Entwickeln (ii) mit einem

ätzmittelresistenten Toner durchführt, welcher optisch mit der Oberfläche des elektrophotographischen Aufzeichnungselements kontrastiert.

12. Das Verfahren zur Herstellung eines Photoresistmusters nach Anspruch 11, dadurch gekennzeichnet, daß man hierzu einen ätzmittelresistenten hellen flüssigen Toner verwendet.

13. Reprographisches Verfahren zur Herstellung von Photokopien durch
(i) bildmäßiges Belichten eines elektrisch negativ oder elektrisch positiv aufgeladenen elektrophotographischen Aufzeichnungselements, welches einen elektrisch leitenden Täger (A) und mindestens eine photoleitende Schicht (B) aufweist, mit aktinischem Licht, wodurch ein latentes elektrostatisches Ladungsbild erzeugt wird,
(ii) Entwickeln des latenten elektrostatischen Ladungsbildes mittels eines Toners, wodurch ein betonertes Bild resultiert, und
(iii) Übertragen des Tonerbildes auf eine andere Oberfläche,
dadurch gekennzeichnet, daß man hierzu das panchromatische elektrophotographische Aufzeichnungselement gemäß einem der Ansprüche 1 bis 8 verwendet und daß man hierbei das Entwickeln (ii) mit einem hellen Toner durchführt, wonach man das Tonerbild im Verfahrensschritt (iii) auf eine dunkle Oberfläche überträgt.

Patentansprüche für folgenden Vertragsstaat: ES

1. Die Verwendung von Viktoriablau FB (C.I. 44045), Kristallviolett FN (C.I. 42555), Rhodamin FB (C.I. 45170), Astrazonorange R (C.I. 48040) und/oder Astrazonorange G (C.I. 48035) gemeinsam mit Naphtholactamfarbstoffen, welche mindestens ein Chromophor der allgemeinen Grundstruktur

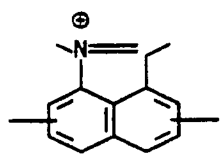

enthalten, und/oder mit Isoindoleninfarbstoffen, welche mindestens ein Chromophor der allgemeinen Grundstruktur

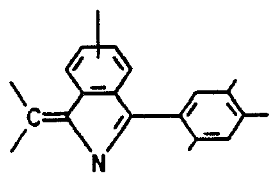

enthalten, als Ladungsträger erzeugende Verbindungen oder Sensibilisatoren ($b_2$) in einem panchromatischen elektrophotographischen Aufzeichnungselement mit
(A) einem elektrisch leitenden Träger und mit
(B) mindestens einer photoleitenden Schicht, welche
($b_1$) mindestens ein Bindemittel,
($b_2$) mehrere Ladungsträger erzeugende Verbindungen oder Sensibilisatoren aus der Gruppe der Triarylmethan-, Xanthen- und Cyaninfarbstoffe,
($b_3$) mindestens eine Ladungsträger transportierende Verbindung (Photoleiter) und gegebenenfalls
($b_4$) Zusatzstoffe enthält.

2. Verfahren zur Herstellung eines panchromatischen elektrophotographischen Aufzeichnungselements mit
(A) einem elektrisch leitenden Träger und mit
(B) mindestens einer photoleitenden Schicht, welche
($b_1$) mindestens ein Bindemittel,
($b_2$) mehrere Ladungsträger erzeugende Verbindungen oder Sensibilisatoren aus der Gruppe der Triarylmethan-, Xanthen- und Cyaninfarbstoffe,
($b_3$) mindestens eine Ladungsträger transportierende Verbindung (Photoleiter) und gegebenenfalls
($b_4$) Zusatzstoffe enthält,

durch Herstellen der photoleitenden Schicht (B) aus ihren Bestandteilen und Auftragen der resultierenden photoleitenden Schicht (B) auf dem Träger (A), dadurch gekennzeichnet, daß man hierbei als Ladungsträger erzeugende Verbindungen oder Sensibilisatoren ($b_2$) Viktoriablau FB (C.I. 44045), Kristallviolett FN (C.I. 42555), Rhodamin FB (C.I. 45170), Astrazonorange R (C.I. 48040) und/oder Astrazonorange G (C.I. 48035) gemeinsam mit Naphtholactamfarbstoffen, welche mindestens ein Chromophor der allgemeinen Grundstruktur

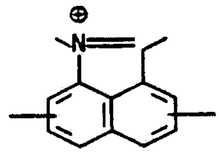

enthalten, und/oder mit Isoindoleninfarbstoffen, welche mindestens ein Chromophor der allgemeinen Grundstruktur

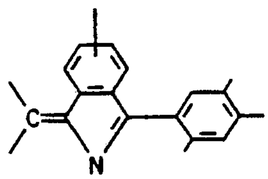

enthalten, verwendet.

3. Verfahren zur Herstellung einer Offsetdruckplatte durch

(i) bildmäßiges Belichten eines elektrisch negativ oder elektrisch positiv aufgeladenen elektrophotographischen Aufzeichnungselements, welches einen elektrisch leitenden Täger (A) und mindestens eine photoleitende Schicht (B) aufweist, mit aktinischem Licht, wodurch ein latentes elektrostatisches Ladungsbild erzeugt wird,

(ii) Entwickeln des latenten elektrostatischen Ladungsbildes mittels eines Toners, wodurch ein betonertes Bild resultiert,

(iii) Fixieren des betonerten Bildes durch Erhitzen und

(iv) Wegwaschen (Entschichten) der unbetonerten Nichtbildbereiche des elektrophotographischen Aufzeichnungselements mit einem Entwicklerlösungsmittel, wodurch die hydrophile Oberfläche des elektrisch leitenden Trägers (A) freigelegt wird,

dadurch gekennzeichnet, daß man hierzu ein panchromatisches elektrophotographisches Aufzeichnungselement mit

(A) einem elektrisch leitenden Träger und mit

(B) mindestens einer photoleitenden Schicht, welche

($b_1$) mindestens ein Bindemittel,

($b_2$) mehrere Ladungsträger erzeugende Verbindungen oder Sensibilisatoren aus der Gruppe der Triarylmethan-, Xanthen- und Cyaninfarbstoffe,

($b_3$) mindestens eine Ladungsträger transportierende Verbindung (Photoleiter) und gegebenenfalls

($b_4$) Zusatzstoffe enthält,

verwendet, welches als Ladungsträger erzeugende Verbindungen oder Sensibilisatoren ($b_2$) Viktoriablau FB (C.I. 44045), Kristallviolett FN (C.I. 42555), Rhodamin FB (C.I. 45170), Astrazonorange R (C.I. 48040) und/oder Astrazonorange G (C.I. 48035) gemeinsam mit Naphtholactam farbstoffen, welche mindestens ein Chromophor der allgemeinen Grundstruktur

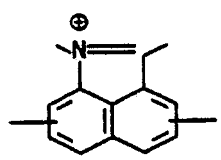

enthalten, und/oder mit Isoindoleninfarbstoffen, welche mindestens ein Chromophor der allgemeinen Grundstruktur

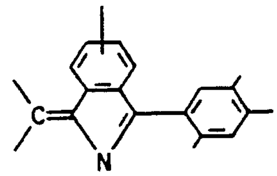

aufweisen, enthält.

4. Verfahren zur Herstellung eines Photoresistmusters durch

(i) bildmäßiges Belichten eines elektrisch negativ oder elektrisch positiv aufgeladenen elektrophotographischen Aufzeichnungselements, welches einen elektrisch leitenden Täger (A) und mindestens eine photoleitende Schicht (B) aufweist, mit aktinischem Licht, wodurch ein latentes elektrostatisches Ladungsbild erzeugt wird,

(ii) Entwickeln des latenten elektrostatischen Ladungsbildes mittels eines Toners, wodurch ein betonertes Bild resultiert,

(iii) Fixieren des betonerten Bildes durch Erhitzen und

(iv) Wegwaschen (Entschichten) der unbetonerten Nichtbildbereiche des elektrophotographischen Aufzeichnungselements mit einem Entwicklerlösungsmittel, wodurch die zu ätzende Oberfläche des elektrisch leitenden Trägers (A) freigelegt wird,

dadurch gekennzeichnet, daß man hierzu ein panchromatisches elektrophotographisches Aufzeichnungselement mit

(A) einem elektrisch leitenden Träger und mit

(B) mindestens einer photoleitenden Schicht, welche

($b_1$) mindestens ein Bindemittel,

($b_2$) mehrere Ladungsträger erzeugende Verbindungen oder Sensibilisatoren aus der Gruppe der Triarylmethan-, Xanthen- und Cyaninfarbstoffe,

($b_3$) mindestens eine Ladungsträger transportierende Verbindung (Photoleiter) und gegebenenfalls

($b_4$) Zusatzstoffe enthält,

verwendet, welches als Ladungsträger erzeugende Verbindungen oder Sensibilisatoren ($b_2$) Viktoriablau FB (C.I. 44045), Kristallviolett FN (C.I. 42555), Rhodamin FB (C.I. 45170), Astrazonorange R (C.I. 48040) und/oder Astrazonorange G (C.I. 48035) gemeinsam mit Naphtholactamfarbstoffen, welche mindestens ein Chromophor der allgemeinen Grundstruktur

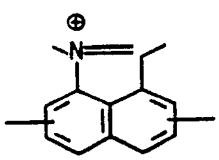

enthalten, und/oder mit Isoindoleninfarbstoffen, welche mindestens ein Chromophor der allgemeinen Grundstruktur

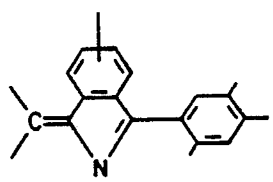

aufweisen, enthält.

5. Reprographisches Verfahren zur Herstellung von Photokopien durch

(i) bildmäßiges Belichten eines elektrisch negativ oder elektrisch positiv aufgeladenen elektrophotographischen Aufzeichnungselements, welches einen elektrisch leitenden Täger (A) und mindestens eine photoleitende Schicht (B) aufweist, mit aktinischem Licht, wodurch ein latentes elektrostatisches Ladungsbild erzeugt wird,

(ii) Entwickeln des latenten elektrostatischen Ladungsbildes mittels eines Toners, wodurch ein betonertes Bild resultiert, und

(iii) Übertragen des Tonerbildes auf eine andere Oberfläche,
dadurch gekennzeichnet, daß man hierzu ein panchromatisches elektrophotographisches Aufzeichnungselement mit
(A) einem elektrisch leitenden Träger und mit
(B) mindestens einer photoleitenden Schicht, welche
($b_1$) mindestens ein Bindemittel,
($b_2$) mehrere Ladungsträger erzeugende Verbindungen oder Sensibilisatoren aus der Gruppe der Triarylmethan-, Xanthen- und Cyaninfarbstoffe,
($b_3$) mindestens eine Ladungsträger transportierende Verbindung (Photoleiter) und gegebenenfalls
($b_4$) Zusatzstoffe enthält,
verwendet, welches als Ladungsträger erzeugende Verbindungen oder Sensibilisatoren ($b_2$) Viktoriablau FB (C.I. 44045), Kristallviolett FN (C.I. 42555), Rhodamin FB (C.I. 45170), Astrazonorange R (C.I. 48040) und/oder Astrazonorange G (C.I. 48035) gemeinsam mit Naphtholactamfarbstoffen, welche mindestens ein Chromophor der allgemeinen Grundstruktur

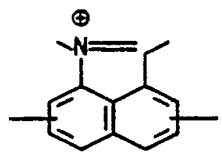

enthalten, und/oder mit Isoindoleninfarbstoffen, welche mindestens ein Chromophor der allgemeinen Grundstruktur

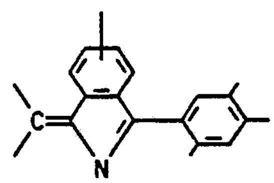

aufweisen, enthält.

6. Verfahren nach Anspruch 3, dadurch gekennzeichnet, daß man das Entwickeln (ii) mit einem Toner durchführt, welcher mit der Oberfläche des elektrophotographischen Aufzeichnungselements kontrastiert.

7. Das Verfahren nach Anspruch 3 oder 6, dadurch gekennzeichnet, daß man hierbei einen hellen flüssigen Toner verwendet.

8. Das Verfahren nach Anspruch 4, dadurch gekennzeichnet, daß man das Entwickeln (ii) mit einem ätzmittelresistenten Toner durchführt, welcher optisch mit der Oberfläche des elektrophotographischen Aufzeichnungselements kontrastiert.

9. Das Verfahren nach Anspruch 4 oder 8, dadurch gekennzeichnet, daß man hierbei einen ätzmittelresistenten hellen flüssigen Toner verwendet.

10. Das Verfahren nach Anspruch 5, dadurch gekennzeichnet, daß man hierbei das Entwickeln (ii) mit einem hellen Toner durchführt, wonach man das Tonerbild im Verfahrensschritt (iii) auf eine dunkle Oberfläche überträgt.

11. Das Verfahren nach einem der Ansprüche 2 bis 10, dadurch gekennzeichnet, daß die photoleitende Schicht (B) eine Mehrfachschicht ist, welche mindestens eine Sensibilisatorschicht ($b_2$) und eine Schicht aus Bindemitteln ($b_1$), Photoleitern ($b_3$) und ggf. zusatzstoffen ($b_4$) enthält.

12. Das Verfahren nach Anspruch 11, dadurch gekennzeichnet, daß die photoleitende Schicht (B) eine Mehrfachschicht ist, welche eine Sensibilisatorschicht ($b_2$) aus Naphtholactamfarbstoffen und/oder Isoindoleninfarbstoffen und eine Sensibilisatorschicht ($b_2$) aus Viktoriablau FB (C.I. 44045), Kristallviolett FN (C.I. 42555), Rhodamin FB (C.I. 45170), Astrazonorange R (C.I. 48040) und/oder Astrazonorange G (C.I. 48035) enthält.

13. Das Verfahren nach einem der Ansprüche 2 bis 12, dadurch gekennzeichnet, daß sich hierbei zwischen dem elektrisch leitenden Träger (A) und der photoleitenden Schicht (B) eine weitere Sensibilisatorschicht aus einem an sich bekannten Pigment befindet.

14. Das Verfahren nach einem der Ansprüche 2 bis 13, dadurch gekennzeichnet, daß sich hierbei auf dem Träger (A) eine weitere photoleitende Schicht aus einem an sich bekannten Photoleiter ($b_3$) befindet.

15. Das Verfahren einem der Ansprüche 2 bis 14, dadurch gekennzeichnet, daß es einen für Druckplatten geeigneten elektrisch leitenden Träger (A) einer Dicke von 80 µm bis 0,6 mm und mindestens eine photoleitende Schicht (B) enthält.

16. Das Verfahren nach Anspruch 15, dadurch gekennzeichnet, daß die Bindemittel ($b_1$) der photoleitenden Schicht(en) (B) in wäßrig-alkalischen oder wäßrig-alkoholischen Entwicklerlösungsmitteln löslich oder quellbar sind.

17. Das Verfahren nach Anspruch 15 oder 16, dadurch gekennzeichnet, daß das Bindemittel ($b_1$) ein Copolymerisat aus Styrol, Maleinsäureanhydrid und Acrylsäure und/oder Methacrylsäure ist, welches bezogen auf seine Gesamtmenge,
5 bis 50 Gew.% Maleinsäureanhydrid und
5 bis 35 Gew.% Acrylsäure und/oder Methacrylsäure
einpolymerisiert enthält.